(19) Europäisches Patentamt
European Patent Office
Office européen des brevets

(11) EP 3 679 793 A1

(12) EUROPEAN PATENT APPLICATION

(43) Date of publication:
**15.07.2020 Bulletin 2020/29**

(21) Application number: **19150737.5**

(22) Date of filing: **08.01.2019**

(51) Int Cl.:
***A01N 37/50*** *(2006.01)* ***A01N 43/40*** *(2006.01)*
***A01N 43/56*** *(2006.01)* ***A01N 43/653*** *(2006.01)*
***A01N 43/88*** *(2006.01)* ***A01P 3/00*** *(2006.01)*
***A01P 21/00*** *(2006.01)* ***A01N 25/00*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bayer AG**
**51373 Leverkusen (DE)**

(72) Inventors:
- **Dr. Görtz, Andreas**
  **41541 Dormagen (DE)**
- **Dr. Göhlich, Frank**
  **40789 Monheim am Rhein (DE)**
- **Bernier, David**
  **69004 Lyon (FR)**
- **Dr. Miller, Ricarda**
  **40233 Düsseldorf (DE)**

(74) Representative: **BIP Patents**
**c/o Bayer Intellectual Property GmbH**
**Alfred-Nobel-Straße 10**
**40789 Monheim am Rhein (DE)**

# (54) ACTIVE COMPOUND COMBINATIONS

(57) The present invention relates to active compound combinations comprising 2-[6-(4-bromophenoxy)-2-(trifluoromethyl)-3-pyridyl]-1-(1,2,4-triazol-1-yl)propan-2-ol, at least one fungicide (B) selected from the group of inhibitors of the respiratory chain at complex I or II and at least one further fungicide (C) selected from the group of specified inhibitors of the respiratory chain at complex III, to compositions comprising such compound combination, and to the use thereof as biologically active agents, especially for control of harmful microorganisms in crop protection and in the protection of industrial materials.

EP 3 679 793 A1

## Description

The present invention relates to active compound combinations comprising as compound (A) 2-[6-(4-bromophenoxy)-2-(trifluoromethyl)-3-pyridyl]-1-(1,2,4-triazol-1-yl)propan-2-ol, as compound (B) at least one fungicide selected from the group of inhibitors of the respiratory chain at complex I or II and as compound (C) at least one fungicide selected from the group of inhibitors of the respiratory chain at complex III. Moreover, the invention relates to fungicide compositions comprising such compound combination and to the use of the compound combinations and the fungicide compositions as biologically active agent, especially for control of phytopathogenic fungi in crop protection and in the protection of industrial materials and as plant growth regulators.

Throughout this application the terms "composition" and "formulation" are used synonymously and refer to mixtures of a compound combination of the invention and at least one agriculturally suitable auxiliary.

2-[6-(4-bromophenoxy)-2-(trifluoromethyl)-3-pyridyl]-1-(1,2,4-triazol-1-yl)propan-2-ol, its preparation and its fungicidal efficacy is known from WO-A 2017/029179. WO-A 2018/145921 discloses active compound combinations comprising certain phenoxy-hetaryl-substituted triazole derivatives, including 2-[6-(4-bromophenoxy)-2-(trifluoromethyl)-3-pyridyl]-1-(1,2,4-triazol-1-yl)propan-2-ol, and at least one further fungicide.

Albeit 2-[6-(4-bromophenoxy)-2-(trifluoromethyl)-3-pyridyl]-1-(1,2,4-triazol-1-yl)propan-2-ol and the known compound combinations comprising this compound provide excellent means in protecting plants from diseases caused by fungi, there is still need to even improve those means in order to address the ever increasing environmental and economic requirements imposed on modern-day crop protection agents and compositions. This includes, for example, improvement to the spectrum of action, safety profile, selectivity, application rate, formation of residues, and favourable preparation ability, and development of new compositions to deal with potential problems, like resistances.

The present invention provides active compound combinations and compositions comprising said combinations which at least in some aspects achieve the stated objective.

Accordingly, the present invention provides active compound combinations comprising

(A) 2-[6-(4-bromophenoxy)-2-(trifluoromethyl)-3-pyridyl]-1-(1,2,4-triazol-1-yl)propan-2-ol,

(B) at least one active compound selected from the group of inhibitors of the respiratory chain at complex I or II, and

(C) at least one active compound selected from the group of inhibitors of the respiratory chain at complex III consisting of (3.001) ametoctradin, (3.002) amisulbrom, (3.003) azoxystrobin, (3.004) coumethoxystrobin, (3.005) coumoxystrobin, (3.006) cyazofamid, (3.007) dimoxystrobin, (3.008) enoxastrobin, (3.009) famoxadone, (3.010) fenamidone, (3.011) flufenoxystrobin, (3.012) fluoxastrobin, (3.013) kresoxim-methyl, (3.014) metominostrobin, (3.015) orysastrobin, (3.016) picoxystrobin, (3.017) pyraclostrobin, (3.018) pyrametostrobin, (3.019) pyraoxystrobin, (3.020) trifloxystrobin, (3.021) (2E)-2-{2-[({[(1E)-1-(3-{[(E)-1-fluoro-2-phenylvinyl]oxy}phenyl)ethylidene]amino}oxy)methyl]phenyl}-2-(methoxyimino)-N-methylacetamide, (3.022) (2E,3Z)-5-{[1-(4-chlorophenyl)-1H-pyrazol-3-yl]oxy}-2-(methoxyimino)-N,3-dimethylpent-3-enamide, (3.023) (2R)-2-{2-[(2,5-dimethylphenoxy)methyl]phenyl}-2-methoxy-N-methylacetamide, (3.024) (2S)-2-{2-[(2,5-dimethylphenoxy)methyl]phenyl}-2-methoxy-N-methylacetamide, (3.025) fenpicoxamid, (3.026) mandestrobin, (3.027) N-(3-ethyl-3,5,5-trimethylcyclohexyl)-3-formamido-2-hydroxybenzamide, (3.028) (2E,3Z)-5-{[1-(4-chloro-2-fluorophenyl)-1H-pyrazol-3-yl]oxy}-2-(methoxyimino)-N,3-dimethylpent-3-enamide, (3.029) methyl {5-[3-(2,4-dimethylphenyl)-1H-pyrazol-l-yl]-2-methylbenzyl}carbamate and (3.030) metyltetraprole.

The active compound combinations according to the invention comprise as compound (A) 2-[6-(4-bromophenoxy)-2-(trifluoromethyl)-3-pyridyl]-1-(1,2,4-triazol-1-yl)propan-2-ol or a salt or N-oxide thereof. The salts or N-oxides of 2-[6-(4-bromophenoxy)-2-(trifluoromethyl)-3-pyridyl]-1-(1,2,4-triazol-1-yl)propan-2-ol also have fungicidal properties. 2-[6-(4-bromophenoxy)-2-(trifluoromethyl)-3-pyridyl]-1-(1,2,4-triazol-1-yl)propan-2-ol is depicted by formula (I)

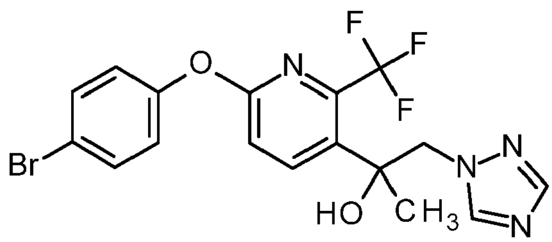

(I)

and is denoted in the following also compound (I) or simply (I).

As apparent from formula (I), compound (I) comprises a stereogenic center at the carbon atom bearing the hydroxy group. Hence, (I) can be present in form of the optical isomers, their racemic or scalemic mixtures (the term "scalemic" denotes a mixture of enantiomers in different proportions), in all proportions. Compound (I) may be used in the active compound combinations according to this invention in any of said forms, i.e. as (2R)-2-[6-(4-bromophenoxy)-2-(trifluoromethyl)-3-pyridyl]-1-(1,2,4-triazol-1-yl)propan-2-ol, (2S)-2-[6-(4-bromophenoxy)-2-(trifluoromethyl)-3-pyridyl]-1-(1,2,4-triazol-1-yl)propan-2-ol, the racemate of (2R)-2-[6-(4-bromophenoxy)-2-(trifluoromethyl)-3-pyridyl]-1-(1,2,4-triazol-1-yl)propan-2-ol and (2S)-2-[6-(4-bromophenoxy)-2-(trifluoromethyl)-3-pyridyl]-1-(1,2,4-triazol-1-yl)propan-2-ol, and any scalemic mixture of (2R)-2-[6-(4-bromophenoxy)-2-(trifluoromethyl)-3-pyridyl]-1-(1,2,4-triazol-1-yl)propan-2-ol and (2S)-2-[6-(4-bromophenoxy)-2-(trifluoromethyl)-3-pyridyl]-1-(1,2,4-triazol-1-yl)propan-2-ol.

The active compound combinations according to the invention further comprise as compound (B) at least one fungicidally active compound selected from inhibitors of the respiratory chain at complex I or II. The at least one further active compound (B) is different from compounds (A) and (C).

Compound (B) is preferably selected from:

inhibitors of the respiratory chain at complex I or II selected from the group consisting of (2.001) benzovindiflupyr, (2.002) bixafen, (2.003) boscalid, (2.004) carboxin, (2.005) fluopyram, (2.006) flutolanil, (2.007) fluxapyroxad, (2.008) furametpyr, (2.009) isofetamid, (2.010) isopyrazam (anti-epimeric enantiomer 1R,4S,9S), (2.011) isopyrazam (anti-epimeric enantiomer 1S,4R,9R), (2.012) isopyrazam (anti-epimeric racemate 1RS,4SR,9SR), (2.013) isopyrazam (mixture of syn-epimeric racemate 1RS,4SR,9RS and anti-epimeric racemate 1RS,4SR,9SR), (2.014) isopyrazam (syn-epimeric enantiomer 1R,4S,9R), (2.015) isopyrazam (syn-epimeric enantiomer 1S,4R,9S), (2.016) isopyrazam (syn-epimeric racemate 1RS,4SR,9RS), (2.017) penflufen, (2.018) penthiopyrad, (2.019) pydiflumetofen, (2.020) Pyraziflumid, (2.021) sedaxane, (2.022) 1,3-dimethyl-N-(1,1,3-trimethyl-2,3-dihydro-1H-inden-4-yl)-1H-pyrazole-4-carboxamide, (2.023) 1,3-dimethyl-N-[(3R)-1,1,3-trimethyl-2,3-dihydro-1H-inden-4-yl]-1H-pyrazole-4-carboxamide, (2.024) 1,3-dimethyl-N-[(3S)-1,1,3-trimethyl-2,3-dihydro-1H-inden-4-yl]-1H-pyrazole-4-carboxamide, (2.025) 1-methyl-3-(trifluoromethyl)-N-[2'-(trifluoromethyl)biphenyl-2-yl]-1H-pyrazole-4-carboxamide, (2.026) 2-fluoro-6-(trifluoromethyl)-N-(1,1,3-trimethyl-2,3-dihydro-1H-inden-4-yl)benzamide, (2.027) 3-(difluoromethyl)-1-methyl-N-(1,1,3-trimethyl-2,3-dihydro-1H-inden-4-yl)-1H-pyrazole-4-carboxamide (common name: inpyrfluxam), (2.028) 3-(difluoromethyl)-1-methyl-N-[(3R)-1,1,3-trimethyl-2,3-dihydro-1H-inden-4-yl]-1H-pyrazole-4-carboxamide, (2.029) 3-(difluoromethyl)-1-methyl-N-[(3S)-1,1,3-trimethyl-2,3-dihydro-1H-inden-4-yl]-1H-pyrazole-4-carboxamide, (2.030) 3-(difluoromethyl)-N-(7-fluoro-1,1,3-trimethyl-2,3-dihydro-1H-inden-4-yl)-1-methyl-1H-pyrazole-4-carboxamide (common name: fluindapyr), (2.031) 3-(difluoromethyl)-N-[(3R)-7-fluoro-1,1,3-trimethyl-2,3-dihydro-1H-inden-4-yl]-1-methyl-1H-pyrazole-4-carboxamide, (2.032) 3-(difluoromethyl)-N-[(3S)-7-fluoro-1,1,3-trimethyl-2,3-dihydro-1H -inden-4-yl]-1-methyl-1H-pyrazole-4-carboxamide, (2.033) 5,8-difluoro-N-[2-(2-fluoro-4-{[4-(trifluoromethyl)pyridin-2-yl]oxy}phenyl)ethyl]quinazolin-4-amine, (2.034) N-(2-cyclopentyl-5-fluorobenzyl)-N-cyclopropyl-3-(difluoromethyl)-5-fluoro-1-methyl-1H-pyrazole-4-carboxamide, (2.035) N-(2-tert-butyl-5-methylbenzyl)-N-cyclopropyl-3-(difluoromethyl)-5-fluoro-1-methyl-1H-pyrazole-4-carboxamide, (2.036) N-(2-tert-butylbenzyl)-N-cyclopropyl-3-(difluoromethyl)-5-fluoro-1-methyl-1H-pyrazole-4-carboxamide, (2.037) N-(5-chloro-2-ethylbenzyl)-N-cyclopropyl-3-(difluoromethyl)-5-fluoro-1-methyl-1H-pyrazole-4-carboxamide, (2.038) isoflucypram, (2.039) N-[(1R,4S)-9-(dichloromethylene)-1,2,3,4-tetrahydro-1,4-methanonaphthalen-5-yl]-3-(difluoromethyl)-1-methyl-1H-pyrazole-4-carboxamide, (2.040) N-[(1S,4R)-9-(dichloromethylene)-1,2,3,4-tetrahydro-1,4-methanonaphthalen-5-yl]-3-(difluoromethyl)-1-methyl-1H-pyrazole-4-carboxamide, (2.041) N-[1-(2,4-dichlorophenyl)-1-methoxypropan-2-yl]-3-(difluoromethyl)-1-methyl-1H-pyrazole-4-carboxamide, (2.042) N-[2-chloro-6-(trifluoromethyl)benzyl]-N-cyclopropyl-3-(difluoromethyl)-5-fluoro-1-methyl-1H-pyrazole-4-carboxamide, (2.043) N-[3-chloro-2-fluoro-6-(trifluoromethyl)benzyl]-N-cyclopropyl-3-(difluoromethyl)-5-fluoro-1-methyl-1H-pyrazole-4-carboxamide, (2.044) N-[5-chloro-2-(trifluoromethyl)benzyl]-N-cyclopropyl-3-(difluoromethyl)-5-fluoro-1-methyl-1H-pyrazole-4-carboxamide, (2.045) N-cyclopropyl-3-(difluoromethyl)-5-fluoro-1-methyl-N-[5-methyl-2-(trifluoromethyl)benzyl]-1H-pyrazole-4-carboxamide, (2.046) N-cyclopropyl-3-(difluoromethyl)-5-fluoro-N-(2-fluoro-6-isopropylbenzyl)-1-methyl-1H-pyrazole-4-carboxamide, (2.047) N-cyclopropyl-3-(difluoromethyl)-5-fluoro-N-(2-isopropyl-5-methylbenzyl)-1-methyl-1H-pyrazole-4-carboxamide, (2.048) N-cyclopropyl-3-(difluoromethyl)-5-fluoro-N-(2-isopropylbenzyl)-1-methyl-1H-pyrazole-4-carbothioamide, (2.049) N-cyclopropyl-3-(difluoromethyl)-5-fluoro-N-(2-isopropylbenzyl)-1-methyl-1H-pyrazole-4-carboxamide, (2.050) N-cyclopropyl-3-(difluoromethyl)-5-fluoro-N-(5-fluoro-2-isopropylbenzyl)-1-methyl-1H-pyrazole-4-carboxamide, (2.051) N-cyclopropyl-3-(difluoromethyl)-N-(2-ethyl-4,5-dimethylbenzyl)-5-fluoro-1-methyl-1H-pyrazole-4-carboxamide, (2.052) N-cyclopropyl-3-(difluoromethyl)-N-(2-ethyl-5-fluorobenzyl)-5-fluoro-1-methyl-1H-pyrazole-4-carboxamide, (2.053) N-cyclopropyl-3-(difluoromethyl)-N-(2-ethyl-5-methylbenzyl)-5-fluoro-1-methyl-1H-pyrazole-4-carboxamide, (2.054) N-cyclopropyl-N-(2-cyclopropyl-5-fluorobenzyl)-3-(difluoromethyl)-5-fluoro-1-methyl-1H-pyrazole-4-carboxamide, (2.055) N-cyclopropyl-N-(2-cyclopropyl-5-methylbenzyl)-3-(difluoromethyl)-5-fluoro-1-methyl-1H-pyrazole-4-carboxamide, (2.056) N-cyclopropyl-N-(2-cyclopropylbenzyl)-3-(difluoromethyl)-5-fluoro-1-methyl-1H-pyrazole-4-carboxamide and (2.057) pyrapropoyne.

Compound (B) is more preferred selected from:

(2.001) benzovindiflupyr, (2.002) bixafen, (2.003) boscalid, (2.005) fluopyram, (2.007) fluxapyroxad, (2.009) Isofetamid, (2.010) isopyrazam (anti-epimeric enantiomer 1R,4S,9S), (2.011) isopyrazam (anti-epimeric enantiomer 1S,4R,9R), (2.012) isopyrazam (anti-epimeric racemate 1RS,4SR,9SR), (2.013) isopyrazam (mixture of syn-epimeric racemate 1RS,4SR,9RS and anti-epimeric racemate 1RS,4SR,9SR), (2.014) isopyrazam (syn-epimeric enantiomer 1R,4S,9R), (2.015) isopyrazam (syn-epimeric enantiomer 1S,4R,9S), (2.016) isopyrazam (syn-epimeric racemate 1RS,4SR,9RS), (2.017) penflufen, (2.018) penthiopyrad, (2.019) pydiflumetofen, (2.021) sedaxane, (2.027) inpyrfluxam, (2.030) fluindapyr and (2.038) isoflucypram.

Compound (B) is even more preferred selected from:
(2.001) benzovindiflupyr, (2.002) bixafen, (2.005) fluopyram, (2.007) fluxapyroxad, (2.017) penflufen, (2.018) penthiopyrad, (2.019) pydiflumetofen, (2.021) sedaxane, (2.027) inpyrfluxam, (2.030) fluindapyr and (2.038) isoflucypram.

Compound (B) is most preferred selected from:
(2.002) bixafen, (2.005) fluopyram, (2.017) penflufen, (2.019) pydiflumetofen, (2.027) inpyrfluxam and (2.038) isoflucypram.

The compound combinations according to the invention may comprise 1, 2 or even more compounds (B). Preferably, the compound combinations according to the invention comprise 1 or 2 compounds (B), more preferred just 1 compound (B).

The active compound combinations according to the invention further comprise as compound (C) at least one fungicidally active compound selected from inhibitors of the respiratory chain at complex III. The at least one further active compound (C) is different from compounds (A) and (B).

Compound (C) is selected from:
inhibitors of the respiratory chain at complex III selected from the group consisting of (3.001) ametoctradin, (3.002) amisulbrom, (3.003) azoxystrobin, (3.004) coumethoxystrobin, (3.005) coumoxystrobin, (3.006) cyazofamid, (3.007) dimoxystrobin, (3.008) enoxastrobin, (3.009) famoxadone, (3.010) fenamidone, (3.011) flufenoxystrobin, (3.012) fluoxastrobin, (3.013) kresoxim-methyl, (3.014) metominostrobin, (3.015) orysastrobin, (3.016) picoxystrobin, (3.017) pyraclostrobin, (3.018) pyrametostrobin, (3.019) pyraoxystrobin, (3.020) trifloxystrobin, (3.021) (2E)-2-{2-[({[(1E)-1-(3-{[(E)-1-fluoro-2-phenylvinyl]oxy}phenyl)ethylidene]amino}oxy)methyl]phenyl}-2-(methoxyimino)-N-methylacetamide, (3.022) (2E,3Z)-5-{[1-(4-chlorophenyl)-1H-pyrazol-3-yl]oxy}-2-(methoxyimino)-N,3-dimethylpent-3-enamide, (3.023) (2R)-2-{2-[(2,5-dimethylphenoxy)methyl]phenyl}-2-methoxy-N-methylacetamide, (3.024) (2S)-2-{2-[(2,5-dimethylphenoxy)methyl]phenyl}-2-methoxy-N-methylacetamide, (3.025) (3S,6S,7R,8R)-8-benzyl-3-[({3-[(isobutyryloxy)methoxy]-4-methoxypyridin-2-yl}carbonyl)amino]-6-methyl-4,9-dioxo-1,5-dioxonan-7-yl2-methylpropanoate (common name: fenpicoxamid), (3.026) mandestrobin, (3.027) N-(3-ethyl-3,5,5-trimethylcyclohexyl)-3-formamido-2-hydroxybenzamide, (3.028) (2E,3Z)-5-{[1-(4-chloro-2-fluorophenyl)-1H-pyrazol-3-yl]oxy}-2-(methoxyimino)-N,3-dimethylpent-3-enamide, (3.029) methyl {5-[3-(2,4-dimethylphenyl)-1H-pyrazol-1-yl]-2-methylbenzyl}carbamate and (3.030) metyltetraprole.

Compound (C) is preferably selected from:
(3.003) azoxystrobin, (3.007) dimoxystrobin, (3.012) fluoxastrobin, (3.013) kresoxim-methyl, (3.016) picoxystrobin, (3.017) pyraclostrobin, (3.020) trifloxystrobin, (3.025) fenpicoxamid and (3.026) 2-{2-[(2,5-dimethylphenoxy)methyl]phenyl}-2-methoxy-N-methylacetamide.

Compound (C) is more preferred selected from:
(3.003) azoxystrobin, (3.012) fluoxastrobin, (3.016) picoxystrobin, (3.017) pyraclostrobin, (3.020) trifloxystrobin, (3.025) fenpicoxamid and (3.026) 2-{2-[(2,5-dimethylphenoxy)methyl]phenyl}-2-methoxy-N-methylacetamide.

Compound (C) is most preferred selected from:
(3.012) fluoxastrobin, (3.020) trifloxystrobin and (3.025) fenpicoxamid.

The compound combinations according to the invention may comprise 1, 2 or even more compounds (C). Preferably, the compound combinations according to the invention comprise 1 or 2 compounds (C), more preferred just 1 compound (C).

Preferred compound combinations are selected from the group (T1) consisting of the following mixtures:
(I) + (2.001) + (3.001), (I) + (2.001) + (3.002), (I) + (2.001) + (3.003), (I) + (2.001) + (3.004), (I) + (2.001) + (3.005), (I) + (2.001) + (3.006), (I) + (2.001) + (3.007), (I) + (2.001) + (3.008), (I) + (2.001) + (3.009), (I) + (2.001) + (3.010), (I) + (2.001) + (3.011), (I) + (2.001) + (3.012), (I) + (2.001) + (3.013), (I) + (2.001) + (3.014), (I) + (2.001) + (3.015), (I) + (2.001) + (3.016), (I) + (2.001) + (3.017), (I) + (2.001) + (3.018), (I) + (2.001) + (3.019), (I) + (2.001) + (3.020), (I) + (2.001) + (3.021), (I) + (2.001) + (3.022), (I) + (2.001) + (3.023), (I) + (2.001) + (3.024), (I) + (2.001) + (3.025), (I) + (2.001) + (3.026), (I) + (2.001) + (3.027), (I) + (2.001) + (3.028), (I) + (2.001) + (3.029), (I) + (2.001) + (3.030).

Preferred compound combinations are also selected from the group (T2) consisting of the following mixtures:
(I) + (2.002) + (3.001), (I) + (2.002) + (3.002), (I) + (2.002) + (3.003), (I) + (2.002) + (3.004), (I) + (2.002) + (3.005), (I) + (2.002) + (3.006), (I) + (2.002) + (3.007), (I) + (2.002) + (3.008), (I) + (2.002) + (3.009), (I) + (2.002) + (3.010), (I) + (2.002) + (3.011), (I) + (2.002) + (3.012), (I) + (2.002) + (3.013), (I) + (2.002) + (3.014), (I) + (2.002) + (3.015), (I) + (2.002) + (3.016), (I) + (2.002) + (3.017), (I) + (2.002) + (3.018), (I) + (2.002) + (3.019), (I) + (2.002) + (3.020), (I) + (2.002) + (3.021), (I) + (2.002) + (3.022), (I) + (2.002) + (3.023), (I) + (2.002) + (3.024), (I) + (2.002) + (3.025), (I) + (2.002) +

(3.026), (I) + (2.002) + (3.027), (I) + (2.002) + (3.028), (I) + (2.002) + (3.029), (I) + (2.002) + (3.030).

Preferred compound combinations are also selected from the group (T3) consisting of the following mixtures: (I) + (2.003) + (3.001), (I) + (2.003) + (3.002), (I) + (2.003) + (3.003), (I) + (2.003) + (3.004), (I) + (2.003) + (3.005), (I) + (2.003) + (3.006), (I) + (2.003) + (3.007), (I) + (2.003) + (3.008), (I) + (2.003) + (3.009), (I) + (2.003) + (3.010), (I) + (2.003) + (3.011), (I) + (2.003) + (3.012), (I) + (2.003) + (3.013), (I) + (2.003) + (3.014), (I) + (2.003) + (3.015), (I) + (2.003) + (3.016), (I) + (2.003) + (3.017), (I) + (2.003) + (3.018), (I) + (2.003) + (3.019), (I) + (2.003) + (3.020), (I) + (2.003) + (3.021), (I) + (2.003) + (3.022), (I) + (2.003) + (3.023), (I) + (2.003) + (3.024), (I) + (2.003) + (3.025), (I) + (2.003) + (3.026), (I) + (2.003) + (3.027), (I) + (2.003) + (3.028), (I) + (2.003) + (3.029), (I) + (2.003) + (3.030).

Preferred compound combinations are also selected from the group (T4) consisting of the following mixtures: (I) + (2.004) + (3.001), (I) + (2.004) + (3.002), (I) + (2.004) + (3.003), (I) + (2.004) + (3.004), (I) + (2.004) + (3.005), (I) + (2.004) + (3.006), (I) + (2.004) + (3.007), (I) + (2.004) + (3.008), (I) + (2.004) + (3.009), (I) + (2.004) + (3.010), (I) + (2.004) + (3.011), (I) + (2.004) + (3.012), (I) + (2.004) + (3.013), (I) + (2.004) + (3.014), (I) + (2.004) + (3.015), (I) + (2.004) + (3.016), (I) + (2.004) + (3.017), (I) + (2.004) + (3.018), (I) + (2.004) + (3.019), (I) + (2.004) + (3.020), (I) + (2.004) + (3.021), (I) + (2.004) + (3.022), (I) + (2.004) + (3.023), (I) + (2.004) + (3.024), (I) + (2.004) + (3.025), (I) + (2.004) + (3.026), (I) + (2.004) + (3.027), (I) + (2.004) + (3.028), (I) + (2.004) + (3.029), (I) + (2.004) + (3.030).

Preferred compound combinations are also selected from the group (T5) consisting of the following mixtures: (I) + (2.005) + (3.001), (I) + (2.005) + (3.002), (I) + (2.005) + (3.003), (I) + (2.005) + (3.004), (I) + (2.005) + (3.005), (I) + (2.005) + (3.006), (I) + (2.005) + (3.007), (I) + (2.005) + (3.008), (I) + (2.005) + (3.009), (I) + (2.005) + (3.010), (I) + (2.005) + (3.011), (I) + (2.005) + (3.012), (I) + (2.005) + (3.013), (I) + (2.005) + (3.014), (I) + (2.005) + (3.015), (I) + (2.005) + (3.016), (I) + (2.005) + (3.017), (I) + (2.005) + (3.018), (I) + (2.005) + (3.019), (I) + (2.005) + (3.020), (I) + (2.005) + (3.021), (I) + (2.005) + (3.022), (I) + (2.005) + (3.023), (I) + (2.005) + (3.024), (I) + (2.005) + (3.025), (I) + (2.005) + (3.026), (I) + (2.005) + (3.027), (I) + (2.005) + (3.028), (I) + (2.005) + (3.029), (I) + (2.005) + (3.030).

Preferred compound combinations are also selected from the group (T6) consisting of the following mixtures: (I) + (2.006) + (3.001), (I) + (2.006) + (3.002), (I) + (2.006) + (3.003), (I) + (2.006) + (3.004), (I) + (2.006) + (3.005), (I) + (2.006) + (3.006), (I) + (2.006) + (3.007), (I) + (2.006) + (3.008), (I) + (2.006) + (3.009), (I) + (2.006) + (3.010), (I) + (2.006) + (3.011), (I) + (2.006) + (3.012), (I) + (2.006) + (3.013), (I) + (2.006) + (3.014), (I) + (2.006) + (3.015), (I) + (2.006) + (3.016), (I) + (2.006) + (3.017), (I) + (2.006) + (3.018), (I) + (2.006) + (3.019), (I) + (2.006) + (3.020), (I) + (2.006) + (3.021), (I) + (2.006) + (3.022), (I) + (2.006) + (3.023), (I) + (2.006) + (3.024), (I) + (2.006) + (3.025), (I) + (2.006) + (3.026), (I) + (2.006) + (3.027), (I) + (2.006) + (3.028), (I) + (2.006) + (3.029), (I) + (2.006) + (3.030).

Preferred compound combinations are also selected from the group (T7) consisting of the following mixtures: (I) + (2.007) + (3.001), (I) + (2.007) + (3.002), (I) + (2.007) + (3.003), (I) + (2.007) + (3.004), (I) + (2.007) + (3.005), (I) + (2.007) + (3.006), (I) + (2.007) + (3.007), (I) + (2.007) + (3.008), (I) + (2.007) + (3.009), (I) + (2.007) + (3.010), (I) + (2.007) + (3.011), (I) + (2.007) + (3.012), (I) + (2.007) + (3.013), (I) + (2.007) + (3.014), (I) + (2.007) + (3.015), (I) + (2.007) + (3.016), (I) + (2.007) + (3.017), (I) + (2.007) + (3.018), (I) + (2.007) + (3.019), (I) + (2.007) + (3.020), (I) + (2.007) + (3.021), (I) + (2.007) + (3.022), (I) + (2.007) + (3.023), (I) + (2.007) + (3.024), (I) + (2.007) + (3.025), (I) + (2.007) + (3.026), (I) + (2.007) + (3.027), (I) + (2.007) + (3.028), (I) + (2.007) + (3.029), (I) + (2.007) + (3.030).

Preferred compound combinations are also selected from the group (T8) consisting of the following mixtures: (I) + (2.008) + (3.001), (I) + (2.008) + (3.002), (I) + (2.008) + (3.003), (I) + (2.008) + (3.004), (I) + (2.008) + (3.005), (I) + (2.008) + (3.006), (I) + (2.008) + (3.007), (I) + (2.008) + (3.008), (I) + (2.008) + (3.009), (I) + (2.008) + (3.010), (I) + (2.008) + (3.011), (I) + (2.008) + (3.012), (I) + (2.008) + (3.013), (I) + (2.008) + (3.014), (I) + (2.008) + (3.015), (I) + (2.008) + (3.016), (I) + (2.008) + (3.017), (I) + (2.008) + (3.018), (I) + (2.008) + (3.019), (I) + (2.008) + (3.020), (I) + (2.008) + (3.021), (I) + (2.008) + (3.022), (I) + (2.008) + (3.023), (I) + (2.008) + (3.024), (I) + (2.008) + (3.025), (I) + (2.008) + (3.026), (I) + (2.008) + (3.027), (I) + (2.008) + (3.028), (I) + (2.008) + (3.029), (I) + (2.008) + (3.030).

Preferred compound combinations are also selected from the group (T9) consisting of the following mixtures: (I) + (2.009) + (3.001), (I) + (2.009) + (3.002), (I) + (2.009) + (3.003), (I) + (2.009) + (3.004), (I) + (2.009) + (3.005), (I) + (2.009) + (3.006), (I) + (2.009) + (3.007), (I) + (2.009) + (3.008), (I) + (2.009) + (3.009), (I) + (2.009) + (3.010), (I) + (2.009) + (3.011), (I) + (2.009) + (3.012), (I) + (2.009) + (3.013), (I) + (2.009) + (3.014), (I) + (2.009) + (3.015), (I) + (2.009) + (3.016), (I) + (2.009) + (3.017), (I) + (2.009) + (3.018), (I) + (2.009) + (3.019), (I) + (2.009) + (3.020), (I) + (2.009) + (3.021), (I) + (2.009) + (3.022), (I) + (2.009) + (3.023), (I) + (2.009) + (3.024), (I) + (2.009) + (3.025), (I) + (2.009) + (3.026), (I) + (2.009) + (3.027), (I) + (2.009) + (3.028), (I) + (2.009) + (3.029), (I) + (2.009) + (3.030).

Preferred compound combinations are also selected from the group (T10) consisting of the following mixtures: (I) + (2.010) + (3.001), (I) + (2.010) + (3.002), (I) + (2.010) + (3.003), (I) + (2.010) + (3.004), (I) + (2.010) + (3.005), (I) + (2.010) + (3.006), (I) + (2.010) + (3.007), (I) + (2.010) + (3.008), (I) + (2.010) + (3.009), (I) + (2.010) + (3.010), (I) + (2.010) + (3.011), (I) + (2.010) + (3.012), (I) + (2.010) + (3.013), (I) + (2.010) + (3.014), (I) + (2.010) + (3.015), (I) + (2.010) + (3.016), (I) + (2.010) + (3.017), (I) + (2.010) + (3.018), (I) + (2.010) + (3.019), (I) + (2.010) + (3.020), (I) + (2.010) + (3.021), (I) + (2.010) + (3.022), (I) + (2.010) + (3.023), (I) + (2.010) + (3.024), (I) + (2.010) + (3.025), (I) + (2.010) + (3.026), (I) + (2.010) + (3.027), (I) + (2.010) + (3.028), (I) + (2.010) + (3.029), (I) + (2.010) + (3.030).

Preferred compound combinations are also selected from the group (T11) consisting of the following mixtures: (I) + (2.011) + (3.001), (I) + (2.011) + (3.002), (I) + (2.011) + (3.003), (I) + (2.011) + (3.004), (I) + (2.011) + (3.005), (I) + (2.011) + (3.006), (I) + (2.011) + (3.007), (I) + (2.011) + (3.008), (I) + (2.011) + (3.009), (I) + (2.011) + (3.010), (I) + (2.011) + (3.011), (I) + (2.011) + (3.012), (I) + (2.011) + (3.013), (I) + (2.011) + (3.014), (I) + (2.011) + (3.015), (I) + (2.011) + (3.016), (I) + (2.011) + (3.017), (I) + (2.011) + (3.018), (I) + (2.011) + (3.019), (I) + (2.011) + (3.020), (I) + (2.011) + (3.021), (I) + (2.011) + (3.022), (I) + (2.011) + (3.023), (I) + (2.011) + (3.024), (I) + (2.011) + (3.025), (I) + (2.011) + (3.026), (I) + (2.011) + (3.027), (I) + (2.011) + (3.028), (I) + (2.011) + (3.029), (I) + (2.011) + (3.030).

Preferred compound combinations are also selected from the group (T12) consisting of the following mixtures: (I) + (2.012) + (3.001), (I) + (2.012) + (3.002), (I) + (2.012) + (3.003), (I) + (2.012) + (3.004), (I) + (2.012) + (3.005), (I) + (2.012) + (3.006), (I) + (2.012) + (3.007), (I) + (2.012) + (3.008), (I) + (2.012) + (3.009), (I) + (2.012) + (3.010), (I) + (2.012) + (3.011), (I) + (2.012) + (3.012), (I) + (2.012) + (3.013), (I) + (2.012) + (3.014), (I) + (2.012) + (3.015), (I) + (2.012) + (3.016), (I) + (2.012) + (3.017), (I) + (2.012) + (3.018), (I) + (2.012) + (3.019), (I) + (2.012) + (3.020), (I) + (2.012) + (3.021), (I) + (2.012) + (3.022), (I) + (2.012) + (3.023), (I) + (2.012) + (3.024), (I) + (2.012) + (3.025), (I) + (2.012) + (3.026), (I) + (2.012) + (3.027), (I) + (2.012) + (3.028), (I) + (2.012) + (3.029), (I) + (2.012) + (3.030).

Preferred compound combinations are also selected from the group (T13) consisting of the following mixtures: (I) + (2.013) + (3.001), (I) + (2.013) + (3.002), (I) + (2.013) + (3.003), (I) + (2.013) + (3.004), (I) + (2.013) + (3.005), (I) + (2.013) + (3.006), (I) + (2.013) + (3.007), (I) + (2.013) + (3.008), (I) + (2.013) + (3.009), (I) + (2.013) + (3.010), (I) + (2.013) + (3.011), (I) + (2.013) + (3.012), (I) + (2.013) + (3.013), (I) + (2.013) + (3.014), (I) + (2.013) + (3.015), (I) + (2.013) + (3.016), (I) + (2.013) + (3.017), (I) + (2.013) + (3.018), (I) + (2.013) + (3.019), (I) + (2.013) + (3.020), (I) + (2.013) + (3.021), (I) + (2.013) + (3.022), (I) + (2.013) + (3.023), (I) + (2.013) + (3.024), (I) + (2.013) + (3.025), (I) + (2.013) + (3.026), (I) + (2.013) + (3.027), (I) + (2.013) + (3.028), (I) + (2.013) + (3.029), (I) + (2.013) + (3.030).

Preferred compound combinations are also selected from the group (T14) consisting of the following mixtures: (I) + (2.014) + (3.001), (I) + (2.014) + (3.002), (I) + (2.014) + (3.003), (I) + (2.014) + (3.004), (I) + (2.014) + (3.005), (I) + (2.014) + (3.006), (I) + (2.014) + (3.007), (I) + (2.014) + (3.008), (I) + (2.014) + (3.009), (I) + (2.014) + (3.010), (I) + (2.014) + (3.011), (I) + (2.014) + (3.012), (I) + (2.014) + (3.013), (I) + (2.014) + (3.014), (I) + (2.014) + (3.015), (I) + (2.014) + (3.016), (I) + (2.014) + (3.017), (I) + (2.014) + (3.018), (I) + (2.014) + (3.019), (I) + (2.014) + (3.020), (I) + (2.014) + (3.021), (I) + (2.014) + (3.022), (I) + (2.014) + (3.023), (I) + (2.014) + (3.024), (I) + (2.014) + (3.025), (I) + (2.014) + (3.026), (I) + (2.014) + (3.027), (I) + (2.014) + (3.028), (I) + (2.014) + (3.029), (I) + (2.014) + (3.030).

Preferred compound combinations are also selected from the group (T15) consisting of the following mixtures: (I) + (2.015) + (3.001), (I) + (2.015) + (3.002), (I) + (2.015) + (3.003), (I) + (2.015) + (3.004), (I) + (2.015) + (3.005), (I) + (2.015) + (3.006), (I) + (2.015) + (3.007), (I) + (2.015) + (3.008), (I) + (2.015) + (3.009), (I) + (2.015) + (3.010), (I) + (2.015) + (3.011), (I) + (2.015) + (3.012), (I) + (2.015) + (3.013), (I) + (2.015) + (3.014), (I) + (2.015) + (3.015), (I) + (2.015) + (3.016), (I) + (2.015) + (3.017), (I) + (2.015) + (3.018), (I) + (2.015) + (3.019), (I) + (2.015) + (3.020), (I) + (2.015) + (3.021), (I) + (2.015) + (3.022), (I) + (2.015) + (3.023), (I) + (2.015) + (3.024), (I) + (2.015) + (3.025), (I) + (2.015) + (3.026), (I) + (2.015) + (3.027), (I) + (2.015) + (3.028), (I) + (2.015) + (3.029), (I) + (2.015) + (3.030).

Preferred compound combinations are also selected from the group (T16) consisting of the following mixtures: (I) + (2.016) + (3.001), (I) + (2.016) + (3.002), (I) + (2.016) + (3.003), (I) + (2.016) + (3.004), (I) + (2.016) + (3.005), (I) + (2.016) + (3.006), (I) + (2.016) + (3.007), (I) + (2.016) + (3.008), (I) + (2.016) + (3.009), (I) + (2.016) + (3.010), (I) + (2.016) + (3.011), (I) + (2.016) + (3.012), (I) + (2.016) + (3.013), (I) + (2.016) + (3.014), (I) + (2.016) + (3.015), (I) + (2.016) + (3.016), (I) + (2.016) + (3.017), (I) + (2.016) + (3.018), (I) + (2.016) + (3.019), (I) + (2.016) + (3.020), (I) + (2.016) + (3.021), (I) + (2.016) + (3.022), (I) + (2.016) + (3.023), (I) + (2.016) + (3.024), (I) + (2.016) + (3.025), (I) + (2.016) + (3.026), (I) + (2.016) + (3.027), (I) + (2.016) + (3.028), (I) + (2.016) + (3.029), (I) + (2.016) + (3.030).

Preferred compound combinations are also selected from the group (T17) consisting of the following mixtures: (I) + (2.017) + (3.001), (I) + (2.017) + (3.002), (I) + (2.017) + (3.003), (I) + (2.017) + (3.004), (I) + (2.017) + (3.005), (I) + (2.017) + (3.006), (I) + (2.017) + (3.007), (I) + (2.017) + (3.008), (I) + (2.017) + (3.009), (I) + (2.017) + (3.010), (I) + (2.017) + (3.011), (I) + (2.017) + (3.012), (I) + (2.017) + (3.013), (I) + (2.017) + (3.014), (I) + (2.017) + (3.015), (I) + (2.017) + (3.016), (I) + (2.017) + (3.017), (I) + (2.017) + (3.018), (I) + (2.017) + (3.019), (I) + (2.017) + (3.020), (I) + (2.017) + (3.021), (I) + (2.017) + (3.022), (I) + (2.017) + (3.023), (I) + (2.017) + (3.024), (I) + (2.017) + (3.025), (I) + (2.017) + (3.026), (I) + (2.017) + (3.027), (I) + (2.017) + (3.028), (I) + (2.017) + (3.029), (I) + (2.017) + (3.030).

Preferred compound combinations are also selected from the group (T18) consisting of the following mixtures: (I) + (2.018) + (3.001), (I) + (2.018) + (3.002), (I) + (2.018) + (3.003), (I) + (2.018) + (3.004), (I) + (2.018) + (3.005), (I) + (2.018) + (3.006), (I) + (2.018) + (3.007), (I) + (2.018) + (3.008), (I) + (2.018) + (3.009), (I) + (2.018) + (3.010), (I) + (2.018) + (3.011), (I) + (2.018) + (3.012), (I) + (2.018) + (3.013), (I) + (2.018) + (3.014), (I) + (2.018) + (3.015), (I) + (2.018) + (3.016), (I) + (2.018) + (3.017), (I) + (2.018) + (3.018), (I) + (2.018) + (3.019), (I) + (2.018) + (3.020), (I) + (2.018) + (3.021), (I) + (2.018) + (3.022), (I) + (2.018) + (3.023), (I) + (2.018) + (3.024), (I) + (2.018) + (3.025), (I) + (2.018) + (3.026), (I) + (2.018) + (3.027), (I) + (2.018) + (3.028), (I) + (2.018) + (3.029), (I) + (2.018) + (3.030).

Preferred compound combinations are also selected from the group (T19) consisting of the following mixtures:

(I) + (2.019) + (3.001), (I) + (2.019) + (3.002), (I) + (2.019) + (3.003), (I) + (2.019) + (3.004), (I) + (2.019) + (3.005), (I) + (2.019) + (3.006), (I) + (2.019) + (3.007), (I) + (2.019) + (3.008), (I) + (2.019) + (3.009), (I) + (2.019) + (3.010), (I) + (2.019) + (3.011), (I) + (2.019) + (3.012), (I) + (2.019) + (3.013), (I) + (2.019) + (3.014), (I) + (2.019) + (3.015), (I) + (2.019) + (3.016), (I) + (2.019) + (3.017), (I) + (2.019) + (3.018), (I) + (2.019) + (3.019), (I) + (2.019) + (3.020), (I) + (2.019) + (3.021), (I) + (2.019) + (3.022), (I) + (2.019) + (3.023), (I) + (2.019) + (3.024), (I) + (2.019) + (3.025), (I) + (2.019) + (3.026), (I) + (2.019) + (3.027), (I) + (2.019) + (3.028), (I) + (2.019) + (3.029), (I) + (2.019) + (3.030).

Preferred compound combinations are also selected from the group (T20) consisting of the following mixtures: (I) + (2.020) + (3.001), (I) + (2.020) + (3.002), (I) + (2.020) + (3.003), (I) + (2.020) + (3.004), (I) + (2.020) + (3.005), (I) + (2.020) + (3.006), (I) + (2.020) + (3.007), (I) + (2.020) + (3.008), (I) + (2.020) + (3.009), (I) + (2.020) + (3.010), (I) + (2.020) + (3.011), (I) + (2.020) + (3.012), (I) + (2.020) + (3.013), (I) + (2.020) + (3.014), (I) + (2.020) + (3.015), (I) + (2.020) + (3.016), (I) + (2.020) + (3.017), (I) + (2.020) + (3.018), (I) + (2.020) + (3.019), (I) + (2.020) + (3.020), (I) + (2.020) + (3.021), (I) + (2.020) + (3.022), (I) + (2.020)
+ (3.023), (I) + (2.020) + (3.024), (I) + (2.020) + (3.025), (I) + (2.020) + (3.026), (I) + (2.020) + (3.027), (I) + (2.020) + (3.028), (I) + (2.020) + (3.029), (I) + (2.020) + (3.030).

Preferred compound combinations are also selected from the group (T21) consisting of the following mixtures: (I) + (2.021) + (3.001), (I) + (2.021) + (3.002), (I) + (2.021) + (3.003), (I) + (2.021) + (3.004), (I) + (2.021) + (3.005), (I) + (2.021) + (3.006), (I) + (2.021) + (3.007), (I) + (2.021) + (3.008), (I) + (2.021) + (3.009), (I) + (2.021) + (3.010), (I) + (2.021) + (3.011), (I) + (2.021) + (3.012), (I) + (2.021) + (3.013), (I) + (2.021) + (3.014), (I) + (2.021) + (3.015), (I) + (2.021) + (3.016), (I) + (2.021) + (3.017), (I) + (2.021) + (3.018), (I) + (2.021) + (3.019), (I) + (2.021) + (3.020), (I) + (2.021) + (3.021), (I) + (2.021) + (3.022), (I) + (2.021) + (3.023), (I) + (2.021) + (3.024), (I) + (2.021) + (3.025), (I) + (2.021) + (3.026), (I) + (2.021) + (3.027), (I) + (2.021) + (3.028), (I) + (2.021) + (3.029), (I) + (2.021) + (3.030).

Preferred compound combinations are also selected from the group (T22) consisting of the following mixtures: (I) + (2.022) + (3.001), (I) + (2.022) + (3.002), (I) + (2.022) + (3.003), (I) + (2.022) + (3.004), (I) + (2.022) + (3.005), (I) + (2.022) + (3.006), (I) + (2.022) + (3.007), (I) + (2.022) + (3.008), (I) + (2.022) + (3.009), (I) + (2.022) + (3.010), (I) + (2.022) + (3.011), (I) + (2.022) + (3.012), (I) + (2.022) + (3.013), (I) + (2.022) + (3.014), (I) + (2.022) + (3.015), (I) + (2.022) + (3.016), (I) + (2.022) + (3.017), (I) + (2.022) + (3.018), (I) + (2.022) + (3.019), (I) + (2.022) + (3.020), (I) + (2.022) + (3.021), (I) + (2.022) + (3.022), (I) + (2.022) + (3.023), (I) + (2.022) + (3.024), (I) + (2.022) + (3.025), (I) + (2.022) + (3.026), (I) + (2.022) + (3.027), (I) + (2.022) + (3.028), (I) + (2.022) + (3.029), (I) + (2.022) + (3.030).

Preferred compound combinations are also selected from the group (T23) consisting of the following mixtures: (I) + (2.023) + (3.001), (I) + (2.023) + (3.002), (I) + (2.023) + (3.003), (I) + (2.023) + (3.004), (I) + (2.023) + (3.005), (I) + (2.023) + (3.006), (I) + (2.023) + (3.007), (I) + (2.023) + (3.008), (I) + (2.023) + (3.009), (I) + (2.023) + (3.010), (I) + (2.023) + (3.011), (I) + (2.023) + (3.012), (I) + (2.023) + (3.013), (I) + (2.023) + (3.014), (I) + (2.023) + (3.015), (I) + (2.023) + (3.016), (I) + (2.023) + (3.017), (I) + (2.023) + (3.018), (I) + (2.023) + (3.019), (I) + (2.023) + (3.020), (I) + (2.023) + (3.021), (I) + (2.023) + (3.022), (I) + (2.023) + (3.023), (I) + (2.023) + (3.024), (I) + (2.023) + (3.025), (I) + (2.023) + (3.026), (I) + (2.023) + (3.027), (I) + (2.023) + (3.028), (I) + (2.023) + (3.029), (I) + (2.023) + (3.030).

Preferred compound combinations are also selected from the group (T24) consisting of the following mixtures: (I) + (2.024) + (3.001), (I) + (2.024) + (3.002), (I) + (2.024) + (3.003), (I) + (2.024) + (3.004), (I) + (2.024) + (3.005), (I) + (2.024) + (3.006), (I) + (2.024) + (3.007), (I) + (2.024) + (3.008), (I) + (2.024) + (3.009), (I) + (2.024) + (3.010), (I) + (2.024) + (3.011), (I) + (2.024) + (3.012), (I) + (2.024) + (3.013), (I) + (2.024) + (3.014), (I) + (2.024) + (3.015), (I) + (2.024) + (3.016), (I) + (2.024) + (3.017), (I) + (2.024) + (3.018), (I) + (2.024) + (3.019), (I) + (2.024) + (3.020), (I) + (2.024) + (3.021), (I) + (2.024) + (3.022), (I) + (2.024) + (3.023), (I) + (2.024) + (3.024), (I) + (2.024) + (3.025), (I) + (2.024) + (3.026), (I) + (2.024) + (3.027), (I) + (2.024) + (3.028), (I) + (2.024) + (3.029), (I) + (2.024) + (3.030).

Preferred compound combinations are also selected from the group (T25) consisting of the following mixtures: (I) + (2.025) + (3.001), (I) + (2.025) + (3.002), (I) + (2.025) + (3.003), (I) + (2.025) + (3.004), (I) + (2.025) + (3.005), (I) + (2.025) + (3.006), (I) + (2.025) + (3.007), (I) + (2.025) + (3.008), (I) + (2.025) + (3.009), (I) + (2.025) + (3.010), (I) + (2.025) + (3.011), (I) + (2.025) + (3.012), (I) + (2.025) + (3.013), (I) + (2.025) + (3.014), (I) + (2.025) + (3.015), (I) + (2.025) + (3.016), (I) + (2.025) + (3.017), (I) + (2.025) + (3.018), (I) + (2.025) + (3.019), (I) + (2.025) + (3.020), (I) + (2.025) + (3.021), (I) + (2.025) + (3.022), (I) + (2.025) + (3.023), (I) + (2.025) + (3.024), (I) + (2.025) + (3.025), (I) + (2.025) + (3.026), (I) + (2.025) + (3.027), (I) + (2.025) + (3.028), (I) + (2.025) + (3.029), (I) + (2.025) + (3.030).

Preferred compound combinations are also selected from the group (T26) consisting of the following mixtures: (I) + (2.026) + (3.001), (I) + (2.026) + (3.002), (I) + (2.026) + (3.003), (I) + (2.026) + (3.004), (I) + (2.026) + (3.005), (I) + (2.026) + (3.006), (I) + (2.026) + (3.007), (I) + (2.026) + (3.008), (I) + (2.026) + (3.009), (I) + (2.026) + (3.010), (I) + (2.026) + (3.011), (I) + (2.026) + (3.012), (I) + (2.026) + (3.013), (I) + (2.026) + (3.014), (I) + (2.026) + (3.015), (I) + (2.026) + (3.016), (I) + (2.026) + (3.017), (I) + (2.026) + (3.018), (I) + (2.026) + (3.019), (I) + (2.026) + (3.020), (I) + (2.026) + (3.021), (I) + (2.026) + (3.022), (I) + (2.026) + (3.023), (I) + (2.026) + (3.024), (I) + (2.026) + (3.025), (I) + (2.026) + (3.026), (I) + (2.026) + (3.027), (I) + (2.026) + (3.028), (I) + (2.026) + (3.029), (I) + (2.026) + (3.030).

Preferred compound combinations are also selected from the group (T27) consisting of the following mixtures: (I) + (2.027) + (3.001), (I) + (2.027) + (3.002), (I) + (2.027) + (3.003), (I) + (2.027) + (3.004), (I) + (2.027) + (3.005), (I) +

(2.027) + (3.006), (I) + (2.027) + (3.007), (I) + (2.027) + (3.008), (I) + (2.027) + (3.009), (I) + (2.027) + (3.010), (I) + (2.027) + (3.011), (I) + (2.027) + (3.012), (I) + (2.027) + (3.013), (I) + (2.027) + (3.014), (I) + (2.027) + (3.015), (I) + (2.027) + (3.016), (I) + (2.027) + (3.017), (I) + (2.027) + (3.018), (I) + (2.027) + (3.019), (I) + (2.027) + (3.020), (I) + (2.027) + (3.021), (I) + (2.027) + (3.022), (I) + (2.027) + (3.023), (I) + (2.027) + (3.024), (I) + (2.027) + (3.025), (I) + (2.027) + (3.026), (I) + (2.027) + (3.027), (I) + (2.027) + (3.028), (I) + (2.027) + (3.029), (I) + (2.027) + (3.030).

Preferred compound combinations are also selected from the group (T28) consisting of the following mixtures: (I) + (2.028) + (3.001), (I) + (2.028) + (3.002), (I) + (2.028) + (3.003), (I) + (2.028) + (3.004), (I) + (2.028) + (3.005), (I) + (2.028) + (3.006), (I) + (2.028) + (3.007), (I) + (2.028) + (3.008), (I) + (2.028) + (3.009), (I) + (2.028) + (3.010), (I) + (2.028) + (3.011), (I) + (2.028) + (3.012), (I) + (2.028) + (3.013), (I) + (2.028) + (3.014), (I) + (2.028) + (3.015), (I) + (2.028) + (3.016), (I) + (2.028) + (3.017), (I) + (2.028) + (3.018), (I) + (2.028) + (3.019), (I) + (2.028) + (3.020), (I) + (2.028) + (3.021), (I) + (2.028) + (3.022), (I) + (2.028) + (3.023), (I) + (2.028) + (3.024), (I) + (2.028) + (3.025), (I) + (2.028) + (3.026), (I) + (2.028) + (3.027), (I) + (2.028) + (3.028), (I) + (2.028) + (3.029), (I) + (2.028) + (3.030).

Preferred compound combinations are also selected from the group (T29) consisting of the following mixtures: (I) + (2.029) + (3.001), (I) + (2.029) + (3.002), (I) + (2.029) + (3.003), (I) + (2.029) + (3.004), (I) + (2.029) + (3.005), (I) + (2.029) + (3.006), (I) + (2.029) + (3.007), (I) + (2.029) + (3.008), (I) + (2.029) + (3.009), (I) + (2.029) + (3.010), (I) + (2.029) + (3.011), (I) + (2.029) + (3.012), (I) + (2.029) + (3.013), (I) + (2.029) + (3.014), (I) + (2.029) + (3.015), (I) + (2.029) + (3.016), (I) + (2.029) + (3.017), (I) + (2.029) + (3.018), (I) + (2.029) + (3.019), (I) + (2.029) + (3.020), (I) + (2.029) + (3.021), (I) + (2.029) + (3.022), (I) + (2.029) + (3.023), (I) + (2.029) + (3.024), (I) + (2.029) + (3.025), (I) + (2.029) + (3.026), (I) + (2.029) + (3.027), (I) + (2.029) + (3.028), (I) + (2.029) + (3.029), (I) + (2.029) + (3.030).

Preferred compound combinations are also selected from the group (T30) consisting of the following mixtures: (I) + (2.030) + (3.001), (I) + (2.030) + (3.002), (I) + (2.030) + (3.003), (I) + (2.030) + (3.004), (I) + (2.030) + (3.005), (I) + (2.030) + (3.006), (I) + (2.030) + (3.007), (I) + (2.030) + (3.008), (I) + (2.030) + (3.009), (I) + (2.030) + (3.010), (I) + (2.030) + (3.011), (I) + (2.030) + (3.012), (I) + (2.030) + (3.013), (I) + (2.030) + (3.014), (I) + (2.030) + (3.015), (I) + (2.030) + (3.016), (I) + (2.030) + (3.017), (I) + (2.030) + (3.018), (I) + (2.030) + (3.019), (I) + (2.030) + (3.020), (I) + (2.030) + (3.021), (I) + (2.030) + (3.022), (I) + (2.030) + (3.023), (I) + (2.030) + (3.024), (I) + (2.030) + (3.025), (I) + (2.030) + (3.026), (I) + (2.030) + (3.027), (I) + (2.030) + (3.028), (I) + (2.030) + (3.029), (I) + (2.030) + (3.030).

Preferred compound combinations are also selected from the group (T31) consisting of the following mixtures: (I) + (2.031) + (3.001), (I) + (2.031) + (3.002), (I) + (2.031) + (3.003), (I) + (2.031) + (3.004), (I) + (2.031) + (3.005), (I) + (2.031) + (3.006), (I) + (2.031) + (3.007), (I) + (2.031) + (3.008), (I) + (2.031) + (3.009), (I) + (2.031) + (3.010), (I) + (2.031) + (3.011), (I) + (2.031) + (3.012), (I) + (2.031) + (3.013), (I) + (2.031) + (3.014), (I) + (2.031) + (3.015), (I) + (2.031) + (3.016), (I) + (2.031) + (3.017), (I) + (2.031) + (3.018), (I) + (2.031) + (3.019), (I) + (2.031) + (3.020), (I) + (2.031) + (3.021), (I) + (2.031) + (3.022), (I) + (2.031) + (3.023), (I) + (2.031) + (3.024), (I) + (2.031) + (3.025), (I) + (2.031) + (3.026), (I) + (2.031) + (3.027), (I) + (2.031) + (3.028), (I) + (2.031) + (3.029), (I) + (2.031) + (3.030).

Preferred compound combinations are also selected from the group (T32) consisting of the following mixtures: (I) + (2.032) + (3.001), (I) + (2.032) + (3.002), (I) + (2.032) + (3.003), (I) + (2.032) + (3.004), (I) + (2.032) + (3.005), (I) + (2.032) + (3.006), (I) + (2.032) + (3.007), (I) + (2.032) + (3.008), (I) + (2.032) + (3.009), (I) + (2.032) + (3.010), (I) + (2.032) + (3.011), (I) + (2.032) + (3.012), (I) + (2.032) + (3.013), (I) + (2.032) + (3.014), (I) + (2.032) + (3.015), (I) + (2.032) + (3.016), (I) + (2.032) + (3.017), (I) + (2.032) + (3.018), (I) + (2.032) + (3.019), (I) + (2.032) + (3.020), (I) + (2.032) + (3.021), (I) + (2.032) + (3.022), (I) + (2.032) + (3.023), (I) + (2.032) + (3.024), (I) + (2.032) + (3.025), (I) + (2.032) + (3.026), (I) + (2.032) + (3.027), (I) + (2.032) + (3.028), (I) + (2.032) + (3.029), (I) + (2.032) + (3.030).

Preferred compound combinations are also selected from the group (T33) consisting of the following mixtures: (I) + (2.033) + (3.001), (I) + (2.033) + (3.002), (I) + (2.033) + (3.003), (I) + (2.033) + (3.004), (I) + (2.033) + (3.005), (I) + (2.033) + (3.006), (I) + (2.033) + (3.007), (I) + (2.033) + (3.008), (I) + (2.033) + (3.009), (I) + (2.033) + (3.010), (I) + (2.033) + (3.011), (I) + (2.033) + (3.012), (I) + (2.033) + (3.013), (I) + (2.033) + (3.014), (I) + (2.033) + (3.015), (I) + (2.033) + (3.016), (I) + (2.033) + (3.017), (I) + (2.033) + (3.018), (I) + (2.033) + (3.019), (I) + (2.033) + (3.020), (I) + (2.033) + (3.021), (I) + (2.033) + (3.022), (I) + (2.033) + (3.023), (I) + (2.033) + (3.024), (I) + (2.033) + (3.025), (I) + (2.033) + (3.026), (I) + (2.033) + (3.027), (I) + (2.033) + (3.028), (I) + (2.033) + (3.029), (I) + (2.033) + (3.030).

Preferred compound combinations are also selected from the group (T34) consisting of the following mixtures: (I) + (2.034) + (3.001), (I) + (2.034) + (3.002), (I) + (2.034) + (3.003), (I) + (2.034) + (3.004), (I) + (2.034) + (3.005), (I) + (2.034) + (3.006), (I) + (2.034) + (3.007), (I) + (2.034) + (3.008), (I) + (2.034) + (3.009), (I) + (2.034) + (3.010), (I) + (2.034) + (3.011), (I) + (2.034) + (3.012), (I) + (2.034) + (3.013), (I) + (2.034) + (3.014), (I) + (2.034) + (3.015), (I) + (2.034) + (3.016), (I) + (2.034) + (3.017), (I) + (2.034) + (3.018), (I) + (2.034) + (3.019), (I) + (2.034) + (3.020), (I) + (2.034) + (3.021), (I) + (2.034) + (3.022), (I) + (2.034)
+ (3.023), (I) + (2.034) + (3.024), (I) + (2.034) + (3.025), (I) + (2.034) + (3.026), (I) + (2.034) + (3.027), (I) + (2.034) + (3.028), (I) + (2.034) + (3.029), (I) + (2.034) + (3.030).

Preferred compound combinations are also selected from the group (T35) consisting of the following mixtures: (I) + (2.035) + (3.001), (I) + (2.035) + (3.002), (I) + (2.035) + (3.003), (I) + (2.035) + (3.004), (I) + (2.035) + (3.005), (I) + (2.035) + (3.006), (I) + (2.035) + (3.007), (I) + (2.035) + (3.008), (I) + (2.035) + (3.009), (I) + (2.035) + (3.010), (I) + (2.035)

+ (3.011), (I) + (2.035) + (3.012), (I) + (2.035) + (3.013), (I) + (2.035) + (3.014), (I) + (2.035) + (3.015), (I) + (2.035) + (3.016), (I) + (2.035) + (3.017), (I) + (2.035) + (3.018), (I) + (2.035) + (3.019), (I) + (2.035) + (3.020), (I) + (2.035) + (3.021), (I) + (2.035) + (3.022), (I) + (2.035) + (3.023), (I) + (2.035) + (3.024), (I) + (2.035) + (3.025), (I) + (2.035) + (3.026), (I) + (2.035) + (3.027), (I) + (2.035) + (3.028), (I) + (2.035) + (3.029), (I) + (2.035) + (3.030).

Preferred compound combinations are also selected from the group (T36) consisting of the following mixtures: (I) + (2.036) + (3.001), (I) + (2.036) + (3.002), (I) + (2.036) + (3.003), (I) + (2.036) + (3.004), (I) + (2.036) + (3.005), (I) + (2.036) + (3.006), (I) + (2.036) + (3.007), (I) + (2.036) + (3.008), (I) + (2.036) + (3.009), (I) + (2.036) + (3.010), (I) + (2.036) + (3.011), (I) + (2.036) + (3.012), (I) + (2.036) + (3.013), (I) + (2.036) + (3.014), (I) + (2.036) + (3.015), (I) + (2.036) + (3.016), (I) + (2.036) + (3.017), (I) + (2.036) + (3.018), (I) + (2.036) + (3.019), (I) + (2.036) + (3.020), (I) + (2.036) + (3.021), (I) + (2.036) + (3.022), (I) + (2.036) + (3.023), (I) + (2.036) + (3.024), (I) + (2.036) + (3.025), (I) + (2.036) + (3.026), (I) + (2.036) + (3.027), (I) + (2.036) + (3.028), (I) + (2.036) + (3.029), (I) + (2.036) + (3.030).

Preferred compound combinations are also selected from the group (T37) consisting of the following mixtures: (I) + (2.037) + (3.001), (I) + (2.037) + (3.002), (I) + (2.037) + (3.003), (I) + (2.037) + (3.004), (I) + (2.037) + (3.005), (I) + (2.037) + (3.006), (I) + (2.037) + (3.007), (I) + (2.037) + (3.008), (I) + (2.037) + (3.009), (I) + (2.037) + (3.010), (I) + (2.037) + (3.011), (I) + (2.037) + (3.012), (I) + (2.037) + (3.013), (I) + (2.037) + (3.014), (I) + (2.037) + (3.015), (I) + (2.037) + (3.016), (I) + (2.037) + (3.017), (I) + (2.037) + (3.018), (I) + (2.037) + (3.019), (I) + (2.037) + (3.020), (I) + (2.037) + (3.021), (I) + (2.037) + (3.022), (I) + (2.037) + (3.023), (I) + (2.037) + (3.024), (I) + (2.037) + (3.025), (I) + (2.037) + (3.026), (I) + (2.037) + (3.027), (I) + (2.037) + (3.028), (I) + (2.037) + (3.029), (I) + (2.037) + (3.030).

Preferred compound combinations are also selected from the group (T38) consisting of the following mixtures: (I) + (2.038) + (3.001), (I) + (2.038) + (3.002), (I) + (2.038) + (3.003), (I) + (2.038) + (3.004), (I) + (2.038) + (3.005), (I) + (2.038) + (3.006), (I) + (2.038) + (3.007), (I) + (2.038) + (3.008), (I) + (2.038) + (3.009), (I) + (2.038) + (3.010), (I) + (2.038) + (3.011), (I) + (2.038) + (3.012), (I) + (2.038) + (3.013), (I) + (2.038) + (3.014), (I) + (2.038) + (3.015), (I) + (2.038) + (3.016), (I) + (2.038) + (3.017), (I) + (2.038) + (3.018), (I) + (2.038) + (3.019), (I) + (2.038) + (3.020), (I) + (2.038) + (3.021), (I) + (2.038) + (3.022), (I) + (2.038) + (3.023), (I) + (2.038) + (3.024), (I) + (2.038) + (3.025), (I) + (2.038) + (3.026), (I) + (2.038) + (3.027), (I) + (2.038) + (3.028), (I) + (2.038) + (3.029), (I) + (2.038) + (3.030).

Preferred compound combinations are also selected from the group (T39) consisting of the following mixtures: (I) + (2.039) + (3.001), (I) + (2.039) + (3.002), (I) + (2.039) + (3.003), (I) + (2.039) + (3.004), (I) + (2.039) + (3.005), (I) + (2.039) + (3.006), (I) + (2.039) + (3.007), (I) + (2.039) + (3.008), (I) + (2.039) + (3.009), (I) + (2.039) + (3.010), (I) + (2.039) + (3.011), (I) + (2.039) + (3.012), (I) + (2.039) + (3.013), (I) + (2.039) + (3.014), (I) + (2.039) + (3.015), (I) + (2.039) + (3.016), (I) + (2.039) + (3.017), (I) + (2.039) + (3.018), (I) + (2.039) + (3.019), (I) + (2.039) + (3.020), (I) + (2.039) + (3.021), (I) + (2.039) + (3.022), (I) + (2.039) + (3.023), (I) + (2.039) + (3.024), (I) + (2.039) + (3.025), (I) + (2.039) + (3.026), (I) + (2.039) + (3.027), (I) + (2.039) + (3.028), (I) + (2.039) + (3.029), (I) + (2.039) + (3.030).

Preferred compound combinations are also selected from the group (T40) consisting of the following mixtures: (I) + (2.040) + (3.001), (I) + (2.040) + (3.002), (I) + (2.040) + (3.003), (I) + (2.040) + (3.004), (I) + (2.040) + (3.005), (I) + (2.040) + (3.006), (I) + (2.040) + (3.007), (I) + (2.040) + (3.008), (I) + (2.040) + (3.009), (I) + (2.040) + (3.010), (I) + (2.040) + (3.011), (I) + (2.040) + (3.012), (I) + (2.040) + (3.013), (I) + (2.040) + (3.014), (I) + (2.040) + (3.015), (I) + (2.040) + (3.016), (I) + (2.040) + (3.017), (I) + (2.040) + (3.018), (I) + (2.040) + (3.019), (I) + (2.040) + (3.020), (I) + (2.040) + (3.021), (I) + (2.040) + (3.022), (I) + (2.040) + (3.023), (I) + (2.040) + (3.024), (I) + (2.040) + (3.025), (I) + (2.040) + (3.026), (I) + (2.040) + (3.027), (I) + (2.040) + (3.028), (I) + (2.040) + (3.029), (I) + (2.040) + (3.030).

Preferred compound combinations are also selected from the group (T41) consisting of the following mixtures: (I) + (2.041) + (3.001), (I) + (2.041) + (3.002), (I) + (2.041) + (3.003), (I) + (2.041) + (3.004), (I) + (2.041) + (3.005), (I) + (2.041) + (3.006), (I) + (2.041) + (3.007), (I) + (2.041) + (3.008), (I) + (2.041) + (3.009), (I) + (2.041) + (3.010), (I) + (2.041) + (3.011), (I) + (2.041) + (3.012), (I) + (2.041) + (3.013), (I) + (2.041) + (3.014), (I) + (2.041) + (3.015), (I) + (2.041) + (3.016), (I) + (2.041) + (3.017), (I) + (2.041) + (3.018), (I) + (2.041) + (3.019), (I) + (2.041) + (3.020), (I) + (2.041) + (3.021), (I) + (2.041) + (3.022), (I) + (2.041) + (3.023), (I) + (2.041) + (3.024), (I) + (2.041) + (3.025), (I) + (2.041) + (3.026), (I) + (2.041) + (3.027), (I) + (2.041) + (3.028), (I) + (2.041) + (3.029), (I) + (2.041) + (3.030).

Preferred compound combinations are also selected from the group (T42) consisting of the following mixtures: (I) + (2.042) + (3.001), (I) + (2.042) + (3.002), (I) + (2.042) + (3.003), (I) + (2.042) + (3.004), (I) + (2.042) + (3.005), (I) + (2.042) + (3.006), (I) + (2.042) + (3.007), (I) + (2.042) + (3.008), (I) + (2.042) + (3.009), (I) + (2.042) + (3.010), (I) + (2.042) + (3.011), (I) + (2.042) + (3.012), (I) + (2.042) + (3.013), (I) + (2.042) + (3.014), (I) + (2.042) + (3.015), (I) + (2.042) + (3.016), (I) + (2.042) + (3.017), (I) + (2.042) + (3.018), (I) + (2.042) + (3.019), (I) + (2.042) + (3.020), (I) + (2.042) + (3.021), (I) + (2.042) + (3.022), (I) + (2.042) + (3.023), (I) + (2.042) + (3.024), (I) + (2.042) + (3.025), (I) + (2.042) + (3.026), (I) + (2.042) + (3.027), (I) + (2.042) + (3.028), (I) + (2.042) + (3.029), (I) + (2.042) + (3.030).

Preferred compound combinations are also selected from the group (T43) consisting of the following mixtures: (I) + (2.043) + (3.001), (I) + (2.043) + (3.002), (I) + (2.043) + (3.003), (I) + (2.043) + (3.004), (I) + (2.043) + (3.005), (I) + (2.043) + (3.006), (I) + (2.043) + (3.007), (I) + (2.043) + (3.008), (I) + (2.043) + (3.009), (I) + (2.043) + (3.010), (I) + (2.043) + (3.011), (I) + (2.043) + (3.012), (I) + (2.043) + (3.013), (I) + (2.043) + (3.014), (I) + (2.043) + (3.015), (I) + (2.043) +

(3.016), (I) + (2.043) + (3.017), (I) + (2.043) + (3.018), (I) + (2.043) + (3.019), (I) + (2.043) + (3.020), (I) + (2.043) + (3.021), (I) + (2.043) + (3.022), (I) + (2.043) + (3.023), (I) + (2.043) + (3.024), (I) + (2.043) + (3.025), (I) + (2.043) + (3.026), (I) + (2.043) + (3.027), (I) + (2.043) + (3.028), (I) + (2.043) + (3.029), (I) + (2.043) + (3.030).

Preferred compound combinations are also selected from the group (T44) consisting of the following mixtures: (I) + (2.044) + (3.001), (I) + (2.044) + (3.002), (I) + (2.044) + (3.003), (I) + (2.044) + (3.004), (I) + (2.044) + (3.005), (I) + (2.044) + (3.006), (I) + (2.044) + (3.007), (I) + (2.044) + (3.008), (I) + (2.044) + (3.009), (I) + (2.044) + (3.010), (I) + (2.044) + (3.011), (I) + (2.044) + (3.012), (I) + (2.044) + (3.013), (I) + (2.044) + (3.014), (I) + (2.044) + (3.015), (I) + (2.044) + (3.016), (I) + (2.044) + (3.017), (I) + (2.044) + (3.018), (I) + (2.044) + (3.019), (I) + (2.044) + (3.020), (I) + (2.044) + (3.021), (I) + (2.044) + (3.022), (I) + (2.044) + (3.023), (I) + (2.044) + (3.024), (I) + (2.044) + (3.025), (I) + (2.044) + (3.026), (I) + (2.044) + (3.027), (I) + (2.044) + (3.028), (I) + (2.044) + (3.029), (I) + (2.044) + (3.030).

Preferred compound combinations are also selected from the group (T45) consisting of the following mixtures: (I) + (2.045) + (3.001), (I) + (2.045) + (3.002), (I) + (2.045) + (3.003), (I) + (2.045) + (3.004), (I) + (2.045) + (3.005), (I) + (2.045) + (3.006), (I) + (2.045) + (3.007), (I) + (2.045) + (3.008), (I) + (2.045) + (3.009), (I) + (2.045) + (3.010), (I) + (2.045) + (3.011), (I) + (2.045) + (3.012), (I) + (2.045) + (3.013), (I) + (2.045) + (3.014), (I) + (2.045) + (3.015), (I) + (2.045) + (3.016), (I) + (2.045) + (3.017), (I) + (2.045) + (3.018), (I) + (2.045) + (3.019), (I) + (2.045) + (3.020), (I) + (2.045) + (3.021), (I) + (2.045) + (3.022), (I) + (2.045) + (3.023), (I) + (2.045) + (3.024), (I) + (2.045) + (3.025), (I) + (2.045) + (3.026), (I) + (2.045) + (3.027), (I) + (2.045) + (3.028), (I) + (2.045) + (3.029), (I) + (2.045) + (3.030).

Preferred compound combinations are also selected from the group (T46) consisting of the following mixtures: (I) + (2.046) + (3.001), (I) + (2.046) + (3.002), (I) + (2.046) + (3.003), (I) + (2.046) + (3.004), (I) + (2.046) + (3.005), (I) + (2.046) + (3.006), (I) + (2.046) + (3.007), (I) + (2.046) + (3.008), (I) + (2.046) + (3.009), (I) + (2.046) + (3.010), (I) + (2.046) + (3.011), (I) + (2.046) + (3.012), (I) + (2.046) + (3.013), (I) + (2.046) + (3.014), (I) + (2.046) + (3.015), (I) + (2.046) + (3.016), (I) + (2.046) + (3.017), (I) + (2.046) + (3.018), (I) + (2.046) + (3.019), (I) + (2.046) + (3.020), (I) + (2.046) + (3.021), (I) + (2.046) + (3.022), (I) + (2.046) + (3.023), (I) + (2.046) + (3.024), (I) + (2.046) + (3.025), (I) + (2.046) + (3.026), (I) + (2.046) + (3.027), (I) + (2.046) + (3.028), (I) + (2.046) + (3.029), (I) + (2.046) + (3.030).

Preferred compound combinations are also selected from the group (T47) consisting of the following mixtures: (I) + (2.047) + (3.001), (I) + (2.047) + (3.002), (I) + (2.047) + (3.003), (I) + (2.047) + (3.004), (I) + (2.047) + (3.005), (I) + (2.047) + (3.006), (I) + (2.047) + (3.007), (I) + (2.047) + (3.008), (I) + (2.047) + (3.009), (I) + (2.047) + (3.010), (I) + (2.047) + (3.011), (I) + (2.047) + (3.012), (I) + (2.047) + (3.013), (I) + (2.047) + (3.014), (I) + (2.047) + (3.015), (I) + (2.047) + (3.016), (I) + (2.047) + (3.017), (I) + (2.047) + (3.018), (I) + (2.047) + (3.019), (I) + (2.047) + (3.020), (I) + (2.047) + (3.021), (I) + (2.047) + (3.022), (I) + (2.047) + (3.023), (I) + (2.047) + (3.024), (I) + (2.047) + (3.025), (I) + (2.047) + (3.026), (I) + (2.047) + (3.027), (I) + (2.047) + (3.028), (I) + (2.047) + (3.029), (I) + (2.047) + (3.030).

Preferred compound combinations are also selected from the group (T48) consisting of the following mixtures: (I) + (2.048) + (3.001), (I) + (2.048) + (3.002), (I) + (2.048) + (3.003), (I) + (2.048) + (3.004), (I) + (2.048) + (3.005), (I) + (2.048) + (3.006), (I) + (2.048) + (3.007), (I) + (2.048) + (3.008), (I) + (2.048) + (3.009), (I) + (2.048) + (3.010), (I) + (2.048) + (3.011), (I) + (2.048) + (3.012), (I) + (2.048) + (3.013), (I) + (2.048) + (3.014), (I) + (2.048) + (3.015), (I) + (2.048) + (3.016), (I) + (2.048) + (3.017), (I) + (2.048) + (3.018), (I) + (2.048) + (3.019), (I) + (2.048) + (3.020), (I) + (2.048) + (3.021), (I) + (2.048) + (3.022), (I) + (2.048) + (3.023), (I) + (2.048) + (3.024), (I) + (2.048) + (3.025), (I) + (2.048) + (3.026), (I) + (2.048) + (3.027), (I) + (2.048) + (3.028), (I) + (2.048) + (3.029), (I) + (2.048) + (3.030).

Preferred compound combinations are also selected from the group (T49) consisting of the following mixtures: (I) + (2.049) + (3.001), (I) + (2.049) + (3.002), (I) + (2.049) + (3.003), (I) + (2.049) + (3.004), (I) + (2.049) + (3.005), (I) + (2.049) + (3.006), (I) + (2.049) + (3.007), (I) + (2.049) + (3.008), (I) + (2.049) + (3.009), (I) + (2.049) + (3.010), (I) + (2.049) + (3.011), (I) + (2.049) + (3.012), (I) + (2.049) + (3.013), (I) + (2.049) + (3.014), (I) + (2.049) + (3.015), (I) + (2.049) + (3.016), (I) + (2.049) + (3.017), (I) + (2.049) + (3.018), (I) + (2.049) + (3.019), (I) + (2.049) + (3.020), (I) + (2.049) + (3.021), (I) + (2.049) + (3.022), (I) + (2.049) + (3.023), (I) + (2.049) + (3.024), (I) + (2.049) + (3.025), (I) + (2.049) + (3.026), (I) + (2.049) + (3.027), (I) + (2.049) + (3.028), (I) + (2.049) + (3.029), (I) + (2.049) + (3.030).

Preferred compound combinations are also selected from the group (T50) consisting of the following mixtures: (I) + (2.050) + (3.001), (I) + (2.050) + (3.002), (I) + (2.050) + (3.003), (I) + (2.050) + (3.004), (I) + (2.050) + (3.005), (I) + (2.050) + (3.006), (I) + (2.050) + (3.007), (I) + (2.050) + (3.008), (I) + (2.050) + (3.009), (I) + (2.050) + (3.010), (I) + (2.050) + (3.011), (I) + (2.050) + (3.012), (I) + (2.050) + (3.013), (I) + (2.050) + (3.014), (I) + (2.050) + (3.015), (I) + (2.050) + (3.016), (I) + (2.050) + (3.017), (I) + (2.050) + (3.018), (I) + (2.050) + (3.019), (I) + (2.050) + (3.020), (I) + (2.050) + (3.021), (I) + (2.050) + (3.022), (I) + (2.050) + (3.023), (I) + (2.050) + (3.024), (I) + (2.050) + (3.025), (I) + (2.050) + (3.026), (I) + (2.050) + (3.027), (I) + (2.050) + (3.028), (I) + (2.050) + (3.029), (I) + (2.050) + (3.030).

Preferred compound combinations are also selected from the group (T51) consisting of the following mixtures: (I) + (2.051) + (3.001), (I) + (2.051) + (3.002), (I) + (2.051) + (3.003), (I) + (2.051) + (3.004), (I) + (2.051) + (3.005), (I) + (2.051) + (3.006), (I) + (2.051) + (3.007), (I) + (2.051) + (3.008), (I) + (2.051) + (3.009), (I) + (2.051) + (3.010), (I) + (2.051) + (3.011), (I) + (2.051) + (3.012), (I) + (2.051) + (3.013), (I) + (2.051) + (3.014), (I) + (2.051) + (3.015), (I) + (2.051) + (3.016), (I) + (2.051) + (3.017), (I) + (2.051) + (3.018), (I) + (2.051) + (3.019), (I) + (2.051) + (3.020), (I) + (2.051) +

(3.021), (I) + (2.051) + (3.022), (I) + (2.051) + (3.023), (I) + (2.051) + (3.024), (I) + (2.051) + (3.025), (I) + (2.051) + (3.026), (I) + (2.051) + (3.027), (I) + (2.051) + (3.028), (I) + (2.051) + (3.029), (I) + (2.051) + (3.030).

Preferred compound combinations are also selected from the group (T52) consisting of the following mixtures: (I) + (2.052) + (3.001), (I) + (2.052) + (3.002), (I) + (2.052) + (3.003), (I) + (2.052) + (3.004), (I) + (2.052) + (3.005), (I) + (2.052) + (3.006), (I) + (2.052) + (3.007), (I) + (2.052) + (3.008), (I) + (2.052) + (3.009), (I) + (2.052) + (3.010), (I) + (2.052) + (3.011), (I) + (2.052) + (3.012), (I) + (2.052) + (3.013), (I) + (2.052) + (3.014), (I) + (2.052) + (3.015), (I) + (2.052) + (3.016), (I) + (2.052) + (3.017), (I) + (2.052) + (3.018), (I) + (2.052) + (3.019), (I) + (2.052) + (3.020), (I) + (2.052) + (3.021), (I) + (2.052) + (3.022), (I) + (2.052) + (3.023), (I) + (2.052) + (3.024), (I) + (2.052) + (3.025), (I) + (2.052) + (3.026), (I) + (2.052) + (3.027), (I) + (2.052) + (3.028), (I) + (2.052) + (3.029), (I) + (2.052) + (3.030).

Preferred compound combinations are also selected from the group (T53) consisting of the following mixtures: (I) + (2.053) + (3.001), (I) + (2.053) + (3.002), (I) + (2.053) + (3.003), (I) + (2.053) + (3.004), (I) + (2.053) + (3.005), (I) + (2.053) + (3.006), (I) + (2.053) + (3.007), (I) + (2.053) + (3.008), (I) + (2.053) + (3.009), (I) + (2.053) + (3.010), (I) + (2.053) + (3.011), (I) + (2.053) + (3.012), (I) + (2.053) + (3.013), (I) + (2.053) + (3.014), (I) + (2.053) + (3.015), (I) + (2.053) + (3.016), (I) + (2.053) + (3.017), (I) + (2.053) + (3.018), (I) + (2.053) + (3.019), (I) + (2.053) + (3.020), (I) + (2.053) + (3.021), (I) + (2.053) + (3.022), (I) + (2.053) + (3.023), (I) + (2.053) + (3.024), (I) + (2.053) + (3.025), (I) + (2.053) + (3.026), (I) + (2.053) + (3.027), (I) + (2.053) + (3.028), (I) + (2.053) + (3.029), (I) + (2.053) + (3.030).

Preferred compound combinations are also selected from the group (T54) consisting of the following mixtures: (I) + (2.054) + (3.001), (I) + (2.054) + (3.002), (I) + (2.054) + (3.003), (I) + (2.054) + (3.004), (I) + (2.054) + (3.005), (I) + (2.054) + (3.006), (I) + (2.054) + (3.007), (I) + (2.054) + (3.008), (I) + (2.054) + (3.009), (I) + (2.054) + (3.010), (I) + (2.054) + (3.011), (I) + (2.054) + (3.012), (I) + (2.054) + (3.013), (I) + (2.054) + (3.014), (I) + (2.054) + (3.015), (I) + (2.054) + (3.016), (I) + (2.054) + (3.017), (I) + (2.054) + (3.018), (I) + (2.054) + (3.019), (I) + (2.054) + (3.020), (I) + (2.054) + (3.021), (I) + (2.054) + (3.022), (I) + (2.054) + (3.023), (I) + (2.054) + (3.024), (I) + (2.054) + (3.025), (I) + (2.054) + (3.026), (I) + (2.054) + (3.027), (I) + (2.054) + (3.028), (I) + (2.054) + (3.029), (I) + (2.054) + (3.030).

Preferred compound combinations are also selected from the group (T55) consisting of the following mixtures: (I) + (2.055) + (3.001), (I) + (2.055) + (3.002), (I) + (2.055) + (3.003), (I) + (2.055) + (3.004), (I) + (2.055) + (3.005), (I) + (2.055) + (3.006), (I) + (2.055) + (3.007), (I) + (2.055) + (3.008), (I) + (2.055) + (3.009), (I) + (2.055) + (3.010), (I) + (2.055) + (3.011), (I) + (2.055) + (3.012), (I) + (2.055) + (3.013), (I) + (2.055) + (3.014), (I) + (2.055) + (3.015), (I) + (2.055) + (3.016), (I) + (2.055) + (3.017), (I) + (2.055) + (3.018), (I) + (2.055) + (3.019), (I) + (2.055) + (3.020), (I) + (2.055) + (3.021), (I) + (2.055) + (3.022), (I) + (2.055) + (3.023), (I) + (2.055) + (3.024), (I) + (2.055) + (3.025), (I) + (2.055) + (3.026), (I) + (2.055) + (3.027), (I) + (2.055) + (3.028), (I) + (2.055) + (3.029), (I) + (2.055) + (3.030).

Preferred compound combinations are also selected from the group (T56) consisting of the following mixtures: (I) + (2.056) + (3.001), (I) + (2.056) + (3.002), (I) + (2.056) + (3.003), (I) + (2.056) + (3.004), (I) + (2.056) + (3.005), (I) + (2.056) + (3.006), (I) + (2.056) + (3.007), (I) + (2.056) + (3.008), (I) + (2.056) + (3.009), (I) + (2.056) + (3.010), (I) + (2.056) + (3.011), (I) + (2.056) + (3.012), (I) + (2.056) + (3.013), (I) + (2.056) + (3.014), (I) + (2.056) + (3.015), (I) + (2.056) + (3.016), (I) + (2.056) + (3.017), (I) + (2.056) + (3.018), (I) + (2.056) + (3.019), (I) + (2.056) + (3.020), (I) + (2.056) + (3.021), (I) + (2.056) + (3.022), (I) + (2.056) + (3.023), (I) + (2.056) + (3.024), (I) + (2.056) + (3.025), (I) + (2.056) + (3.026), (I) + (2.056) + (3.027), (I) + (2.056) + (3.028), (I) + (2.056) + (3.029), (I) + (2.056) + (3.030).

Preferred compound combinations are also selected from the group (T57) consisting of the following mixtures: (I) + (2.057) + (3.001), (I) + (2.057) + (3.002), (I) + (2.057) + (3.003), (I) + (2.057) + (3.004), (I) + (2.057) + (3.005), (I) + (2.057) + (3.006), (I) + (2.057) + (3.007), (I) + (2.057) + (3.008), (I) + (2.057) + (3.009), (I) + (2.057) + (3.010), (I) + (2.057) + (3.011), (I) + (2.057) + (3.012), (I) + (2.057) + (3.013), (I) + (2.057) + (3.014), (I) + (2.057) + (3.015), (I) + (2.057) + (3.016), (I) + (2.057) + (3.017), (I) + (2.057) + (3.018), (I) + (2.057) + (3.019), (I) + (2.057) + (3.020), (I) + (2.057) + (3.021), (I) + (2.057) + (3.022), (I) + (2.057) + (3.023), (I) + (2.057) + (3.024), (I) + (2.057) + (3.025), (I) + (2.057) + (3.026), (I) + (2.057) + (3.027), (I) + (2.057) + (3.028), (I) + (2.057) + (3.029), (I) + (2.057) + (3.030).

More preferred are the compound combinations selected from groups (T2), (T5), (T17), (T27) and (T38).

Even more preferred compound combinations are selected from the group (T1-A) consisting of the following mixtures:
(I) + (2.002) + (3.003), (I) + (2.002) + (3.012), (I) + (2.002) + (3.016), (I) + (2.002) + (3.017), (I) + (2.002) + (3.020), (I) + (2.002) + (3.025), (I) + (2.002) + (3.026).

Even more preferred compound combinations are also selected from the group (T2-A) consisting of the following mixtures:
(I) + (2.005) + (3.003), (I) + (2.005) + (3.012), (I) + (2.005) + (3.016), (I) + (2.005) + (3.017), (I) + (2.005) + (3.020), (I) + (2.005) + (3.025), (I) + (2.005) + (3.026).

Even more preferred compound combinations are also selected from the group (T3-A) consisting of the following mixtures:
(I) + (2.017) + (3.003), (I) + (2.017) + (3.012), (I) + (2.017) + (3.016), (I) + (2.017) + (3.017), (I) + (2.017) + (3.020), (I) + (2.017) + (3.025), (I) + (2.017) + (3.026).

Even more preferred compound combinations are also selected from the group (T4-A) consisting of the following

mixtures:
(I) + (2.027) + (3.003), (I) + (2.027) + (3.012), (I) + (2.027) + (3.016), (I) + (2.027) + (3.017), (I) + (2.027) + (3.020), (I) + (2.027) + (3.025), (I) + (2.027) + (3.026).

Even more preferred compound combinations are also selected from the group (T5-A) consisting of the following mixtures:
(I) + (2.038) + (3.003), (I) + (2.038) + (3.012), (I) + (2.038) + (3.016), (I) + (2.038) + (3.017), (I) + (2.038) + (3.020), (I) + (2.038) + (3.025), (I) + (2.038) + (3.026).

Most preferred the compound combinations are selected from the group (T1-B) consisting of the following combinations:

(I) + (2.002) + (3.012), (I) + (2.002) + (3.020), (I) + (2.002) + (3.025),

(I) + (2.005) + (3.012), (I) + (2.005) + (3.020), (I) + (2.005) + (3.025),

(I) + (2.017) + (3.012), (I) + (2.017) + (3.020), (I) + (2.017) + (3.025),

(I) + (2.027) + (3.012), (I) + (2.027) + (3.020), (I) + (2.027) + (3.025),

(I) + (2.038) + (3.012), (I) + (2.038) + (3.020), (I) + (2.038) + (3.025).

In the combinations according to the invention the compounds (A) and (B) can be present in a broad range of effective weight ratio of A:B, for example in a range of 100:1 to 1:100, preferably in a weight ratio of 50:1 to 1:50, most preferably in a weight ratio of 20:1 to 1:20. Further ratios of A:B which can be used according to the present invention with increasing preference in the order given are: 95:1 to 1:95, 90:1 to 1:90, 85:1 to 1:85, 80:1 to 1:80, 75:1 to 1:75, 70:1 to 1:70, 65:1 to 1:65, 60:1 to 1:60, 55:1 to 1:55, 45:1 to 1:45, 40:1 to 1:40, 35:1 to 1:35, 30:1 to 1:30, 25:1 to 1:25, 15:1 to 1:15, 10:1 to 1:10, 5:1 to 1:5, 4:1 to 1:4, 3:1 to 1:3, 2:1 to 1:2.

Further ratios of A:B which can be used according to the present invention are: 95:1 to 1:1, 90:1 to 1:1, 85:1 to 1:1, 80:1 to 1:1, 75:1 to 1:1, 70:1 to 1:1, 65:1 to 1:1, 60:1 to 1:1, 55:1 to 1:1, 45:1 to 1:1, 40:1 to 1:1, 35:1 to 1:1, 30:1 to 1:1,25:1 to 1:1, 15:1 to 1:1, 10:1 to 1:1, 5:1 to 1:1,4:1 to 1:1, 3:1 to 1:1,2:1 to 1:1.

Further ratios of A:B which can be used according to the present invention are: 1:1 to 1:95, 1:1 to 1:90, 1:1 to 1:85, 1:1 to 1:80, 1:1 to 1:75, 1:1 to 1:70, 1:1 to 1:65, 1:1 to 1:60, 1:1 to 1:55, 1:1 to 1:45, 1:1 to 1:40, 1:1 to 1:35,1:1 to 1:30, 1:1 to 1:25, 1:1 to 1:15, 1:1 to 1:10, 1:1 to 1:5, 1:1 to 1:4, 1:1 to 1:3, 1:1 to 1:2.

In the combinations according to the invention the compounds (A) and (C) can be present in a broad range of effective weight ratio of A:C, for example in a range of 100:1 to 1:100, preferably in a weight ratio of 50:1 to 1:50, most preferably in a weight ratio of 20:1 to 1:20. Further ratios of A:C which can be used according to the present invention with increasing preference in the order given are: 95:1 to 1:95, 90:1 to 1:90, 85:1 to 1:85, 80:1 to 1:80, 75:1 to 1:75, 70:1 to 1:70, 65:1 to 1:65, 60:1 to 1:60, 55:1 to 1:55, 45:1 to 1:45, 40:1 to 1:40, 35:1 to 1:35, 30:1 to 1:30, 25:1 to 1:25, 15:1 to 1:15, 10:1 to 1:10, 5:1 to 1:5, 4:1 to 1:4, 3:1 to 1:3, 2:1 to 1:2.

Further ratios of A:C which can be used according to the present invention are: 95:1 to 1:1, 90:1 to 1:1, 85:1 to 1:1, 80:1 to 1:1, 75:1 to 1:1, 70:1 to 1:1, 65:1 to 1:1, 60:1 to 1:1, 55:1 to 1:1, 45:1 to 1:1, 40:1 to 1:1, 35:1 to 1:1, 30:1 to 1:1,25:1 to 1:1, 15:1 to 1:1, 10:1 to 1:1, 5:1 to 1:1,4:1 to 1:1, 3:1 to 1:1,2:1 to 1:1.

Further ratios of A:C which can be used according to the present invention are: 1:1 to 1:95, 1:1 to 1:90, 1:1 to 1:85, 1:1 to 1:80, 1:1 to 1:75, 1:1 to 1:70, 1:1 to 1:65, 1:1 to 1:60, 1:1 to 1:55, 1:1 to 1:45, 1:1 to 1:40, 1:1 to 1:35,1:1 to 1:30, 1:1 to 1:25, 1:1 to 1:15, 1:1 to 1:10, 1:1 to 1:5, 1:1 to 1:4, 1:1 to 1:3, 1:1 to 1:2.

In the combinations according to the invention also the compounds (B) and (C) can be present in a broad range of effective weight ratio of B:C. The respective weight ratio automatically derives from the chosen weight ratios A:B and A:C.

If more than one, e.g. 2 or 3, compounds (B) are present, the weight ratio refers to the total amount of compound (B), i.e. to the sum of the amount of each compound (B) present in the combination. This applies mutatis mutandis, if more than one, e.g. 2 or 3, compounds (C) are present, i.e. in such case the weight ratio refers to the total amount of compound (C), i.e. to the sum of the amount of each compound (C) present in the combination.

*Isomers*

As already outlined above 2-[6-(4-bromophenoxy)-2-(trifluoromethyl)-3-pyridyl]-1-(1,2,4-triazol-1-yl)propan-2-ol may be present in the form of different stereoisomers. Depending on the nature of the substituents of compounds (B) and (C), also compounds (B) and (C) may be present in the compound combinations of the invention in the form of different stereoisomers. These stereoisomers are, for example, enantiomers, diastereomers, atropisomers or geometric

isomers. Accordingly, the invention encompasses both pure stereoisomers and any mixture of these isomers. Where a compound can be present in two or more tautomer forms in equilibrium, reference to the compound by means of one tautomeric description is to be considered to include all tautomer forms. Where a compound can be present in isomeric forms and/or tautomeric forms, such a compound is understood hereinabove and hereinbelow also to include, where applicable, corresponding isomeric and/or tautomeric forms or mixtures thereof, even when these are not specifically mentioned in each case.

*Salts / N-Oxides*

Depending on the nature of the substituents, the compounds present in the compound combinations of the invention may be present in the form of the free compound and/or a solvate and/or an agrochemically active salt and/or an N-oxide thereof.

Agrochemically active salts include acid addition salts of inorganic and organic acids well as salts of customary bases. Examples of inorganic acids are hydrohalic acids, such as hydrogen fluoride, hydrogen chloride, hydrogen bromide and hydrogen iodide, sulfuric acid, phosphoric acid and nitric acid, and acidic salts, such as sodium bisulfate and potassium bisulfate. Useful organic acids include, for example, formic acid, carbonic acid and alkanoic acids such as acetic acid, trifluoroacetic acid, trichloroacetic acid and propionic acid, and also glycolic acid, thiocyanic acid, lactic acid, succinic acid, citric acid, benzoic acid, cinnamic acid, oxalic acid, saturated or mono- or diunsaturated fatty acids having 6 to 20 carbon atoms, alkylsulphuric monoesters, alkylsulphonic acids (sulphonic acids having straight-chain or branched alkyl radicals having 1 to 20 carbon atoms), arylsulphonic acids or aryldisulphonic acids (aromatic radicals, such as phenyl and naphthyl, which bear one or two sulphonic acid groups), alkylphosphonic acids (phosphonic acids having straight-chain or branched alkyl radicals having 1 to 20 carbon atoms), arylphosphonic acids or aryldiphosphonic acids (aromatic radicals, such as phenyl and naphthyl, which bear one or two phosphonic acid radicals), where the alkyl and aryl radicals may bear further substituents, for example p-toluenesulphonic acid, salicylic acid, p-aminosalicylic acid, 2-phenoxybenzoic acid, 2-acetoxybenzoic acid.

Solvates of the compounds present in the compound combinations of the invention or their salts are stoichiometric compositions of the compounds with solvents.

N-oxides of compounds present in the compound combination of the invention or intermediates thereof can be obtained in a simple manner by customary processes, for example by N-oxidation with hydrogen peroxide ($H_2O_2$), peracids, for example peroxy sulfuric acid or peroxy carboxylic acids, such as meta-chloroperoxybenzoic acid or peroxymonosulfuric acid (Caro's acid).

E.g. the corresponding N-oxides may be prepared starting from the respective compounds using conventional oxidation methods, e.g. by treating the compounds with an organic peracid such as metachloroperbenzoic acid (e.g. WO-A 2003/64572 or J. Med. Chem. 38 (11), 1892-1903, 1995); or with inorganic oxidizing agents such as hydrogen peroxide (e.g. J. Heterocyc. Chem. 18 (7), 1305-1308, 1981) or oxone (e.g. J. Am. Chem. Soc. 123 (25), 5962-5973, 2001). The oxidation may lead to pure mono-N-oxides or to a mixture of different N-oxides, which can be separated by conventional methods such as chromatography.

*Crystalline Form*

The compounds present in the compound combinations of the invention may exist in multiple crystalline and/or amorphous forms. Crystalline forms include unsolvated crystalline forms, solvates and hydrates.

*Formulations*

The present invention further relates to compositions for controlling unwanted microorganisms, comprising a compound combination according to the invention. The compositions may be applied to the microorganisms and/or in their habitat.

The composition comprises a compound combination of the invention and at least one agriculturally suitable auxiliary, e.g. carrier(s) and/or surfactant(s).

A carrier is a solid or liquid, natural or synthetic, organic or inorganic substance that is generally inert. The carrier generally improves the application of the active compounds, for instance, to plants, plants parts or seeds. Examples of suitable *solid carriers* include, but are not limited to, ammonium salts, natural rock flours, such as kaolins, clays, talc, chalk, quartz, attapulgite, montmorillonite and diatomaceous earth, and synthetic rock flours, such as finely divided silica, alumina and silicates. Examples of typically useful solid carriers for preparing granules include, but are not limited to crushed and fractionated natural rocks such as calcite, marble, pumice, sepiolite and dolomite, synthetic granules of inorganic and organic flours and granules of organic material such as paper, sawdust, coconut shells, maize cobs and tobacco stalks. Examples of suitable *liquid carriers* include, but are not limited to, water, organic solvents and combinations

thereof. Examples of suitable *solvents* include polar and nonpolar organic chemical liquids, for example from the classes of aromatic and nonaromatic hydrocarbons (such as cyclohexane, paraffins, alkylbenzenes, xylene, toluene alkylnaphthalenes, chlorinated aromatics or chlorinated aliphatic hydrocarbons such as chlorobenzenes, chloroethylenes or methylene chloride), alcohols and polyols (which may optionally also be substituted, etherified and/or esterified, such as butanol or glycol), ketones (such as acetone, methyl ethyl ketone, methyl isobutyl ketone or cyclohexanone), esters (including fats and oils) and (poly)ethers, unsubstituted and substituted amines, amides (such as dimethylformamide), lactams (such as N-alkylpyrrolidones) and lactones, sulfones and sulfoxides (such as dimethyl sulfoxide). The carrier may also be a liquefied gaseous extender, i.e. liquid which is gaseous at standard temperature and under standard pressure, for example aerosol propellants such as halohydrocarbons, butane, propane, nitrogen and carbon dioxide. The amount of carrier typically ranges from 1 to 99.99%, preferably from 5 to 99.9%, more preferably from 10 to 99.5%, and most preferably from 20 to 99% by weight of the composition.

The surfactant can be an ionic (cationic or anionic) or non-ionic surfactant, such as ionic or non-ionic emulsifier(s), foam former(s), dispersant(s), wetting agent(s) and any mixtures thereof. Examples of suitable surfactants include, but are not limited to, salts of polyacrylic acid, salts of lignosulfonic acid, salts of phenolsulfonic acid or naphthalenesulfonic acid, polycondensates of ethylene and/or propylene oxide with fatty alcohols, fatty acids or fatty amines (polyoxyethylene fatty acid esters, polyoxyethylene fatty alcohol ethers, for example alkylaryl polyglycol ethers), substituted phenols (preferably alkylphenols or arylphenols), salts of sulfosuccinic esters, taurine derivatives (preferably alkyl taurates), phosphoric esters of polyethoxylated alcohols or phenols, fatty esters of polyols and derivatives of compounds containing sulfates, sulfonates, phosphates (for example, alkylsulfonates, alkyl sulfates, arylsulfonates) and protein hydrolysates, lignosulfite waste liquors and methylcellulose. A surfactant is typically used when a compound of the compound combination of the invention and/or the carrier is insoluble in water and the application is made with water. If present, the amount of surfactants typically ranges from 5 to 40% by weight based on the total weight of the composition.

Further examples of suitable auxiliaries include water repellents, siccatives, binders (adhesive, tackifier, fixing agent, such as carboxymethylcellulose, natural and synthetic polymers in the form of powders, granules or latices, such as gum arabic, polyvinyl alcohol and polyvinyl acetate, natural phospholipids such as cephalins and lecithins and synthetic phospholipids, polyvinylpyrrolidone and tylose), thickeners, stabilizers (e.g. cold stabilizers, preservatives, antioxidants, light stabilizers, or other agents which improve chemical and/or physical stability), dyes or pigments (such as inorganic pigments, e.g. iron oxide, titanium oxide and Prussian Blue ; organic dyes, e.g. alizarin, azo and metal phthalocyanine dyes), antifoams (e.g. silicone antifoams and magnesium stearate), preservatives (e.g. dichlorophene and benzyl alcohol hemiformal), secondary thickeners (cellulose derivatives, acrylic acid derivatives, xanthan, modified clays and finely divided silica), stickers, gibberellins and processing auxiliaries, mineral and vegetable oils, perfumes, waxes, nutrients (including trace nutrients, such as salts of iron, manganese, boron, copper, cobalt, molybdenum and zinc), protective colloids, thixotropic substances, penetrants, sequestering agents and complex formers.

The choice of the auxiliaries is related to the intended mode of application of the compound combination of the invention and/or on the physical properties. Furthermore, the auxiliaries may be chosen to impart particular properties (technical, physical and/or biological properties) to the formulations/compositions or use forms prepared therefrom. The choice of auxiliaries may allow customizing the compositions to specific needs.

The composition may be in any customary form, such as solutions (e.g aqueous solutions), emulsions, wettable powders, water- and oil-based suspensions, powders, dusts, pastes, soluble powders, soluble granules, granules for broadcasting, suspoemulsion concentrates, natural or synthetic products impregnated with the compound combination of the invention, fertilizers and also microencapsulations in polymeric substances. The compound combination of the invention may be present in a suspended, emulsified or dissolved form.

The formulations mentioned can be prepared in a manner known per se, for example by mixing the active ingredients with at least one auxiliary.

The composition may be provided to the end user as ready-for-use formulation, i.e. the compositions may be directly applied to the plants or seeds by a suitable device, such as a spraying or dusting device. Alternatively, the compositions may be provided to the end user in the form of concentrates which have to be diluted, preferably with water, prior to use.

The formulations contain generally between 0.01 and 99% by weight, from 0.05 and 98% by weight, preferably between 0.1 and 95% by weight, more preferably between 0.5 and 90%, most preferably from 1 to 80% by weight of the compound combination of the present invention. If the composition comprises two or more active ingredients, the outlined ranges refer to the total amount of the compound combination of the present invention.

The formulations described above can be used for controlling unwanted microorganisms by applying it to the microorganisms and/or in their habitat.

In one particular embodiment of the invention, the compound combination is provided in sprayable form to allow spray application. In this embodiment, the compound combination according to the invention is provided as composition / formulation, comprising the active ingredients and at least one suitable liquid carrier.

Suitable liquid carriers are preferably selected from water, organic solvents and combinations thereof. More

preferred, the liquid carrier is water or a mixture of water and an organic solvent.

Preferred suitable organic solvents are those already described above.

The amount of liquid carrier typically ranges from 1 to 99.99%, preferably from 5 to 99.9%, more preferably from 10 to 99.5%, and most preferably from 20 to 99% by weight of the composition.

Preferably, the sprayable composition further comprises at least one surfactant. Suitable surfactants are disclosed above. It may also comprise at least one further auxiliary as outlined above.

Preferably, the sprayable composition is provided as an emulsifiable concentrate or suspension concentrate, more preferably an emulsifiable concentrate comprising the active ingredients in a total amount of 20 to 400 g/L, preferably 40 to 200 g/L, or a suspension concentrate comprising the active ingredients in a total amount of 50 to 500 g/L, preferably 100 to 400 g/L.

Preparation of said concentrates is well known to those skilled in the art. For example, emulsifiable concentrates (EC) can be prepared by dissolving the desired amount of active ingredients, e.g. 20 to 400 g per litre concentrate, and 50 to 100 g per litre concentrate of at least one surfactant in a water-insoluble organic solvent, e.g. an aromatic hydrocarbon, or a water-soluble organic solvent, e.g. N-methyl-2-pyrrolidone (NMP), dimethylsulfoxide (DMSO), γ-butyrolactone. Suspension concentrates (SC) can be prepared by mixing the desired amount of active ingredients, e.g. 50 to 500 g per litre concentrate, 20 to 100 g per litre concentrate of at least one surfactant and 1 to 20 g per litre concentrate of at least one binder and/or secondary thickener and suspending this mixture in water.

Preferably, before applying said concentrates to the plant or a part thereof, the concentrate is diluted with water. More preferably, the emulsifiable concentrate or suspension concentrate is mixed with water in such amount to arrive at a total concentration of active ingredients in the resulting mixture of 0.1 to 5, preferably 0.2 to 2, more preferred 0.25 to 1 g/l.

*Further active ingredients*

Compound combinations according to the invention can be used as such or in compositions / formulations thereof and can be mixed with further known active ingredients, for example bactericides, acaricides, nematicides or insecticides, in order thus to broaden, for example, the activity spectrum or to prevent development of resistance.

Useful mixing partners include, for example, insecticides, acaricides, nematicides and bactericides (see also Pesticide Manual, 14th ed.).

A mixture with other known active ingredients, such as herbicides, or with fertilizers and growth regulators, safeners and/or semiochemicals, is also possible.

Examples of biological control agents which may be combined with the compound combinations of the invention are:

(A) Antibacterial agents selected from the group of:

(A1) bacteria, such as (A1.1) *Bacillus subtilis,* in particular strain QST713/AQ713 (available as SERENADE OPTI or SERENADE ASO from Bayer CropScience LP, US, having NRRL Accession No. B21661and described in U.S. Patent No. 6,060,051); (A1.2) *Bacillus amyloliquefaciens,* in particular strain D747 (available as Double Nickel™ from Certis, US, having accession number FERM BP-8234 and disclosed in US Patent No. 7,094,592); (A1.3) *Bacillus pumilus,* in particular strain BU F-33 (having NRRL Accession No. 50185); (A1.4) *Bacillus subtilis var. amyloliquefaciens* strain FZB24 (available as Taegro® from Novozymes, US); (A1.5) a *Paenibacillus* sp. strain having Accession No. NRRL B-50972 or Accession No. NRRL B-67129 and described in International Patent Publication No. WO 2016/154297; and

(A2) fungi, such as (A2.1) *Aureobasidium pullulans,* in particular blastospores of strain DSM14940; (A2.2) *Aureobasidium pullulans* blastospores of strain DSM 14941; (A2.3) *Aureobasidium pullulans,* in particular mixtures of blastospores of strains DSM14940 and DSM14941;

(B) Biological fungicides selected from the group of:

(B1) bacteria, for example (B1.1) *Bacillus subtilis,* in particular strain QST713/AQ713 (available as SERENADE OPTI or SERENADE ASO from Bayer CropScience LP, US, having NRRL Accession No. B21661and described in U.S. Patent No. 6,060,051); (B1.2) *Bacillus pumilus*, in particular strain QST2808 (available as SONATA® from Bayer CropScience LP, US, having Accession No. NRRL B-30087 and described in U.S. Patent No. 6,245,551); (B1.3) *Bacillus pumilus*, in particular strain GB34 (available as Yield Shield® from Bayer AG, DE); (B1.4) *Bacillus pumilus*, in particular strain BU F-33 (having NRRL Accession No. 50185); (B1.5) *Bacillus amyloliquefaciens,* in particular strain D747 (available as Double Nickel™ from Certis, US, having accession number

FERM BP-8234 and disclosed in US Patent No. 7,094,592); (B1.6) *Bacillus subtilis* Y1336 (available as BIOBAC® WP from Bion-Tech, Taiwan, registered as a biological fungicide in Taiwan under Registration Nos. 4764, 5454, 5096 and 5277); (B1.7) *Bacillus amyloliquefaciens* strain MBI 600 (available as SUBTILEX from BASF SE); (B1.8) *Bacillus subtilis* strain GB03 (available as Kodiak® from Bayer AG, DE); (B1.9) *Bacillus subtilis var. amyloliquefaciens* strain FZB24 (available from Novozymes Biologicals Inc., Salem, Virginia or Syngenta Crop Protection, LLC, Greensboro, North Carolina as the fungicide TAEGRO® or TAEGRO® ECO (EPA Registration No. 70127-5); (B1.10) *Bacillus mycoides,* isolate J (available as BmJ TGAI or WG from Certis USA); (B1.11) *Bacillus licheniformis*, in particular strain SB3086 (available as EcoGuard TM Biofungicide and Green Releaf from Novozymes); (B1.12) a *Paenibacillus* sp. strain having Accession No. NRRL B-50972 or Accession No. NRRL B-67129 and described in International Patent Publication No. WO 2016/154297.

In some embodiments, the biological control agent is a *Bacillus subtilis* or *Bacillus amyloliquefaciens* strain that produces a fengycin or plipastatin-type compound, an iturin-type compound, and/or a surfactin-type compound. For background, see the following review article: Ongena, M., et al., "Bacillus Lipopeptides: Versatile Weapons for Plant Disease Biocontrol," Trends in Microbiology, Vol 16, No. 3, March 2008, pp. 115-125. *Bacillus* strains capable of producing lipopeptides include *Bacillus subtilis* QST713 (available as SERENADE OPTI or SERENADE ASO from Bayer CropScience LP, US, having NRRL Accession No. B21661and described in U.S. Patent No. 6,060,051), *Bacillus amyloliquefaciens* strain D747 (available as Double Nickel™ from Certis, US, having accession number FERM BP-8234 and disclosed in US Patent No. 7,094,592); *Bacillus subtilis* MBI600 (available as SUBTILEX® from Becker Underwood, US EPA Reg. No. 71840-8); *Bacillus subtilis* Y1336 (available as BIOBAC® WP from Bion-Tech, Taiwan, registered as a biological fungicide in Taiwan under Registration Nos. 4764, 5454, 5096 and 5277); *Bacillus amyloliquefaciens,* in particular strain FZB42 (available as RHIZOVITAL® from ABiTEP, DE); and *Bacillus subtilis* var. *amyloliquefaciens* FZB24 (available from Novozymes Biologicals Inc., Salem, Virginia or Syngenta Crop Protection, LLC, Greensboro, North Carolina as the fungicide TAEGRO® or TAEGRO® ECO (EPA Registration No. 70127-5); and

(B2) fungi, for example: (B2.1) *Coniothyrium minitans,* in particular strain CON/M/91-8 (Accession No. DSM-9660; e.g. Contans ® from Bayer); (B2.2) *Metschnikowia fructicola*, in particular strain NRRL Y-30752 (e.g. Shemer®); (B2.3) *Microsphaeropsis ochracea* (e.g. Microx® from Prophyta); (B2.5) *Trichoderma spp.,* including *Trichoderma atroviride,* strain SC1 described in International Application No. PCT/IT2008/000196); (B2.6) *Trichoderma harzianum rifai* strain KRL-AG2 (also known as strain T-22, /ATCC 208479, e.g. PLANTSHIELD T-22G, Rootshield®, and TurfShield from BioWorks, US); (B2.14) *Gliocladium roseum,* strain 321U from W.F. Stoneman Company LLC; (B2.35) *Talaromyces flavus,* strain V117b; (B2.36) *Trichoderma asperellum,* strain ICC 012 from Isagro; (B2.37) *Trichoderma asperellum,* strain SKT-1 (e.g. ECO-HOPE® from Kumiai Chemical Industry); (B2.38) *Trichoderma atroviride,* strain CNCM 1-1237 (e.g. Esquive® WP from Agrauxine, FR); (B2.39) *Trichoderma atroviride,* strain no. V08/002387; (B2.40) *Trichoderma atroviride,* strain NMI no. V08/002388; (B2.41) *Trichoderma atroviride,* strain NMI no. V08/002389; (B2.42) *Trichoderma atroviride*, strain NMI no. V08/002390; (B2.43) *Trichoderma atroviride*, strain LC52 (e.g. Tenet by Agrimm Technologies Limited); (B2.44) *Trichoderma atroviride,* strain ATCC 20476 (IMI 206040); (B2.45) *Trichoderma atroviride,* strain T11 (IMI352941/ CECT20498); (B2.46) *Trichoderma harmatum*; (B2.47) *Trichoderma harzianum*; (B2.48) *Trichoderma harzianum rifai T39* (e.g. Trichodex® from Makhteshim, US); (B2.49) *Trichoderma harzianum,* in particular, strain KD (e.g. Trichoplus from Biological Control Products, SA (acquired by Becker Underwood)); (B2.50) *Trichoderma harzianum,* strain ITEM 908 (e.g. Trianum-P from Koppert); (B2.51) *Trichoderma harzianum,* strain TH35 (e.g. Root-Pro by Mycontrol); (B2.52) *Trichoderma virens* (also known as *Gliocladium virens*), in particular strain GL-21 (e.g. SoilGard 12G by Certis, US); (B2.53) *Trichoderma viride,* strain TV1(e.g. Trianum-P by Koppert); (B2.54) *Ampelomyces quisqualis*, in particular strain AQ 10 (e.g. AQ 10® by IntrachemBio Italia); (B2.56) *Aureobasidium pullulans*, in particular blastospores of strain DSM14940; (B2.57) *Aureobasidium pullulans,* in particular blastospores of strain DSM 14941; (B2.58) *Aureobasidium pullulans*, in particular mixtures of blastospores of strains DSM14940 and DSM 14941 (e.g. Botector® by bio-ferm, CH); (B2.64) *Cladosporium cladosporioides*, strain H39 (by Stichting Dienst Landbouwkundig Onderzoek); (B2.69) *Gliocladium catenulatum* (Synonym: *Clonostachys rosea f. catenulate*) strain J1446 (e.g. Prestop ® by AgBio Inc. and also e.g. Primastop® by Kemira Agro Oy); (B2.70) *Lecanicillium lecanii* (formerly known as *Verticillium lecanii*) *conidia* of strain KV01 (e.g. Vertalec® by Koppert/Arysta); (B2.71) *Penicillium vermiculatum*; (B2.72) *Pichia anomala*, strain WRL-076 (NRRL Y-30842); (B2.75) *Trichoderma atroviride,* strain SKT-1 (FERM P-16510); (B2.76) *Trichoderma atroviride,* strain SKT-2 (FERM P-16511); (B2.77) *Trichoderma atroviride*, strain SKT-3 (FERM P-17021); (B2.78) *Trichoderma gamsii* (formerly *T. viride*), strain ICC080 (IMI CC 392151 CABI, e.g. BioDerma by AGROBIOSOL DE MEXICO, S.A. DE C.V.); (B2.79) *Trichoderma harzianum,* strain DB 103 (e.g., T-Gro 7456 by Dagutat Biolab); (B2.80) *Trichoderma polysporum,* strain IMI 206039 (e.g. Binab TF WP by BINAB Bio-Innovation AB, Sweden); (B2.81) *Trichoderma stromaticum* (e.g. Tricovab by Ceplac, Brazil); (B2.83) *Ulocladium oudemansii*, in particular strain HRU3 (e.g. Botry-Zen® by Botry-Zen Ltd, NZ); (B2.84) *Verticillium albo-atrum* (formerly *V. dahliae*), strain

WCS850 (CBS 276.92; e.g. Dutch Trig by Tree Care Innovations); (B2.86) *Verticillium chlamydosporium*; (B2.87) mixtures of *Trichoderma asperellum* strain ICC 012 and *Trichoderma gamsii* strain ICC 080 (product known as e.g. BIO-TAM™from Bayer CropScience LP, US).

Further examples of biological control agents which may be combined with the compound combination of the invention are:

bacteria selected from the group consisting of *Bacillus cereus,* in particular *B. cereus* strain CNCM I-1562 and *Bacillus firmus*, strain 1-1582 (Accession number CNCM 1-1582), *Bacillus subtilis strain* OST 30002 (Accession No. NRRL B-50421), *Bacillus thuringiensis,* in particular *B. thuringiensis* subspecies *israelensis* (serotype H-14), strain AM65-52 (Accession No. ATCC 1276), *B. thuringiensis subsp. aizawai*, in particular strain ABTS-1857 (SD-1372), *B. thuringiensis subsp. kurstaki* strain HD-1, *B. thuringiensis subsp. tenebrionis* strain NB 176 (SD-5428), *Pasteuria penetrans, Pasteuria spp.* (Rotylenchulus reniformis nematode)-PR3 (Accession Number ATCC SD-5834), *Streptomyces microflavus* strain AQ6121 (= QRD 31.013, NRRL B-50550), and *Streptomyces galbus* strain AQ 6047 (Acession Number NRRL 30232);

fungi and yeasts selected from the group consisting of *Beauveria bassiana*, in particular strain ATCC 74040, *Lecanicillium spp*., in particular strain HRO LEC 12, *Metarhizium anisopliae*, in particular strain F52 (DSM3884 or ATCC 90448), *Paecilomyces fumosoroseus* (now: *Isaria fumosorosea*), in particular strain IFPC 200613, or strain Apopka 97 (Accesion No. ATCC 20874), and *Paecilomyces lilacinus,* in particular *P. lilacinus* strain 251 (AGAL 89/030550);

viruses selected from the group consisting of *Adoxophyes orana* (summer fruit tortrix) granulosis virus (GV), *Cydia pomonella* (codling moth) granulosis virus (GV), *Helicoverpa armigera* (cotton bollworm) nuclear polyhedrosis virus (NPV), *Spodoptera exigua* (beet armyworm) mNPV, *Spodoptera frugiperda* (fall armyworm) mNPV, and *Spodoptera littoralis* (African cotton leafworm) NPV.

bacteria and fungi which can be added as 'inoculant' to plants or plant parts or plant organs and which, by virtue of their particular properties, promote plant growth and plant health. Examples are: *Agrobacterium spp*., *Azorhizobium caulinodans, Azospirillum spp*., *Azotobacter spp*., *Bradyrhizobium spp*., *Burkholderia spp*., in particular *Burkholderia cepacia* (formerly known as *Pseudomonas cepacia*), *Gigaspora spp*., or *Gigaspora monosporum, Glomus spp*., *Laccaria spp*., *Lactobacillus buchneri, Paraglomus spp*., *Pisolithus tinctorus, Pseudomonas spp., Rhizobium spp*., in particular *Rhizobium trifolii, Rhizopogon spp*., *Scleroderma spp*., *Suillus spp*., and *Streptomyces spp.*

plant extracts and products formed by microorganisms including proteins and secondary metabolites which can be used as biological control agents, such as *Allium sativum, Artemisia absinthium,* azadirachtin, Biokeeper WP, *Cassia nigricans*, *Celastrus angulatus, Chenopodium anthelminticum*, chitin, Armour-Zen, *Dryopteris filix-mas*, *Equisetum arvense,* Fortune Aza, Fungastop, Heads Up (*Chenopodium quinoa* saponin extract), *PyrethrumlPyrethrins*, *Quassia amara*, *Quercus, Quillaja,* Regalia, "Requiem ™ Insecticide", rotenone, *ryanialryanodine*, *Symphytum officinale, Tanacetum vulgare,* thymol, Triact 70, TriCon, *Tropaeulum majus, Urtica dioica,* Veratrin, *Viscum album*, *Brassicaceae* extract, in particular oilseed rape powder or mustard powder.

Examples of insecticides, acaricides and nematicides, respectively, which could be mixed with the compound combination of the invention are:

(1) Acetylcholinesterase (AChE) inhibitors, such as, for example, carbamates, for example alanycarb, aldicarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, triazamate, trimethacarb, XMC and xylylcarb; or organophosphates, for example acephate, azamethiphos, azinphos-ethyl, azinphos-methyl, cadusafos, chlorethoxyfos, chlorfenvinphos, chlormephos, chlorpyrifos-methyl, coumaphos, cyanophos, demeton-S-methyl, diazinon, dichlorvos/DDVP, dicrotophos, dimethoate, dimethylvinphos, disulfoton, EPN, ethion, ethoprophos, famphur, fenamiphos, fenitrothion, fenthion, fosthiazate, heptenophos, imicyafos, isofenphos, isopropyl O-(methoxyaminothiophosphoryl) salicylate, isoxathion, malathion, mecarbam, methamidophos, methidathion, mevinphos, monocrotophos, naled, omethoate, oxydemeton-methyl, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, triclorfon and vamidothion.

(2) GABA-gated chloride channel blockers, such as, for example, cyclodiene-organochlorines, for example chlordane

and endosulfan or phenylpyrazoles (fiproles), for example ethiprole and fipronil.

(3) Sodium channel modulators, such as, for example, pyrethroids, e.g. acrinathrin, allethrin, d-cis-trans allethrin, d-trans allethrin, bifenthrin, bioallethrin, bioallethrin s-cyclopentenyl isomer, bioresmethrin, cycloprothrin, cyfluthrin, beta-cyfluthrin, cyhalothrin, lambda-cyhalothrin, gamma-cyhalothrin, cypermethrin, alpha-cypermethrin, beta-cypermethrin, theta-cypermethrin, zeta-cypermethrin, cyphenothrin [(1R)-trans-isomer], deltamethrin, empenthrin [(EZ)-(1R)-isomer], esfenvalerate, etofenprox, fenpropathrin, fenvalerate, flucythrinate, flumethrin, tau-fluvalinate, halfenprox, imiprothrin, kadethrin, momfluorothrin, permethrin, phenothrin [(1R)-trans-isomer], prallethrin, pyrethrins (pyrethrum), resmethrin, silafluofen, tefluthrin, tetramethrin, tetramethrin [(1R)-isomer)], tralomethrin and transfluthrin or DDT or methoxychlor.

(4) Nicotinic acetylcholine receptor (nAChR) competitive modulators, such as, for example, neonicotinoids, e.g. acetamiprid, clothianidin, dinotefuran, imidacloprid, nitenpyram, thiacloprid and thiamethoxam or nicotine or sulfoxaflor or flupyradifurone.

(5) Nicotinic acetylcholine receptor (nAChR) allosteric modulators, such as, for example, spinosyns, e.g. spinetoram and spinosad.

(6) Glutamate-gated chloride channel (GluCl) allosteric modulators, such as, for example, avermectins/milbemycins, for example abamectin, emamectin benzoate, lepimectin and milbemectin.

(7) Juvenile hormone mimics, such as, for example, juvenile hormone analogues, e.g. hydroprene, kinoprene and methoprene or fenoxycarb or pyriproxyfen.

(8) Miscellaneous non-specific (multi-site) inhibitors, such as, for example, alkyl halides, e.g. methyl bromide and other alkyl halides; or chloropicrine or sulphuryl fluoride or borax or tartar emetic or methyl isocyanate generators, e.g. diazomet and metam.

(9) Modulators of Chordotonal Organs, such as, for example pymetrozine or flonicamid.

(10) Mite growth inhibitors, such as, for example clofentezine, hexythiazox and diflovidazin or etoxazole.

(11) Microbial disruptors of the insect gut membrane, such as, for example *Bacillus thuringiensis* subspecies *israelensis, Bacillus sphaericus, Bacillus thuringiensis* subspecies *aizawai*, *Bacillus thuringiensis* subspecies *kurstaki, Bacillus thuringiensis* subspecies *tenebrionis,* and *B.t.* plant proteins: Cry1Ab, Cry1Ac, Cry1Fa, Cry1A.105, Cry2Ab, Vip3A, mCry3A, Cry3Ab, Cry3Bb, Cry34Ab1/35Ab1.

(12) Inhibitors of mitochondrial ATP synthase, such as, ATP disruptors such as, for example, diafenthiuron or organotin compounds, for example azocyclotin, cyhexatin and fenbutatin oxide or propargite or tetradifon.

(13) Uncouplers of oxidative phosphorylation via disruption of the proton gradient, such as, for example, chlorfenapyr, DNOC and sulfluramid.

(14) Nicotinic acetylcholine receptor channel blockers, such as, for example, bensultap, cartap hydrochloride, thiocylam, and thiosultap-sodium.

(15) Inhibitors of chitin biosynthesis, type 0, such as, for example, bistrifluron, chlorfluazuron, diflubenzuron, flucycloxuron, flufenoxuron, hexaflumuron, lufenuron, novaluron, noviflumuron, teflubenzuron and triflumuron.

(16) Inhibitors of chitin biosynthesis, type 1, for example buprofezin.

(17) Moulting disruptor (in particular for Diptera, i.e. dipterans), such as, for example, cyromazine.

(18) Ecdysone receptor agonists, such as, for example, chromafenozide, halofenozide, methoxyfenozide and tebufenozide.

(19) Octopamine receptor agonists, such as, for example, amitraz.

(20) Mitochondrial complex III electron transport inhibitors, such as, for example, hydramethylnone or acequinocyl or fluacrypyrim.

(21) Mitochondrial complex I electron transport inhibitors, such as, for example from the group of the METI acaricides, e.g. fenazaquin, fenpyroximate, pyrimidifen, pyridaben, tebufenpyrad and tolfenpyrad or rotenone (Derris).

(22) Voltage-dependent sodium channel blockers, such as, for example indoxacarb or metaflumizone.

(23) Inhibitors of acetyl CoA carboxylase, such as, for example, tetronic and tetramic acid derivatives, e.g. spirodiclofen, spiromesifen and spirotetramat.

(24) Mitochondrial complex IV electron transport inhibitors, such as, for example, phosphines, e.g. aluminium phosphide, calcium phosphide, phosphine and zinc phosphide or cyanides, e.g. calcium cyanide, potassium cyanide and sodium cyanide.

(25) Mitochondrial complex II electron transport inhibitors, such as, for example, *beta*-ketonitrile derivatives, e.g. cyenopyrafen and cyflumetofen and carboxanilides, such as, for example, pyflubumide.

(28) Ryanodine receptor modulators, such as, for example, diamides, e.g. chlorantraniliprole, cyantraniliprole and flubendiamide,
further active compounds such as, for example, Afidopyropen, Afoxolaner, Azadirachtin, Benclothiaz, Benzoximate, Bifenazate, Broflanilide, Bromopropylate, Chinomethionat, Chloroprallethrin, Cryolite, Cyclaniliprole, Cycloxaprid, Cyhalodiamide, Dicloromezotiaz, Dicofol, epsilon-Metofluthrin, epsilon-Momfluthrin, Flometoquin, Fluazaindolizine, Fluensulfone, Flufenerim, Flufenoxystrobin, Flufiprole, Fluhexafon, Fluopyram, Fluralaner, Fluxametamide, Fufenozide, Guadipyr, Heptafluthrin, Imidaclothiz, Iprodione, kappa-Bifenthrin, kappa-Tefluthrin, Lotilaner, Meperfluthrin, Paichongding, Pyridalyl, Pyrifluquinazon, Pyriminostrobin, Spirobudiclofen, Tetramethylfluthrin, Tetraniliprole, Tetrachlorantraniliprole, Tigolaner, Tioxazafen, Thiofluoximate, Triflumezopyrim and iodomethane; furthermore preparations based on *Bacillus firmus* (1-1582, BioNeem, Votivo), and also the following compounds: 1-{2-fluoro-4-methyl-5-[(2,2,2-trifluoroethyl)sulphinyl]phenyl}-3-(trifluoromethyl)-1H-1,2,4-triazole-5-amine (known from WO2006/043635) (CAS 885026-50-6), {1'-[(2E)-3-(4-chlorophenyl)prop-2-en-1-yl]-5-fluorospiro[indol-3,4'-piperidin]-1(2H)-yl}(2-chloropyridin-4-yl)methanone (known from WO2003/106457) (CAS 637360-23-7), 2-chloro-N-[2-{1-[(2E)-3-(4-chlorophenyl)prop-2-en-1-yl]piperidin-4-yl}-4-(trifluoromethyl)phenyl]isonicotinamide (known from WO2006/003494) (CAS 872999-66-1), 3-(4-chloro-2,6-dimethylphenyl)-4-hydroxy-8-methoxy-1,8-diazaspiro[4.5]dec-3-en-2-one (known from WO 2010052161) (CAS 1225292-17-0), 3-(4-chloro-2,6-dimethylphenyl)-8-methoxy-2-oxo-1,8-diazaspiro[4.5]dec-3-en-4-yl ethyl carbonate (known from EP2647626) (CAS 1440516-42-6), 4-(but-2-yn-1-yloxy)-6-(3,5-dimethylpiperidin-1-yl)-5-fluoropyrimidine (known from WO2004/099160) (CAS 792914-58-0), PF1364 (known from JP2010/018586) (CAS 1204776-60-2), N-[(2E)-1-[(6-chloropyridin-3-yl)methyl]pyridin-2(1H)-ylidene]-2,2,2-trifluoroacetamide (known from WO2012/029672) (CAS 1363400-41-2), (3*E*)-3-[1-[(6-chloro-3-pyridyl)methyl]-2-pyridylidene]-1,1,1-trifluoro-propan-2-one (known from WO2013/144213) (CAS 1461743-15-6), , *N*-[3-(benzylcarbamoyl)-4-chlorophenyl]-1-methyl-3-(pentafluoroethyl)-4-(trifluoromethyl)-1*H*-pyrazole-5-carboxamide (known from WO2010/051926) (CAS 1226889-14-0), 5-bromo-4-chloro-*N*-[4-chloro-2-methyl-6-(methylcarbamoyl)phenyl]-2-(3-chloro-2-pyridyl)pyrazole-3-carboxamide (known from CN103232431) (CAS 1449220-44-3), 4-[5-(3,5-dichlorophenyl)-4,5-dihydro-5-(trifluoromethyl)-3-isoxazolyl]-2-methyl-*N*-(*cis*-1-oxido-3-thietanyl)-benzamide, 4-[5-(3,5-dichlorophenyl)-4,5-dihydro-5-(trifluoromethyl)-3-isoxazolyl]-2-methyl-*N*-(*trans*-1-oxido-3-thietanyl)-benzamide and 4-[(5*S*)-5-(3,5-dichlorophenyl)-4,5-dihydro-5-(trifluoromethyl)-3-isoxazolyl]-2-methyl-*N*-(*cis*-1-oxido-3-thietanyl)benzamide (known from WO 2013/050317 A1) (CAS 1332628-83-7), *N*-[3-chloro-1-(3-pyridinyl)-1*H*-pyrazol-4-yl]-*N*-ethyl-3-[(3, 3,3-trifluoropropyl)sulfinyl]-propanamide, (÷)-*N*-[3-chloro-1-(3-pyridinyl)-1*H*-pyrazol-4-yl]-*N*-ethyl-3-[(3,3,3-trifluoropropyl)sulfinyl]-propanamide and (-)-*N*-[3-chloro-1-(3-pyridinyl)-1*H*-pyrazol-4-yl]-*N*-ethyl-3-[(3,3,3-trifluoropropyl)sulfinyl]-propanamide (known from WO 2013/162715 A2, WO 2013/162716 A2, US 2014/0213448 A1) (CAS 1477923-37-7), 5-[[(2*E*)-3-chloro-2-propen-1-yl] amino]-1-[2,6-dichloro-4-(trifluoromethyl)phenyl]-4-[(trifluoromethyl)sulfinyl]-1*H*-pyrazole-3-carbonitrile (known from CN 101337937 A) (CAS 1105672-77-2), 3-bromo-*N*-[4-chloro-2-methyl-6-[(methylamino)thioxomethyl]phenyl]-1-(3-chloro-2-pyridinyl)-1*H*-pyrazole-5-carboxamide, (Liudaibenjiaxuanan, known from CN 103109816 A) (CAS 1232543-85-9); *N*-[4-chloro-2-[[(1,1-dimethylethyl)amino]carbonyl]-6-methylphenyl]-1-(3-chloro-2-pyridinyl)-3-(fluoromethoxy)-1*H*-Pyrazole-5-carboxamide (known from WO 2012/034403 A1) (CAS 1268277-22-0), *N*-[2-(5-amino-1,3,4-thiadiazol-2-yl)-4-chloro-6-methylphenyl]-3-bromo-1-(3-chloro-2-pyridinyl)-1*H*-pyrazole-5-carboxamide (known from WO 2011/085575 A1) (CAS 1233882-22-8), 4-[3-[2,6-dichloro-4-[(3,3-dichloro-2-propen-1-yl)oxy]phenoxy]propoxy]-2-methoxy-6-(trifluoromethyl)-pyrimidine (known from CN 101337940 A) (CAS

1108184-52-6); (2*E*)- and 2(*Z*)-2-[2-(4-cyanophenyl)-1-[3-(trifluoromethyl)phenyl]ethylidene]-*N*-[4-(difluoromethoxy)phenyl]-hydrazinecarboxamide (known from CN 101715774 A) (CAS 1232543-85-9); 3-(2,2-dichloroethenyl)-2,2-dimethyl-4-(1*H*-benzimidazol-2-yl)phenyl-cyclopropanecarboxylic acid ester (known from CN 103524422 A) (CAS 1542271-46-4); (4a*S*)-7-chloro-2,5-dihydro-2-[[(methoxycarbonyl) [4-[(trifluoromethyl)thio]phenyl]amino]carbonyl]-indeno[1,2-*e*][1,3,4]oxadiazine-4a(3*H*)-carboxylic acid methyl ester (known from CN 102391261 A) (CAS 1370358-69-2); 6-deoxy-3-*O*-ethyl-2,4-di-*O*-methyl-, 1-[*N*-[4-[1-[4-(1,1,2,2,2-pentafluoroethoxy)phenyl]-1*H*-1,2,4-triazol-3-yl]phenyl]carbamate]-α-L-mannopyranose (known from US 2014/0275503 A1) (CAS 1181213-14-8); 8-(2-cyclopropylmethoxy-4-trifluoromethyl-phenoxy)-3-(6-trifluoromethyl-pyridazin-3-yl)-3-aza-bicyclo[3.2.1]octane (CAS 1253850-56-4), (8-*anti*)-8-(2-cyclopropylmethoxy-4-trifluoromethyl-phenoxy)-3-(6-trifluoromethyl-pyridazin-3-yl)-3-aza-bicyclo[3.2.1]octane (CAS 933798-27-7), (8-*syn*)-8-(2-cyclopropylmethoxy-4-trifluoromethyl-phenoxy)-3-(6-trifluoromethyl-pyridazin-3-yl)-3-aza-bicyclo[3.2.1]octane (known from WO 2007040280 A1, WO 2007040282 A1) (CAS 934001-66-8), N-[3-chloro-1-(3-pyridinyl)-1H-pyrazol-4-yl]-N-ethyl-3-[(3,3,3-trifluoropropyl)thio]-propanamide (known from WO 2015/058021 A1, WO 2015/058028 A1) (CAS 1477919-27-9) and N-[4-(aminothioxomethyl)-2-methyl-6-[(methylamino)carbonyl]phenyl]-3-bromo-1-(3-chloro-2-pyridinyl)-1*H*-pyrazole-5-carboxamide (known from CN 103265527 A) (CAS 1452877-50-7), 5-(1,3-dioxan-2-yl)-4-[[4-(trifluoromethyl)phenyl] methoxy]-pyrimidine (known from WO 2013/115391 A1) (CAS 1449021-97-9), 3-(4-chloro-2,6-dimethylphenyl)-4-hydroxy-8-methoxy-1-methyl-1,8-diazaspiro[4.5]dec-3-en-2-one (known from WO 2010/066780 A1, WO 2011/151146 A1) (CAS 1229023-34-0), 3-(4-chloro-2,6-dimethylphenyl)-8-methoxy-1-methyl-1,8-diazaspiro[4.5]decane-2,4-dione (known from WO 2014/187846 A1) (CAS 1638765-58-8), 3-(4-chloro-2,6-dimethylphenyl)-8-methoxy-1-methyl-2-oxo-1,8-diazaspiro[4.5]dec-3-en-4-yl-carbonic acid ethyl ester (known from WO 2010/066780 A1, WO 2011151146 A1) (CAS 1229023-00-0), N-[1-[(6-chloro-3-pyridinyl)methyl]-2(1*H*)-pyridinylidene]-2,2,2-trifluoro-acetamide (known from DE 3639877 A1, WO 2012029672 A1) (CAS 1363400-41-2), [N(*E*)]-N-[1-[(6-chloro-3-pyridinyl)methyl] -2(1H)-pyridinylidene]-2,2,2-trifluoro-acetamide, (known from WO 2016005276 A1) (CAS 1689566-03-7), [N(*Z*)]-N-[1-[(6-chloro-3-pyridinyl)methyl]-2(1H)-pyridinylidene]-2,2,2-trifluoro-acetamide, (CAS 1702305-40-5), 3-*endo*-3-[2-propoxy-4-(trifluoromethyl)phenoxy]-9-[[5-(trifluoromethyl)-2-pyridinyl] oxy]-9-azabicyclo[3.3.1]nonane (known from WO 2011/105506 A1, WO 2016/133011 A1) (CAS 1332838-17-1).

Examples of safeners which could be mixed with the compound combination of the invention are, for example, benoxacor, cloquintocet (-mexyl), cyometrinil, cyprosulfamide, dichlormid, fenchlorazole (-ethyl), fenclorim, flurazole, fluxofenim, furilazole, isoxadifen (-ethyl), mefenpyr (-diethyl), naphthalic anhydride, oxabetrinil, 2-methoxy-N-({4-[(methylcarbamoyl)amino]phenyl}-sulphonyl)benzamide (CAS 129531-12-0), 4-(dichloroacetyl)-1-oxa-4-azaspiro[4.5]decane (CAS 71526-07-3), 2,2,5-trimethyl-3-(dichloroacetyl)-1,3-oxazolidine (CAS 52836-31-4).

Examples of herbicides which could be mixed with the compound combination of the invention are:

Acetochlor, acifluorfen, acifluorfen-sodium, aclonifen, alachlor, allidochlor, alloxydim, alloxydim-sodium, ametryn, amicarbazone, amidochlor, amidosulfuron, 4-amino-3-chloro-6-(4-chloro-2-fluoro-3-methylphenyl)-5-fluoropyridine-2-carboxylic acid, aminocyclopyrachlor, aminocyclopyrachlor-potassium, aminocyclopyrachlor-methyl, aminopyralid, amitrole, ammoniumsulfamate, anilofos, asulam, atrazine, azafenidin, azimsulfuron, beflubutamid, benazolin, benazolin-ethyl, benfluralin, benfuresate, bensulfuron, bensulfuron-methyl, bensulide, bentazone, benzobicyclon, benzofenap, bicyclopyron, bifenox, bilanafos, bilanafos-sodium, bispyribac, bispyribac-sodium, bromacil, bromobutide, bromofenoxim, bromoxynil, bromoxynil-butyrate, -potassium, -heptanoate, and - octanoate, busoxinone, butachlor, butafenacil, butamifos, butenachlor, butralin, butroxydim, butylate, cafenstrole, carbetamide, carfentrazone, carfentrazone-ethyl, chloramben, chlorbromuron, chlorfenac, chlorfenac-sodium, chlorfenprop, chlorflurenol, chlorflurenol-methyl, chloridazon, chlorimuron, chlorimuron-ethyl, chlorophthalim, chlorotoluron, chlorthal-dimethyl, chlorsulfuron, cinidon, cinidon-ethyl, cinmethylin, cinosulfuron, clacyfos, clethodim, clodinafop, clodinafop-propargyl, clomazone, clomeprop, clopyralid, cloransulam, cloransulam-methyl, cumyluron, cyanamide, cyanazine, cycloate, cyclopyrimorate, cyclosulfamuron, cycloxydim, cyhalofop, cyhalofop-butyl, cyprazine, 2,4-D, 2,4-D-butotyl, -butyl, -dimethylammonium, -diolamin, -ethyl, -2-ethylhexyl, -isobutyl, -isooctyl, -isopropylammonium, -potassium, -triisopropanolammonium, and -trolamine, 2,4-DB, 2,4-DB-butyl, -dimethylammonium, -isooctyl, -potassium, and -sodium, daimuron (dymron), dalapon, dazomet, n-decanol, desmedipham, detosyl-pyrazolate (DTP), dicamba, dichlobenil, 2-(2,4-dichlorobenzyl)-4,4-dimethyl-1,2-oxazolidin-3-one, 2-(2,5-dichlorobenzyl)-4,4-dimethyl-1,2-oxazolidin-3-one, dichlorprop, dichlorprop-P, diclofop, diclofop-methyl, diclofop-P-methyl, diclosulam, difenzoquat, diflufenican, diflufenzopyr, diflufenzopyr-sodium, dimefuron, dimepiperate, dimethachlor, dimethametryn, dimethenamid, dimethenamid-P, dimetrasulfuron, dinitramine, dinoterb, diphenamid, diquat, diquat-dibromid, dithiopyr, diuron, DNOC, endothal, EPTC, esprocarb, ethalfluralin, ethametsulfuron, ethametsulfuron-methyl, ethiozin, ethofumesate, ethoxyfen, ethoxyfen-ethyl, ethoxysulfuron, etobenzanid, F-9600, F-5231, i.e. N-{2-chloro-4-fluoro-5-[4-(3-fluoropropyl)-5-oxo-4,5-dihydro-1H-tetrazol-1-yl]phenyl}ethanesulfonamide, F-7967, i. e. 3-[7-chloro-5-fluoro-2-(trifluoromethyl)-1H-benzimidazol-4-yl]-1-methyl-6-(trifluoromethyl)pyrimidine-2,4(1H,3H)-dione, fenoxaprop, fenoxaprop-P, fenoxaprop-ethyl, fenoxaprop-P-ethyl, fenoxasulfone, fenquinotrione, fentrazamide, flamprop, flamprop-M-isopropyl, flamprop-M-methyl, flazasulfuron, florasulam, fluazifop, fluazifop-P, fluazifop-butyl, fluazifop-P-butyl, flucarbazone, flucarbazone-sodium, flucetosulfuron, fluchloralin, flufenacet, flufenpyr, flufenpyr-ethyl, flumetsulam, flumiclorac, flumiclorac-pentyl, flumioxazin, fluometuron, flurenol, flurenol-butyl, -dimethylammonium and -methyl, fluoroglycofen, fluoroglycofen-ethyl, flupropanate, flupyrsulfuron, flupyrsulfuron-methyl-sodium, fluridone, flurochloridone, fluroxypyr, fluroxypyr-meptyl, flurtamone, fluthiacet, fluthiacet-methyl, fomesafen, fomesafen-sodium, foramsulfuron, fosamine, glufosinate, glufosinate-ammonium, glufosinate-P-sodium, glufosinate-P-ammonium, glufosinate-P-sodium, glyphosate, glyphosate-ammonium, -isopropylammonium, -diammonium, -dimethylammonium, -potassium, -sodium, and -trimesium, H-9201, i.e. O-(2,4-dimethyl-6-nitrophenyl) O-ethyl isopropylphosphoramidothioate, halauxifen, halauxifen-methyl ,halosafen, halosulfuron, halosulfuron-methyl, haloxyfop, haloxyfop-P, haloxyfop-ethoxyethyl, haloxyfop-P-ethoxyethyl, haloxyfop-methyl, haloxyfop-P-methyl, hexazinone, HW-02, i.e. 1-(dimethoxyphosphoryl) ethyl-(2,4-dichlorophenoxy)acetate, imazamethabenz, imazamethabenz-methyl, imazamox, imazamox-ammonium, imazapic, imazapic-ammonium, imazapyr, imazapyr-isopropylammonium, imazaquin, imazaquin-ammonium, imazethapyr, imazethapyr-immonium, imazosulfuron, indanofan, indaziflam, iodosulfuron, iodosulfuron-methyl-sodium, ioxynil, ioxynil-octanoate, -potassium and -sodium, ipfencarbazone, isoproturon, isouron, isoxaben, isoxaflutole, karbutilate, KUH-043, i.e. 3-({[5-(difluoromethyl)-1-methyl-3-(trifluoromethyl)-1H-pyrazol-4-yl]methyl}sulfonyl)-5,5-dimethyl-4,5-dihydro-1,2-oxazole, ketospiradox, lactofen, lenacil, linuron, MCPA, MCPA-butotyl, -dimethylammonium, -2-ethylhexyl, -isopropylammonium, -potassium, and -sodium, MCPB, MCPB-methyl, -ethy,l and -sodium, mecoprop, mecoprop-sodium, and -butotyl, mecoprop-P, mecoprop-P-butotyl, -dimethylammonium, -2-ethylhexyl, and -potassium, mefenacet, mefluidide, mesosulfuron, mesosulfuron-methyl, mesotrione, methabenzthiazuron, metam, metamifop, metamitron, metazachlor, metazosulfuron, methabenzthiazuron, methiopyrsulfuron, methiozolin, methyl isothiocyanate, metobromuron, metolachlor, S-metolachlor, metosulam, metoxuron, metribuzin, metsulfuron, metsulfuron-methyl, molinat, monolinuron, monosulfuron, monosulfuron-ester, MT-5950, i.e. N-(3-chloro-4-isopropylphenyl)-2-methylpentan amide, NGGC-011, napropamide, NC-310, i.e. [5-(benzyloxy)-1-methyl-1H-pyrazol-4-yl](2,4-dichlorophenyl)methanone, neburon, nicosulfuron, nonanoic acid (pelargonic acid), norflurazon, oleic acid (fatty acids), orbencarb, orthosulfamuron, oryzalin, oxadiargyl, oxadiazon, oxasulfuron, oxaziclomefon, oxyfluorfen, paraquat, paraquat dichloride, pebulate, pendimethalin, penoxsulam, pentachlorphenol, pentoxazone, pethoxamid, petroleum oils, phenmedipham, picloram, picolinafen, pinoxaden, piperophos, pretilachlor, primisulfuron, primisulfuron-methyl, prodiamine, profoxydim, prometon, prometryn, propachlor, propanil, propaquizafop, propazine, propham, propisochlor, propoxycarbazone, propoxycarbazone-sodium, propyrisulfuron, propyzamide, prosulfocarb, prosulfuron, pyraclonil, pyraflufen, pyraflufen-ethyl, pyrasulfotole, pyrazolynate (pyrazolate), pyrazosulfuron, pyrazosulfuron-ethyl, pyrazoxyfen, pyribambenz, pyribambenz-isopropyl, pyribambenz-propyl, pyribenzoxim, pyributicarb, pyridafol, pyridate, pyriftalid, pyriminobac, pyriminobac-methyl, pyrimisulfan, pyrithiobac, pyrithiobac-sodium, pyroxasulfone, pyroxsulam, quinclorac, quinmerac, quinoclamine, quizalofop, quizalofop-ethyl, quizalofop-P, quizalofop-P-ethyl, quizalofop-P-tefuryl, rimsulfuron, saflufenacil, sethoxydim, siduron, simazine, simetryn, SL-261, sulcotrion, sulfentrazone, sulfometuron, sulfometuron-methyl, sulfosulfuron, SYN-523, SYP-249, i.e. 1-ethoxy-3-methyl-1-oxobut-3-en-2-yl 5-[2-chloro-4-(trifluoromethyl)phenoxy]-2-nitrobenzoate, SYP-300, i.e. 1-[7-fluoro-3-oxo-4-(prop-2-yn-1-yl)-3,4-dihydro-2H-1,4-benzoxazin-6-yl] -3-propyl-2-thioxoimidazolidine-4,5-dione, 2,3,6-TBA, TCA (trichloroacetic acid), TCA-sodium, tebuthiuron, tefuryltrione, tembotrione, tepraloxydim, terbacil, terbucarb, terbumeton, terbuthylazin, terbutryn, thenylchlor, thiazopyr, thiencarbazone, thiencarbazone-methyl, thifensulfuron, thifensulfuron-methyl, thiobencarb, tiafenacil, tolpyralate, topramezone, tralkoxydim, triafamone, tri-allate, triasulfuron, triaziflam, tribenuron, tribenuron-methyl, triclopyr, trietazine, trifloxysulfuron, trifloxysulfuron-sodium, trifludimoxazin, trifluralin, triflusulfuron, triflusulfuron-methyl, tritosulfuron, urea sulfate, vernolate, XDE-848, ZJ-0862, i.e. 3,4-dichloro-N-{2-[(4,6-dimethoxypyrimidin-2-yl)oxy]benzyl}aniline, and the following compounds:

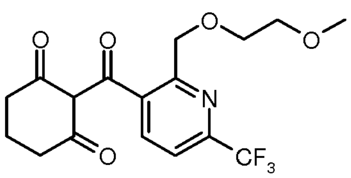
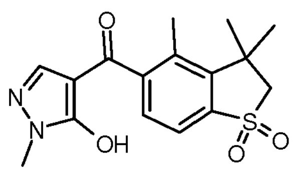
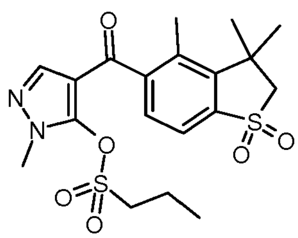

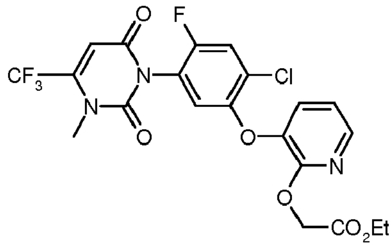

Examples for plant growth regulators are:
Acibenzolar, acibenzolar-S-methyl, 5-aminolevulinic acid, ancymidol, 6-benzylaminopurine, Brassinolid, catechine, chlormequat chloride, cloprop, cyclanilide, 3-(cycloprop-1-enyl) propionic acid, daminozide, dazomet, n-decanol, dikegulac, dikegulac-sodium, endothal, endothal-dipotassium, -disodium, and - mono(N,N-dimethylalkylammonium), ethephon, flumetralin, flurenol, flurenol-butyl, flurprimidol, forchlorfenuron, gibberellic acid, inabenfide, indol-3-acetic acid (IAA), 4-indol-3-ylbutyric acid, isoprothiolane, probenazole, jasmonic acid, maleic hydrazide, mepiquat chloride, 1-methylcyclopropene, methyl jasmonate, 2-(1-naphthyl)acetamide, 1-naphthylacetic acid, 2- naphthyloxyacetic acid, nitrophenolate-mixture, paclobutrazol, N-(2-phenylethyl)-beta-alanine, N-phenylphthalamic acid, prohexadione, prohexadione-calcium, prohydrojasmone, salicylic acid, strigolactone, tecnazene, thidiazuron, triacontanol, trinexapac, trinexapac-ethyl, tsitodef, uniconazole, uniconazole-P.

*Methods and uses*

The invention also relates to a method for controlling unwanted microorganisms, in particular phytopathogenic fungi, characterized in that a compound combination according to the invention or a composition comprising such combination is applied to the microorganisms and/or their habitat.

The invention further relates to seed which has been treated with a compound combination according to the invention or a composition comprising such combination.

The invention finally provides a method for protecting seed against unwanted microorganisms by treating seed with a compound combination according to the invention or a composition comprising such combination.

The compound combinations according to the invention and compositions comprising such combination have potent microbicidal activity and can be used for control of unwanted microorganisms, such as fungi and bacteria, in crop protection and in the protection of materials.

The compound combinations according to the invention and compositions comprising such combination have very good fungicidal properties and can be used in crop protection, for example for control of Plasmodiophoromycetes, Oomycetes, Chytridiomycetes, Zygomycetes, Ascomycetes, Basidiomycetes and Deuteromycetes.

Bactericides can be used in crop protection, for example, for control of Pseudomonadaceae, Rhizobiaceae, Enterobacteriaceae, Corynebacteriaceae and Streptomycetaceae.

The compound combinations according to the invention and compositions comprising such combination can be used for curative or protective control of phytopathogenic fungi. The invention therefore also relates to curative and protective methods for controlling phytopathogenic fungi by the use of the inventive combinations or compositions, which are applied to the seed, the plant or plant parts, the fruit or the soil in which the plants grow.

*Plants*

All plants and plant parts can be treated in accordance with the invention. Plants are understood here to mean all plants and plant populations, such as desired and undesired wild plants or crop plants (including naturally occurring crop plants). Crop plants may be plants which can be obtained by conventional breeding and optimization methods or by biotechnological and genetic engineering methods or combinations of these methods, including the transgenic plants and including the plant cultivars which are protectable and non-protectable by plant breeders' rights. Plant parts are understood to mean all parts and organs of plants above and below the ground, such as shoot, leaf, flower and root, examples of which include leaves, needles, stalks, stems, flowers, fruit bodies, fruits and seeds, and also roots, tubers and rhizomes. The plant parts also include harvested material and vegetative and generative propagation material, for example cuttings, tubers, rhizomes, slips and seeds.

Plants which can be treated in accordance with the invention include the following: cotton, flax, grapevine, fruit, vegetables, such as *Rosaceae sp.* (for example pome fruits such as apples and pears, but also stone fruits such as apricots, cherries, almonds and peaches, and soft fruits such as strawberries), *Ribesioidae sp.*, *Juglandaceae sp.*, *Betulaceae sp.*, *Anacardiaceae sp.*, *Fagaceae sp.*, *Moraceae sp.*, *Oleaceae sp.*, *Actinidaceae sp.*, *Lauraceae sp.*, *Musaceae sp.* (for example banana trees and plantations), *Rubiaceae sp.* (for example coffee), *Theaceae sp.*, *Stercu-*

*liceae sp*., *Rutaceae sp.* (for example lemons, oranges and grapefruit); *Solanaceae sp.* (for example tomatoes), *Liliaceae sp*., *Asteraceae sp.* (for example lettuce), *Umbelliferae sp*., *Cruciferae sp*., *Chenopodiaceae sp*., *Cucurbitaceae sp.* (for example cucumber), *Alliaceae sp.* (for example leek, onion), *Papilionaceae sp.* (for example peas); major crop plants, such as *Gramineae sp.* (for example maize, turf, cereals such as wheat, rye, rice, barley, oats, millet and triticale), *Asteraceae sp.* (for example sunflower), *Brassicaceae sp.* (for example white cabbage, red cabbage, broccoli, cauliflower, Brussels sprouts, pak choi, kohlrabi, radishes, and oilseed rape, mustard, horseradish and cress), *Fabacae sp.* (for example bean, peanuts), *Papilionaceae sp.* (for example soya bean), *Solanaceae sp.* (for example potatoes), *Chenopodiaceae sp.* (for example sugar beet, fodder beet, swiss chard, beetroot); useful plants and ornamental plants for gardens and wooded areas; and genetically modified varieties of each of these plants.

*Pathogens*

Non-limiting examples of pathogens of fungal diseases which can be treated in accordance with the invention include:

diseases caused by powdery mildew pathogens, for example Blumeria species, for example Blumeria graminis; Podosphaera species, for example Podosphaera leucotricha; Sphaerotheca species, for example Sphaerotheca fuliginea; Uncinula species, for example Uncinula necator;

diseases caused by rust disease pathogens, for example Gymnosporangium species, for example Gymnosporangium sabinae; Hemileia species, for example Hemileia vastatrix; Phakopsora species, for example Phakopsora pachyrhizi or Phakopsora meibomiae; Puccinia species, for example Puccinia recondita, Puccinia graminis oder Puccinia striiformis; Uromyces species, for example Uromyces appendiculatus;

diseases caused by pathogens from the group of the Oomycetes, for example Albugo species, for example Albugo candida; Bremia species, for example Bremia lactucae; Peronospora species, for example Peronospora pisi or P. brassicae; Phytophthora species, for example Phytophthora infestans; Plasmopara species, for example Plasmopara viticola; Pseudoperonospora species, for example Pseudoperonospora humuli or Pseudoperonospora cubensis; Pythium species, for example Pythium ultimum;

leaf blotch diseases and leaf wilt diseases caused, for example, by Alternaria species, for example Alternaria solani; Cercospora species, for example Cercospora beticola; Cladiosporium species, for example Cladiosporium cucumerinum; Cochliobolus species, for example Cochliobolus sativus (conidial form: Drechslera, syn: Helminthosporium) or Cochliobolus miyabeanus; Colletotrichum species, for example Colletotrichum lindemuthanium; Cycloconium species, for example Cycloconium oleaginum; Diaporthe species, for example Diaporthe citri; Elsinoe species, for example Elsinoe fawcettii; Gloeosporium species, for example Gloeosporium laeticolor; Glomerella species, for example Glomerella cingulata; Guignardia species, for example Guignardia bidwelli; Leptosphaeria species, for example Leptosphaeria maculans; Magnaporthe species, for example Magnaporthe grisea; Microdochium species, for example Microdochium nivale; Mycosphaerella species, for example Mycosphaerella graminicola, Mycosphaerella arachidicola or Mycosphaerella fijiensis; Phaeosphaeria species, for example Phaeosphaeria nodorum; Pyrenophora species, for example Pyrenophora teres or Pyrenophora tritici repentis; Ramularia species, for example Ramularia collo-cygni or Ramularia areola; Rhynchosporium species, for example Rhynchosporium secalis; Septoria species, for example Septoria apii or Septoria lycopersici; Stagonospora species, for example Stagonospora nodorum; Typhula species, for example Typhula incarnata; Venturia species, for example Venturia inaequalis;

root and stem diseases caused, for example, by Corticium species, for example Corticium graminearum; Fusarium species, for example Fusarium oxysporum; Gaeumannomyces species, for example Gaeumannomyces graminis; Plasmodiophora species, for example Plasmodiophora brassicae; Rhizoctonia species, for example Rhizoctonia solani; Sarocladium species, for example Sarocladium oryzae; Sclerotium species, for example Sclerotium oryzae; Tapesia species, for example Tapesia acuformis; Thielaviopsis species, for example Thielaviopsis basicola;

ear and panicle diseases (including corn cobs) caused, for example, by Alternaria species, for example Alternaria spp.; Aspergillus species, for example Aspergillus flavus; Cladosporium species, for example Cladosporium cladosporioides; Claviceps species, for example Claviceps purpurea; Fusarium species, for example Fusarium culmorum; Gibberella species, for example Gibberella zeae; Monographella species, for example Monographella nivalis; Stagnospora species, for example Stagnospora nodorum;

diseases caused by smut fungi, for example Sphacelotheca species, for example Sphacelotheca reiliana; Tilletia

species, for example Tilletia caries or Tilletia controversa; Urocystis species, for example Urocystis occulta; Ustilago species, for example Ustilago nuda;

fruit rot caused, for example, by Aspergillus species, for example Aspergillus flavus; Botrytis species, for example Botrytis cinerea; Penicillium species, for example Penicillium expansum or Penicillium purpurogenum; Rhizopus species, for example Rhizopus stolonifer; Sclerotinia species, for example Sclerotinia sclerotiorum; Verticilium species, for example Verticilium alboatrum;

seed- and soil-borne rot and wilt diseases, and also diseases of seedlings, caused, for example, by Alternaria species, for example Alternaria brassicicola; Aphanomyces species, for example Aphanomyces euteiches; Ascochyta species, for example Ascochyta lentis; Aspergillus species, for example Aspergillus flavus; Cladosporium species, for example Cladosporium herbarum; Cochliobolus species, for example Cochliobolus sativus (conidial form: Drechslera, Bipolaris Syn: Helminthosporium); Colletotrichum species, for example Colletotrichum coccodes; Fusarium species, for example Fusarium culmorum; Gibberella species, for example Gibberella zeae; Macrophomina species, for example Macrophomina phaseolina; Microdochium species, for example Microdochium nivale; Monographella species, for example Monographella nivalis; Penicillium species, for example Penicillium expansum; Phoma species, for example Phoma lingam; Phomopsis species, for example Phomopsis sojae; Phytophthora species, for example Phytophthora cactorum; Pyrenophora species, for example Pyrenophora graminea; Pyricularia species, for example Pyricularia oryzae; Pythium species, for example Pythium ultimum; Rhizoctonia species, for example Rhizoctonia solani; Rhizopus species, for example Rhizopus oryzae; Sclerotium species, for example Sclerotium rolfsii; Septoria species, for example Septoria nodorum; Typhula species, for example Typhula incarnata; Verticillium species, for example Verticillium dahliae;

cancers, galls and witches' broom caused, for example, by Nectria species, for example Nectria galligena;

wilt diseases caused, for example, by Monilinia species, for example Monilinia laxa;

deformations of leaves, flowers and fruits caused, for example, by Exobasidium species, for example Exobasidium vexans; Taphrina species, for example Taphrina deformans;

degenerative diseases in woody plants, caused, for example, by Esca species, for example Phaeomoniella chlamydospora, Phaeoacremonium aleophilum or Fomitiporia mediterranea; Ganoderma species, for example Ganoderma boninense;

diseases of flowers and seeds caused, for example, by Botrytis species, for example Botrytis cinerea;

diseases of plant tubers caused, for example, by Rhizoctonia species, for example Rhizoctonia solani; Helminthosporium species, for example Helminthosporium solani;

diseases caused by bacterial pathogens, for example Xanthomonas species, for example Xanthomonas campestris pv. oryzae; Pseudomonas species, for example Pseudomonas syringae pv. lachrymans; Erwinia species, for example Erwinia amylovora.

Preference is given to controlling the following diseases of soya beans:
Fungal diseases on leaves, stems, pods and seeds caused, for example, by Alternaria leaf spot (Alternaria spec. atrans tenuissima), Anthracnose (Colletotrichum gloeosporoides dematium var. truncatum), brown spot (Septoria glycines), cercospora leaf spot and blight (Cercospora kikuchii), choanephora leaf blight (Choanephora infundibulifera trispora (Syn.)), dactuliophora leaf spot (Dactuliophora glycines), downy mildew (Peronospora manshurica), drechslera blight (Drechslera glycini), frogeye leaf spot (Cercospora sojina), leptosphaerulina leaf spot (Leptosphaerulina trifolii), phyllostica leaf spot (Phyllosticta sojaecola), pod and stem blight (Phomopsis sojae), powdery mildew (Microsphaera diffusa), pyrenochaeta leaf spot (Pyrenochaeta glycines), rhizoctonia aerial, foliage, and web blight (Rhizoctonia solani), rust (Phakopsora pachyrhizi, Phakopsora meibomiae), scab (Sphaceloma glycines), stemphylium leaf blight (Stemphylium botryosum), target spot (Corynespora cassiicola).

Fungal diseases on roots and the stem base caused, for example, by black root rot (Calonectria crotalariae), charcoal rot (Macrophomina phaseolina), fusarium blight or wilt, root rot, and pod and collar rot (Fusarium oxysporum, Fusarium orthoceras, Fusarium semitectum, Fusarium equiseti), mycoleptodiscus root rot (Mycoleptodiscus terrestris), neocosmospora (Neocosmospora vasinfecta), pod and stem blight (Diaporthe phaseolorum), stem canker (Diaporthe phaseolorum var. caulivora), phytophthora rot (Phytophthora megasperma), brown stem rot (Phialophora gregata),

pythium rot (Pythium aphanidermatum, Pythium irregulare, Pythium debaryanum, Pythium myriotylum, Pythium ultimum), rhizoctonia root rot, stem decay, and damping-off (Rhizoctonia solani), sclerotinia stem decay (Sclerotinia sclerotiorum), sclerotinia southern blight (Sclerotinia rolfsii), thielaviopsis root rot (Thielaviopsis basicola).

Preference is further given to controlling leaf blotch diseases and leaf wilt diseases as well as root and stem diseases of fruits and vegetables.

*Plant Growth Regulation*

In some cases, the compound combinations according to the invention and composition comprising such combination can, at particular concentrations or application rates, also be used as growth regulators or agents to improve plant properties.

Plant growth regulators may exert various effects on plants. The effect of the substances depends essentially on the time of application in relation to the developmental stage of the plant, and also on the amounts of active ingredient applied to the plants or their environment and on the type of application. In each case, growth regulators should have a particular desired effect on the crop plants.

Growth regulating effects, comprise earlier germination, better emergence, more developed root system and/or improved root growth, increased ability of tillering, more productive tillers, earlier flowering, increased plant height and/or biomass, shorting of stems, improvements in shoot growth, number of kernels/ear, number of ears/$m^2$, number of stolons and/or number of flowers, enhanced harvest index, bigger leaves, less dead basal leaves, improved phyllotaxy, earlier maturation / earlier fruit finish, homogenous riping, increased duration of grain filling, better fruit finish, bigger fruit/vegetable size, sprouting resistance and reduced lodging.

Increased or improved yield is referring to total biomass per hectare, yield per hectare, kernel/fruit weight, seed size and/or hectolitre weight as well as to improved product quality, comprising:

improved processability relating to size distribution (for example of the kernel or fruit), homogenous riping, grain moisture, better milling, better vinification, better brewing, increased juice yield, harvestability, digestibility, sedimentation value, falling number, pod stability, storage stability, improved fiber length/strength/uniformity, increase of milk and/or meet quality of silage fed animals, adaption to cooking and frying;

further comprising improved marketability relating to improved fruit/grain quality, size distribution (for example of the kernel or fruit), increased storage / shelf-life, firmness / softness, taste (aroma, texture), grade (size, shape, number of berries), number of berries/fruits per bunch, crispness, freshness, coverage with wax, frequency of physiological disorders, colour;

further comprising increased desired ingredients such as e.g. protein content, fatty acids, oil content, oil quality, aminoacid composition, sugar content, acid content (pH), sugar/acid ratio (Brix), polyphenols, starch content, nutritional quality, gluten content/index, energy content, taste;

and further comprising decreased undesired ingredients such as e.g. less mycotoxines, less aflatoxines, geosmin level, phenolic aromas, lacchase, polyphenol oxidases and peroxidases, nitrate content.

Plant growth-regulating compounds can be used, for example, to slow down the vegetative growth of the plants. Such growth depression is of economic interest, for example, in the case of grasses, since it is thus possible to reduce the frequency of grass cutting in ornamental gardens, parks and sport facilities, on roadsides, at airports or in fruit crops. Also of significance is the inhibition of the growth of herbaceous and woody plants on roadsides and in the vicinity of pipelines or overhead cables, or quite generally in areas where vigorous plant growth is unwanted.

Also important is the use of growth regulators for inhibition of the longitudinal growth of cereal. This reduces or completely eliminates the risk of lodging of the plants prior to harvest. In addition, growth regulators in the case of cereals can strengthen the culm, which also counteracts lodging. The employment of growth regulators for shortening and strengthening culms allows the deployment of higher fertilizer volumes to increase the yield, without any risk of lodging of the cereal crop.

In many crop plants, vegetative growth depression allows denser planting, and it is thus possible to achieve higher yields based on the soil surface. Another advantage of the smaller plants obtained in this way is that the crop is easier to cultivate and harvest.

Reduction of the vegetative plant growth may also lead to increased or improved yields because the nutrients and assimilates are of more benefit to flower and fruit formation than to the vegetative parts of the plants.

Alternatively, growth regulators can also be used to promote vegetative growth. This is of great benefit when harvesting the vegetative plant parts. However, promoting vegetative growth may also promote generative growth in

that more assimilates are formed, resulting in more or larger fruits.

Furthermore, beneficial effects on growth or yield can be achieved through improved nutrient use efficiency, especially nitrogen (N)-use efficiency, phosphours (P)-use efficiency, water use efficiency, improved transpiration, respiration and/or $CO_2$ assimilation rate, better nodulation, improved Ca-metabolism.

Likewise, growth regulators can be used to alter the composition of the plants, which in turn may result in an improvement in quality of the harvested products. Under the influence of growth regulators, parthenocarpic fruits may be formed. In addition, it is possible to influence the sex of the flowers. It is also possible to produce sterile pollen, which is of great importance in the breeding and production of hybrid seed.

Use of growth regulators can control the branching of the plants. On the one hand, by breaking apical dominance, it is possible to promote the development of side shoots, which may be highly desirable particularly in the cultivation of ornamental plants, also in combination with an inhibition of growth. On the other hand, however, it is also possible to inhibit the growth of the side shoots. This effect is of particular interest, for example, in the cultivation of tobacco or in the cultivation of tomatoes.

Under the influence of growth regulators, the amount of leaves on the plants can be controlled such that defoliation of the plants is achieved at a desired time. Such defoliation plays a major role in the mechanical harvesting of cotton, but is also of interest for facilitating harvesting in other crops, for example in viticulture. Defoliation of the plants can also be undertaken to lower the transpiration of the plants before they are transplanted.

Furthermore, growth regulators can modulate plant senescence, which may result in prolonged green leaf area duration, a longer grain filling phase, improved yield quality.

Growth regulators can likewise be used to regulate fruit dehiscence. On the one hand, it is possible to prevent premature fruit dehiscence. On the other hand, it is also possible to promote fruit dehiscence or even flower abortion to achieve a desired mass ("thinning"). In addition it is possible to use growth regulators at the time of harvest to reduce the forces required to detach the fruits, in order to allow mechanical harvesting or to facilitate manual harvesting.

Growth regulators can also be used to achieve faster or else delayed ripening of the harvested material before or after harvest. This is particularly advantageous as it allows optimal adjustment to the requirements of the market. Moreover, growth regulators in some cases can improve the fruit colour. In addition, growth regulators can also be used to synchronize maturation within a certain period of time. This establishes the prerequisites for complete mechanical or manual harvesting in a single operation, for example in the case of tobacco, tomatoes or coffee.

By using growth regulators, it is additionally possible to influence the resting of seed or buds of the plants, such that plants such as pineapple or ornamental plants in nurseries, for example, germinate, sprout or flower at a time when they are normally not inclined to do so. In areas where there is a risk of frost, it may be desirable to delay budding or germination of seeds with the aid of growth regulators, in order to avoid damage resulting from late frosts.

Finally, growth regulators can induce resistance of the plants to frost, drought or high salinity of the soil. This allows the cultivation of plants in regions which are normally unsuitable for this purpose.

*Resistance Induction IPlant Health and other effects*

The compound combinations according to the invention and compositions comprising such combination may also exhibit a potent strengthening effect in plants. Accordingly, they can be used for mobilizing the defences of the plant against attack by undesirable microorganisms.

Plant-strengthening (resistance-inducing) substances in the present context are substances capable of stimulating the defence system of plants in such a way that the treated plants, when subsequently inoculated with undesirable microorganisms, develop a high degree of resistance to these microorganisms.

Further, in context with the present invention plant physiology effects comprise the following:

Abiotic stress tolerance, comprising tolerance to high or low temperatures, drought tolerance and recovery after drought stress, water use efficiency (correlating to reduced water consumption), flood tolerance, ozone stress and UV tolerance, tolerance towards chemicals like heavy metals, salts, pesticides.

Biotic stress tolerance, comprising increased fungal resistance and increased resistance against nematodes, viruses and bacteria. In context with the present invention, biotic stress tolerance preferably comprises increased fungal resistance and increased resistance against nematodes.

Increased plant vigor, comprising plant health / plant quality and seed vigor, reduced stand failure, improved appearance, increased recovery after periods of stress, improved pigmentation (e.g. chlorophyll content, stay-green effects) and improved photosynthetic efficiency.

*Mycotoxins*

In addition, the compound combinations according to the invention and compositions comprising such combination can reduce the mycotoxin content in the harvested material and the foods and feeds prepared therefrom. Mycotoxins include particularly, but not exclusively, the following: deoxynivalenol (DON), nivalenol, 15-Ac-DON, 3-Ac-DON, T2- and HT2-toxin, fumonisins, zearalenon, moniliformin, fusarin, diaceotoxyscirpenol (DAS), beauvericin, enniatin, fusaroproliferin, fusarenol, ochratoxins, patulin, ergot alkaloids and aflatoxins which can be produced, for example, by the following fungi: *Fusarium* spec., such as *F. acuminatum, F. asiaticum, F. avenaceum, F. crookwellense, F. culmorum, F. graminearum* (*Gibberella zeae*), *F. equiseti*, *F. fujikoroi*, *F. musarum*, *F. oxysporum, F. proliferatum, F. poae, F. pseudograminearum*, *F. sambucinum, F. scirpi, F. semitectum, F. solani, F. sporotrichoides, F. langsethiae, F. subglutinans, F. tricinctum, F. verticillioides,* and also by *Aspergillus* spec., such as *A. flavus, A. parasiticus, A. nomius, A. ochraceus, A. clavatus, A. terreus, A. versicolor, Penicillium* spec., such as *P. verrucosum, P. viridicatum, P. citrinum, P. expansum, P. claviforme, P. roqueforti, Claviceps* spec., such as *C. purpurea, C. fusiformis, C. paspali, C. africana, Stachybotrys* spec. and others.

*Material Protection*

The compound combinations according to the invention and compositions comprising such combination can also be used in the protection of industrial materials, for protection of industrial materials against attack and destruction by phytopathogenic fungi.

In addition, the compound combinations according to the invention and compositions comprising such combination can be used as antifouling compositions, alone or in combinations with other active ingredients.

Industrial materials in the present context are understood to mean inanimate materials which have been prepared for use in industry. For example, industrial materials which are to be protected by inventive compositions from microbial alteration or destruction may be adhesives, glues, paper, wallpaper and board/cardboard, textiles, carpets, leather, wood, fibers and tissues, paints and plastic articles, cooling lubricants and other materials which can be infected with or destroyed by microorganisms. Parts of production plants and buildings, for example cooling-water circuits, cooling and heating systems and ventilation and air-conditioning units, which may be impaired by the proliferation of microorganisms may also be mentioned within the scope of the materials to be protected. Industrial materials within the scope of the present invention preferably include adhesives, sizes, paper and card, leather, wood, paints, cooling lubricants and heat transfer fluids, more preferably wood.

The compound combinations according to the invention and compositions comprising such combination may prevent adverse effects, such as rotting, decay, discoloration, decoloration or formation of mould.

In the case of treatment of wood the compound combinations according to the invention and compositions comprising such combination may also be used against fungal diseases liable to grow on or inside timber. The term "timber" means all types of species of wood, and all types of working of this wood intended for construction, for example solid wood, high-density wood, laminated wood, and plywood. The method for treating timber according to the invention mainly consists in contacting a composition according to the invention; this includes for example direct application, spraying, dipping, injection or any other suitable means.

In addition, the compound combinations according to the invention and compositions comprising such combination can be used to protect objects which come into contact with saltwater or brackish water, especially hulls, screens, nets, buildings, moorings and signalling systems, from fouling.

The compound combinations according to the invention and compositions comprising such combination can also be employed for protecting storage goods. Storage goods are understood to mean natural substances of vegetable or animal origin or processed products thereof which are of natural origin, and for which long-term protection is desired. Storage goods of vegetable origin, for example plants or plant parts, such as stems, leaves, tubers, seeds, fruits, grains, can be protected freshly harvested or after processing by (pre)drying, moistening, comminuting, grinding, pressing or roasting. Storage goods also include timber, both unprocessed, such as construction timber, electricity poles and barriers, or in the form of finished products, such as furniture. Storage goods of animal origin are, for example, hides, leather, furs and hairs. The inventive compositions may prevent adverse effects, such as rotting, decay, discoloration, decoloration or formation of mould.

Microorganisms capable of degrading or altering the industrial materials include, for example, bacteria, fungi, yeasts, algae and slime organisms. The compounds of the formula (I) preferably act against fungi, especially moulds, wood-discoloring and wood-destroying fungi (*Ascomycetes, Basidiomycetes, Deuteromycetes* and *Zygomycetes*), and against slime organisms and algae. Examples include microorganisms of the following genera: *Alternaria,* such as *Alternaria tenuis*; *Aspergillus*, such as *Aspergillus niger*; *Chaetomium*, such as *Chaetomium globosum*; *Coniophora*, such as *Coniophora puetana*; *Lentinus*, such as *Lentinus tigrinus*; *Penicillium*, such as *Penicillium glaucum*; *Polyporus*, such as *Polyporus versicolor*; *Aureobasidium*, such as *Aureobasidium pullulans*; *Sclerophoma*, such as *Sclerophoma pityophila*; *Trichoderma,* such as *Trichoderma viride*; *Ophiostoma spp*., *Ceratocystis spp*., *Humicola spp*., *Petriella spp*., *Trichurus spp*., *Coriolus spp*., *Gloeophyllum spp*., *Pleurotus spp*., *Poria spp*., *Serpula spp*. and *Tyromyces spp*., *Cladosporium spp*., *Paecilomyces spp. Mucor spp*., *Escherichia,* such as *Escherichia coli*; *Pseudomonas*, such as *Pseudomonas aeruginosa*; *Staphylococcus*, such as *Staphylococcus aureus, Candida spp.* and *Saccharomyces spp*.,

such as *Saccharomyces cerevisae.*

*Seed Treatment*

The invention furthermore includes a method for treating seed.

A further aspect of the present invention relates in particular to seeds (dormant, primed, pregerminated or even with emerged roots and leaves) treated with a compound combination according to the invention or a composition comprising such combination. The inventive seeds are used in methods for protection of seeds and emerged plants from the seeds from phytopathogenic harmful fungi. In these methods, seed treated with the compound combination of the invention or a composition thereof is used.

The compound combinations according to the invention and compositions comprising such combination are also suitable for the treatment of seeds and young seedlings. A large part of the damage to crop plants caused by harmful organisms is triggered by the infection of the seeds before sowing or after germination of the plant. This phase is particularly critical since the roots and shoots of the growing plant are particularly sensitive, and even small damage may result in the death of the plant. Accordingly, there is great interest in protecting the seed and the germinating plant by using appropriate compositions.

It is also desirable to optimize the amount of the active ingredient used so as to provide the best possible protection for the seeds, the germinating plants and emerged seedlings from attack by phytopathogenic fungi, but without damaging the plants themselves by the active ingredient used. In particular, methods for the treatment of seed should also take into consideration the intrinsic phenotypes of transgenic plants in order to achieve optimum protection of the seed and the germinating plant with a minimum of crop protection compositions being employed.

The present invention therefore also relates to a method for protecting seeds, germinating plants and emerged seedlings against attack by animal pests and/or phytopathogenic harmful microorganisms by treating the seeds with an inventive combination or composition. The invention also relates to the use of the combinations or compositions according to the invention for treating seeds for protecting the seeds, the germinating plants and emerged seedlings against animal pests and/or phytopathogenic microorganisms. The invention further relates to seeds which have been treated with an inventive combination or composition for protection from animal pests and/or phytopathogenic microorganisms.

One of the advantages of the present invention is that the treatment of the seeds with these compositions not only protects the seed itself, but also the resulting plants after emergence, from animal pests and/or phytopathogenic harmful microorganisms. In this way, the immediate treatment of the crop at the time of sowing or shortly thereafter protect plants as well as seed treatment in prior to sowing. It is likewise considered to be advantageous that the inventive active ingredients combination or composition can be used especially also for transgenic seed, in which case the plant which grows from this seed is capable of expressing a protein which acts against pests, herbicidal damage or abiotic stress. The treatment of such seeds with the inventive active ingredients or compositions, for example an insecticidal protein, can result in control of certain pests.

The compound combinations according to the invention and compositions comprising such combination are suitable for protection of seed of any plant variety which is used in agriculture, in the greenhouse, in forests or in horticulture. More particularly, the seed is that of cereals (such as wheat, barley, rye, millet and oats), oilseed rape, maize, cotton, soybeen, rice, potatoes, sunflower, beans, coffee, beet (e.g. sugar beet and fodder beet), peanut, vegetables (such as tomato, cucumber, onions and lettuce), lawns and ornamental plants. Of particular significance is the treatment of the seed of wheat, soybean, oilseed rape, maize and rice.

As also described below, the treatment of transgenic seed with the inventive compound combinations or compositions is of particular significance. This refers to the seed of plants containing at least one heterologous gene which allows the expression of a polypeptide or protein, e.g. having insecticidal properties. These heterologous genes in transgenic seeds may originate, for example, from microorganisms of the species Bacillus, Rhizobium, Pseudomonas, Serratia, Trichoderma, Clavibacter, Glomus or Gliocladium. These heterologous genes preferably originate from Bacillus sp., in which case the gene product is effective against the European corn borer and/or the Western corn rootworm. Particularly preferably, the heterologous genes originate from Bacillus thuringiensis.

In the context of the present invention, the inventive combination or composition is applied to seeds either alone or in a suitable formulation. Preferably, the seed is treated in a state in which it is sufficiently stable for no damage to occur in the course of treatment. In general, seeds can be treated at any time between harvest and some time after sowing. It is customary to use seed which has been separated from the plant and freed from cobs, shells, stalks, coats, hairs or the flesh of the fruits. For example, it is possible to use seed which has been harvested, cleaned and dried down to a moisture content of less than 15% by weight. Alternatively, it is also possible to use seed which, after drying, for example, has been treated with water and then dried again, or seeds just after priming, or seeds stored in primed conditions or pre-germinated seeds, or seeds sown on nursery trays, tapes or paper.

When treating the seeds, it generally has to be ensured that the amount of the inventive combination or composition applied to the seed and/or the amount of further additives is selected such that the germination of the seed is

not impaired, or that the resulting plant is not damaged. This must be ensured particularly in the case of active ingredients which can exhibit phytotoxic effects at certain application rates.

The compound combinations according to the invention and compositions comprising such combination can be applied directly, i.e. without containing any other components and without having been diluted. In general, it is preferable to apply the compositions to the seed in the form of a suitable formulation. Suitable formulations and methods for seed treatment are known to those skilled in the art. The compound combinations according to the invention can be converted to the customary formulations relevant to on-seed applications, such as solutions, emulsions, suspensions, powders, foams, slurries or combined with other coating compositions for seed, such as film forming materials, pelleting materials, fine iron or other metal powders, granules, coating material for inactivated seeds, and also ULV formulations.

These formulations are prepared in a known manner, by mixing the active ingredients or active ingredient combinations with customary additives, for example customary extenders and solvents or diluents, dyes, wetting agents, dispersants, emulsifiers, antifoams, preservatives, secondary thickeners, adhesives, gibberellins, and also water.

Useful dyes which may be present in the seed dressing formulations usable in accordance with the invention are all dyes which are customary for such purposes. It is possible to use either pigments, which are sparingly soluble in water, or dyes, which are soluble in water. Examples include the dyes known by the names Rhodamine B, C.I. Pigment Red 112 and C.I. Solvent Red 1.

Useful wetting agents which may be present in the seed dressing formulations usable in accordance with the invention are all substances which promote wetting and which are conventionally used for the formulation of active agrochemical ingredients. Usable with preference are alkylnaphthalenesulphonates, such as diisopropyl- or diisobutylnaphthalenesulphonates.

Useful dispersants and/or emulsifiers which may be present in the seed dressing formulations usable in accordance with the invention are all nonionic, anionic and cationic dispersants conventionally used for the formulation of active agrochemical ingredients. Usable with preference are nonionic or anionic dispersants or mixtures of nonionic or anionic dispersants. Useful nonionic dispersants include especially ethylene oxide/propylene oxide block polymers, alkylphenol polyglycol ethers and tristryrylphenol polyglycol ether, and the phosphated or sulphated derivatives thereof. Suitable anionic dispersants are especially lignosulphonates, polyacrylic acid salts and arylsulphonate/formaldehyde condensates.

Antifoams which may be present in the seed dressing formulations usable in accordance with the invention are all foam-inhibiting substances conventionally used for the formulation of active agrochemical ingredients. Silicone antifoams and magnesium stearate can be used with preference.

Preservatives which may be present in the seed dressing formulations usable in accordance with the invention are all substances usable for such purposes in agrochemical compositions. Examples include dichlorophene and benzyl alcohol hemiformal.

Secondary thickeners which may be present in the seed dressing formulations usable in accordance with the invention are all substances usable for such purposes in agrochemical compositions. Preferred examples include cellulose derivatives, acrylic acid derivatives, xanthan, modified clays and finely divided silica.

Adhesives which may be present in the seed dressing formulations usable in accordance with the invention are all customary binders usable in seed dressing products. Preferred examples include polyvinylpyrrolidone, polyvinyl acetate, polyvinyl alcohol and tylose.

The formulations for on-seed applications usable in accordance with the invention can be used to treat a wide variety of different kinds of seed either directly or after prior dilution with water. For instance, the concentrates or the preparations obtainable therefrom by dilution with water can be used to dress the seed of cereals, such as wheat, barley, rye, oats, and triticale, and also seeds of maize, soybean, rice, oilseed rape, peas, beans, cotton, sunflowers, and beets, or else a wide variety of different vegetable seeds. The formulations usable in accordance with the invention, or the dilute preparations thereof, can also be used for seeds of transgenic plants. In this case, additional synergistic effects may also occur in interaction with the substances formed by expression.

For treatment of seeds with the formulations usable in accordance with the invention, or the preparations prepared therefrom by adding water, all mixing units usable customarily for on-seed applications are useful. Specifically, the procedure in on-seed applications is to place the seeds into a mixer, to add the particular desired amount of the formulations, either as such or after prior dilution with water, and to mix everything until all applied formulations are distributed homogeneously on the seeds. If appropriate, this is followed by a drying operation.

The application rate of the formulations usable in accordance with the invention can be varied within a relatively wide range. It is guided by the particular content of the active ingredients in the formulations and by the seeds. The application rate of each single active ingredient is generally between 0.001 and 15 g per kilogram of seed, preferably between 0.01 and 5 g per kilogram of seed.

*GMO*

As already mentioned above, it is possible to treat all plants and their parts in accordance with the invention. In a preferred embodiment, wild plant species and plant cultivars, or those obtained by conventional biological breeding methods, such as crossing or protoplast fusion, and also parts thereof, are treated. In a further preferred embodiment, transgenic plants and plant cultivars obtained by genetic engineering methods, if appropriate in combination with conventional methods (Genetically Modified Organisms), and parts thereof are treated. The terms "parts" or "parts of plants" or "plant parts" have been explained above. More preferably, plants of the plant cultivars which are commercially available or are in use are treated in accordance with the invention. Plant cultivars are understood to mean plants which have new properties ("traits") and have been obtained by conventional breeding, by mutagenesis or by recombinant DNA techniques. They can be cultivars, varieties, bio- or genotypes.

The method of treatment according to the invention can be used in the treatment of genetically modified organisms (GMOs), e.g. plants or seeds. Genetically modified plants (or transgenic plants) are plants of which a heterologous gene has been stably integrated into genome. The expression "heterologous gene" essentially means a gene which is provided or assembled outside the plant and when introduced in the nuclear, chloroplastic or mitochondrial genome gives the transformed plant new or improved agronomic or other properties by expressing a protein or polypeptide of interest or by downregulating or silencing other gene(s) which are present in the plant (using for example, antisense technology, cosuppression technology, RNA interference - RNAi - technology or microRNA - miRNA - technology). A heterologous gene that is located in the genome is also called a transgene. A transgene that is defined by its particular location in the plant genome is called a transformation or transgenic event.

Plants and plant cultivars which are preferably to be treated according to the invention include all plants which have genetic material which impart particularly advantageous, useful traits to these plants (whether obtained by breeding and/or biotechnological means).

Plants and plant cultivars which are also preferably to be treated according to the invention are resistant against one or more biotic stresses, i.e. said plants show a better defense against animal and microbial pests, such as against nematodes, insects, mites, phytopathogenic fungi, bacteria, viruses and/or viroids.

Plants and plant cultivars which may also be treated according to the invention are those plants which are resistant to one or more abiotic stresses. Abiotic stress conditions may include, for example, drought, cold temperature exposure, heat exposure, osmotic stress, flooding, increased soil salinity, increased mineral exposure, ozone exposure, high light exposure, limited availability of nitrogen nutrients, limited availability of phosphorus nutrients, shade avoidance.

Plants and plant cultivars which may also be treated according to the invention, are those plants characterized by enhanced yield characteristics. Increased yield in said plants can be the result of, for example, improved plant physiology, growth and development, such as water use efficiency, water retention efficiency, improved nitrogen use, enhanced carbon assimilation, improved photosynthesis, increased germination efficiency and accelerated maturation. Yield can furthermore be affected by improved plant architecture (under stress and non-stress conditions), including but not limited to, early flowering, flowering control for hybrid seed production, seedling vigor, plant size, internode number and distance, root growth, seed size, fruit size, pod size, pod or ear number, seed number per pod or ear, seed mass, enhanced seed filling, reduced seed dispersal, reduced pod dehiscence and lodging resistance. Further yield traits include seed composition, such as carbohydrate content and composition for example cotton or starch, protein content, oil content and composition, nutritional value, reduction in anti-nutritional compounds, improved processability and better storage stability.

Plants that may be treated according to the invention are hybrid plants that already express the characteristic of heterosis or hybrid vigor which results in generally higher yield, vigor, health and resistance towards biotic and abiotic stresses).

Plants or plant cultivars (obtained by plant biotechnology methods such as genetic engineering) which may be treated according to the invention are herbicide-tolerant plants, i.e. plants made tolerant to one or more given herbicides. Such plants can be obtained either by genetic transformation, or by selection of plants containing a mutation imparting such herbicide tolerance.

Plants or plant cultivars (obtained by plant biotechnology methods such as genetic engineering) which may also be treated according to the invention are insect-resistant transgenic plants, i.e. plants made resistant to attack by certain target insects. Such plants can be obtained by genetic transformation, or by selection of plants containing a mutation imparting such insect resistance.

Plants or plant cultivars (obtained by plant biotechnology methods such as genetic engineering) which may also be treated according to the invention are tolerant to abiotic stresses. Such plants can be obtained by genetic transformation, or by selection of plants containing a mutation imparting such stress resistance.

Plants or plant cultivars (obtained by plant biotechnology methods such as genetic engineering) which may also be treated according to the invention show altered quantity, quality and/or storage-stability of the harvested product and/or altered properties of specific ingredients of the harvested product.

Plants or plant cultivars (that can be obtained by plant biotechnology methods such as genetic engineering) which may also be treated according to the invention are plants, such as cotton plants, with altered fiber characteristics. Such plants can be obtained by genetic transformation, or by selection of plants contain a mutation imparting such altered fiber characteristics.

Plants or plant cultivars (that can be obtained by plant biotechnology methods such as genetic engineering) which may also be treated according to the invention are plants, such as oilseed rape or related Brassica plants, with altered oil profile characteristics. Such plants can be obtained by genetic transformation, or by selection of plants contain a mutation imparting such altered oil profile characteristics.

Plants or plant cultivars (that can be obtained by plant biotechnology methods such as genetic engineering) which may also be treated according to the invention are plants, such as oilseed rape or related Brassica plants, with altered seed shattering characteristics. Such plants can be obtained by genetic transformation, or by selection of plants contain a mutation imparting such altered seed shattering characteristics and include plants such as oilseed rape plants with delayed or reduced seed shattering.

Plants or plant cultivars (that can be obtained by plant biotechnology methods such as genetic engineering) which may also be treated according to the invention are plants, such as Tobacco plants, with altered post-translational protein modification patterns.

*Application*

When using the compound combinations according to the invention and compositions comprising such combination as fungicides, the application rates can be varied within a relatively wide range, depending on the kind of application. The application rate is
in the case of treatment of plant parts, for example leaves: from 0.1 to 10 000 g/ha, preferably from 10 to 1000 g/ha, more preferably from 50 to 300 g/ha (in the case of application by watering or dripping, it is even possible to reduce the application rate, especially when inert substrates such as rockwool or perlite are used);
in the case of seed treatment: from 0.1 to 200 g per 100 kg of seed, preferably from 1 to 150 g per 100 kg of seed, more preferably from 2.5 to 25 g per 100 kg of seed, even more preferably from 2.5 to 12.5 g per 100 kg of seed;
in the case of soil treatment: from 0.1 to 10 000 g/ha, preferably from 1 to 5000 g/ha,
wherein the given amounts refer to the total amount of active ingredient in the respective combination or composition.

These application rates are merely by way of example and are not limiting for the purposes of the invention.

The invention is illustrated by the examples below. However, the invention is not limited to the examples.

## Examples

The advanced fungicidal activity of the active compound combinations according to the invention is evident from the examples below. While the individual active compounds exhibit weaknesses with regard to the fungicidal activity, the combinations have an activity which exceeds a simple addition of activities.

A synergistic effect of fungicides is always present when the fungicidal activity of the active compound combinations exceeds the total of the activities of the active compounds when applied individually. The expected activity for a given combination of two active compounds can be calculated as follows (cf. Colby, S.R., "Calculating Synergistic and Antagonistic Responses of Herbicide Combinations", Weeds 1967, 15, 20-22):
If

X is the efficacy when active compound A is applied at an application rate of m ppm (or g/ha),

Y is the efficacy when active compound B is applied at an application rate of n ppm (or g/ha), and

E is the efficacy when the active compounds A and B are applied at application rates of m and n ppm (or g/ha), respectively,

then

$$E = X + Y - \frac{X \cdot Y}{100}$$

For ternary mixtures the following Colby equation results:
If

X is the efficacy when active compound A is applied at an application rate of m ppm (or g/ha),

Y is the efficacy when active compound B is applied at an application rate of n ppm (or g/ha),

Z is the efficacy when active compound C is applied at an application rate of o ppm (or g/ha), and

E is the efficacy when the active compounds A, B and C are applied at application rates of m, n and o ppm (or g/ha), respectively,

then

$$E = X + Y + Z - \frac{X \cdot Y}{100} - \frac{X \cdot Z}{100} - \frac{Y \cdot Z}{100} + \frac{X \cdot Y \cdot Z}{100 \cdot 100}$$

The degree of efficacy, expressed in % is denoted. 0 % means an efficacy which corresponds to that of the control while an efficacy of 100 % means that no disease is observed.

If the actual fungicidal activity exceeds the calculated value, then the activity of the combination is superadditive, i.e. a synergistic effect exists. In this case, the efficacy which was actually observed must be greater than the value for the expected efficacy (E) calculated from the abovementioned formula.

A further way of demonstrating a synergistic effect is the method of Tammes (cf. "Isoboles, a graphic representation of synergism in pesticides" in Neth. J. Plant Path., 1964, 70, 73-80).

**Example** A: *in* ***vitro-Test*** **with fungal microorganisms**

Wells of 96-well microtiter plates are filled with 10μl of a preparation of test compound or compound combination in methanol + emulsifier alkylaryl-polyglycol-ether. Thereafter, the solvent is evaporated in a hood. At the next step, into each well 100μl of liquid potato dextrose medium is given, that has been amended with an appropriate concentration of spores or mycelium suspension of the test fungus.

With the aid of a photometer the extinction in all wells is measured at the wavelength of 620nm.

The microtiter plates are incubated at 20°C and 85% relative humidity. The inhibition of growth is determined again photometrically 3-5 days after the application. Efficacy is calculated in relation to the untreated control, 0% efficacy means fungal growth as high as in untreated control while 100% efficacy means no fungal growth is measured.

## Claims

**1.** Active compound combination comprising

(A) as compound (A) 2-[6-(4-bromophenoxy)-2-(trifluoromethyl)-3-pyridyl]-1-(1,2,4-triazol-1-yl)propan-2-ol,
(B) as compound (B) at least one compound selected from the group of inhibitors of the respiratory chain at complex I or II,
and
(C) as compound (C) at least one compound selected from the group of inhibitors of the respiratory chain at complex III consisting of (3.001) ametoctradin, (3.002) amisulbrom, (3.003) azoxystrobin, (3.004) coumethoxystrobin, (3.005) coumoxystrobin, (3.006) cyazofamid, (3.007) dimoxystrobin, (3.008) enoxastrobin, (3.009) famoxadone, (3.010) fenamidone, (3.011) flufenoxystrobin, (3.012) fluoxastrobin, (3.013) kresoxim-methyl, (3.014) metominostrobin, (3.015) orysastrobin, (3.016) picoxystrobin, (3.017) pyraclostrobin, (3.018) pyrametostrobin, (3.019) pyraoxystrobin, (3.020) trifloxystrobin, (3.021) (2E)-2-{2-[({[(1E)-1-(3-{[(E)-1-fluoro-2-phenylvinyl]oxy}phenyl)ethylidene]amino}oxy)methyl]-phenyl}-2-(methoxyimino)-N-methylacetamide, (3.022) (2E,3Z)-5-{[1-(4-chlorophenyl)-1H-pyrazol-3-yl]oxy}-2-(methoxyimino)-N,3-dimethylpent-3-enamide, (3.023) (2R)-2-{2-[(2,5-dimethylphenoxy)methyl]phenyl} -2-methoxy-N-methylacetamide, (3.024) (2S)-2-{2-[(2,5-dimethylphenoxy)methyl]phenyl}-2-methoxy-N-methylacetamide, (3.025) fenpicoxamid, (3.026) mandestrobin, (3.027) N-(3-ethyl-3,5,5-trimethylcyclohexyl)-3-formamido-2-hydroxybenzamide, (3.028) (2E,3Z)-5-{[1-(4-chloro-2-fluorophenyl)-1H-pyrazol-3-yl]oxy}-2-(methoxyimino)-N,3-dimethylpent-3-enamide, (3.029) methyl {5-[3-(2,4-dimethylphenyl)-1H-pyrazol-1-yl]-2-methylbenzyl}carbamate and (3.030) metyltetraprole.

**2.** Active compound combination according to claim 1, wherein compound (B) is selected from the group consisting

of (2.001) benzovindiflupyr, (2.002) bixafen, (2.003) boscalid, (2.004) carboxin, (2.005) fluopyram, (2.006) flutolanil, (2.007) fluxapyroxad, (2.008) furametpyr, (2.009) isofetamid, (2.010) isopyrazam (anti-epimeric enantiomer 1R,4S,9S), (2.011) isopyrazam (anti-epimeric enantiomer 1S,4R,9R), (2.012) isopyrazam (anti-epimeric racemate 1RS,4SR,9SR), (2.013) isopyrazam (mixture of syn-epimeric racemate 1RS,4SR,9RS and anti-epimeric racemate 1RS,4SR,9SR), (2.014) isopyrazam (syn-epimeric enantiomer 1R,4S,9R), (2.015) isopyrazam (syn-epimeric enantiomer 1S,4R,9S), (2.016) isopyrazam (syn-epimeric racemate 1RS,4SR,9RS), (2.017) penflufen, (2.018) penthiopyrad, (2.019) pydiflumetofen, (2.020) Pyraziflumid, (2.021) sedaxane, (2.022) 1,3-dimethyl-N-(1,1,3-trimethyl-2,3-dihydro-1H-inden-4-yl)-1H-pyrazole-4-carboxamide, (2.023) 1,3-dimethyl-N-[(3R)-1,1,3-trimethyl-2,3-dihydro-1H-inden-4-yl]-1H-pyrazole-4-carboxamide, (2.024) 1,3-dimethyl-N-[(3S)-1,1,3-trimethyl-2,3-dihydro-1H-inden-4-yl]-1H-pyrazole-4-carboxamide, (2.025) 1-methyl-3-(trifluoromethyl)-N-[2'-(trifluoromethyl)biphenyl-2-yl]-1H-pyrazole-4-carboxamide, (2.026) 2-fluoro-6-(trifluoromethyl)-N-(1,1,3-trimethyl-2,3-dihydro-1H-inden-4-yl)benzamide, (2.027) inpyrfluxam, (2.028) 3-(difluoromethyl)-1-methyl-N-[(3R)-1,1,3-trimethyl-2,3-dihydro-1H-inden-4-yl]-1H-pyrazole-4-carboxamide, (2.029) 3-(difluoromethyl)-1-methyl-N-[(3S)-1,1,3-trimethyl-2,3-dihydro-1H-inden-4-yl]-1H-pyrazole-4-carboxamide, (2.030) fluindapyr, (2.031) 3-(difluoromethyl)-N-[(3R)-7-fluoro-1,1,3-trimethyl-2,3-dihydro-1H-inden-4-yl]-1-methyl-1H-pyrazole-4-carboxamide, (2.032) 3-(difluoromethyl)-N-[(3S)-7-fluoro-1,1,3-trimethyl-2,3-dihydro-1H-inden-4-yl]-1-methyl-1H-pyrazole-4-carboxamide, (2.033) 5,8-difluoro-N-[2-(2-fluoro-4-{[4-(trifluoromethyl)pyridin-2-yl]oxy}phenyl)ethyl]quinazolin-4-amine, (2.034) N-(2-cyclopentyl-5-fluorobenzyl)-N-cyclopropyl-3-(difluoromethyl)-5-fluoro-1-methyl-1H-pyrazole-4-carboxamide, (2.035) N-(2-tert-butyl-5-methylbenzyl)-N-cyclopropyl-3-(difluoromethyl)-5-fluoro-1-methyl-1H-pyrazole-4-carboxamide, (2.036) N-(2-tert-butylbenzyl)-N-cyclopropyl-3-(difluoromethyl)-5-fluoro-1-methyl-1H-pyrazole-4-carboxamide, (2.037) N-(5-chloro-2-ethylbenzyl)-N-cyclopropyl-3-(difluoromethyl)-5-fluoro-1-methyl-1H-pyrazole-4-carboxamide, (2.038) isoflucypram, (2.039) N-[(1R,4S)-9-(dichloromethylene)-1,2,3,4-tetrahydro-1,4-methanonaphthalen-5-yl] -3-(difluoromethyl)-1-methyl-1H-pyrazole-4-carboxamide, (2.040) N-[(1S,4R)-9-(dichloromethylene)-1,2,3,4-tetrahydro-1,4-methanonaphthalen-5-yl]-3-(difluoromethyl)-1-methyl-1H-pyrazole-4-carboxamide, (2.041) N-[1-(2,4-dichlorophenyl)-1-methoxypropan-2-yl]-3-(difluoromethyl)-1-methyl-1H-pyrazole-4-carboxamide, (2.042) N-[2-chloro-6-(trifluoromethyl)benzyl]-N-cyclopropyl-3-(difluoromethyl)-5-fluoro-1-methyl-1H-pyrazole-4-carboxamide, (2.043) N-[3-chloro-2-fluoro-6-(trifluoromethyl)benzyl]-N-cyclopropyl-3-(difluoromethyl)-5-fluoro-1-methyl-1H-pyrazole-4-carboxamide, (2.044) N-[5-chloro-2-(trifluoromethyl)benzyl] -N-cyclopropyl-3-(difluoromethyl)-5-fluoro-1-methyl-1H-pyrazole-4-carboxamide, (2.045) N-cyclopropyl-3-(difluoromethyl)-5-fluoro-1-methyl-N-[5-methyl-2-(trifluoromethyl)benzyl]-1H-pyrazole-4-carboxamide, (2.046) N-cyclopropyl-3-(difluoromethyl)-5-fluoro-N-(2-fluoro-6-isopropylbenzyl)-1-methyl-1H-pyrazole-4-carboxamide, (2.047) N-cyclopropyl-3-(difluoromethyl)-5-fluoro-N-(2-isopropyl-5-methylbenzyl)-1-methyl-1H-pyrazole-4-carboxamide, (2.048) N-cyclopropyl-3-(difluoromethyl)-5-fluoro-N-(2-isopropylbenzyl)-1-methyl-1H-pyrazole-4-carbothioamide, (2.049) N-cyclopropyl-3-(difluoromethyl)-5-fluoro-N-(2-isopropylbenzyl)-1-methyl-1H-pyrazole-4-carboxamide, (2.050) N-cyclopropyl-3-(difluoromethyl)-5-fluoro-N-(5-fluoro-2-isopropylbenzyl)-1-methyl-1H-pyrazole-4-carboxamide, (2.051) N-cyclopropyl-3-(difluoromethyl)-N-(2-ethyl-4,5-dimethylbenzyl)-5-fluoro-1-methyl-1H-pyrazole-4-carboxamide, (2.052) N-cyclopropyl-3-(difluoromethyl)-N-(2-ethyl-5-fluorobenzyl)-5-fluoro-1-methyl-1H-pyrazole-4-carboxamide, (2.053) N-cyclopropyl-3-(difluoromethyl)-N-(2-ethyl-5-methylbenzyl)-5-fluoro-1-methyl-1H-pyrazole-4-carboxamide, (2.054) N-cyclopropyl-N-(2-cyclopropyl-5-fluorobenzyl)-3-(difluoromethyl)-5-fluoro-1-methyl-1H-pyrazole-4-carboxamide, (2.055) N-cyclopropyl-N-(2-cyclopropyl-5-methylbenzyl)-3-(difluoromethyl)-5-fluoro-1-methyl-1H-pyrazole-4-carboxamide, (2.056) N-cyclopropyl-N-(2-cyclopropylbenzyl)-3-(difluoromethyl)-5-fluoro-1-methyl-1H-pyrazole-4-carboxamide and (2.057) pyrapropoyne.

**3.** Active compound combination according to claim 1, wherein compound (B) is selected from (2.002) bixafen, (2.005) fluopyram, (2.017) penflufen, (2.019) pydiflumetofen, (2.027) inpyrfluxam and (2.038) isoflucypram.

**4.** Active compound combination according to at least one of claims 1 to 3, wherein compound (C) is selected from (3.012) fluoxastrobin, (3.020) trifloxystrobin and (3.025) fenpicoxamid.

**5.** Active compound combination according to claim 1, wherein the compound combination is selected from group (T1-B) consisting of the following mixtures: (I) + (2.002) + (3.012), (I) + (2.002) + (3.020), (I) + (2.002) + (3.025), (I) + (2.005) + (3.012), (I) + (2.005) + (3.020), (I) + (2.005) + (3.025), (I) + (2.017) + (3.012), (I) + (2.017) + (3.020), (I) + (2.017) + (3.025), (I) + (2.027) + (3.012), (I) + (2.027) + (3.020), (I) + (2.027) + (3.025), (I) + (2.038) + (3.012), (I) + (2.038) + (3.020), (I) + (2.038) + (3.025).

**6.** Active compound combination according to at least one of claims 1 to 5, wherein the weight ratio of compound (A) to compound(s) (B) is from 100:1 to 1:100.

**7.** Active compound combination according to at least one of claims 1 to 6, wherein the weight ratio of compound (A)

to compound(s) (C) is from 100:1 to 1:100.

**8.** Active compound combination according to at least one of claims 1 to 7, wherein exactly 1 compound (B) is present.

**9.** Active compound combination according to at least one of claims 1 to 8, wherein exactly 1 compound (C) is present.

**10.** Composition for controlling harmful microorganisms in crop protection and in the protection of materials, **characterized by** a content of an active compound combination according to at least one of claims 1 to 9, in addition to at least one carrier and/or surfactant.

**11.** Method for controlling harmful microorganisms in crop protection and in the protection of materials, **characterized in that** an active compound combination according to at least one of claims 1 to 9 or a composition according to claim 10 is applied to the harmful microorganisms and/or their habitat.

**12.** Use of an active compound combination according to at least one of claims 1 to 9 or a composition according to claim 10 for control of harmful microorganisms in crop protection and in the protection of materials.

**13.** Use of an active compound combination according to at least one of claims 1 to 9 or a composition according to claim 10 for treatment of a transgenic plant.

**14.** Use of an active compound combination according to at least one of claims 1 to 9 or a composition according to claim 10 for treatment of seed.

**15.** Seed coated with an active compound combination according to at least one of claims 1 to 9 or a composition according to claim 10.

Europäisches Patentamt
European Patent Office
Office européen des brevets

# EUROPEAN SEARCH REPORT

Application Number
EP 19 15 0737

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2018/145921 A1 (BAYER AG [DE]; BAYER CROPSCIENCE AG [DE]) 16 August 2018 (2018-08-16) * compositions I.59 + 2.005;I.59 + 2.017; I.59 + 2.038; I.59 + 2.027; I.59 + 2.002; I.59 + 3.025; I.59 + 3.020; claims; examples; tables * ----- | 1-15 | INV. A01N37/50 A01N43/40 A01N43/56 A01N43/653 A01N43/88 A01P3/00 A01P21/00 A01N25/00 |
| A | WO 2017/072166 A1 (BAYER CROPSCIENCE AG [DE]) 4 May 2017 (2017-05-04) * claims; examples * ----- | 1-15 | |
| | | | TECHNICAL FIELDS SEARCHED (IPC) |
| | | | A01N |

The present search report has been drawn up for all claims

2

| Place of search | Date of completion of the search | Examiner |
|---|---|---|
| Munich | 6 May 2019 | Butkowskyj-Walkiw, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 15 0737

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2019

| Patent document cited in search report | Publication date | Patent family member(s) | Publication date |
|---|---|---|---|
| WO 2018145921 A1 | 16-08-2018 | UY 37605 A | 28-09-2018 |
| | | WO 2018145921 A1 | 16-08-2018 |
| WO 2017072166 A1 | 04-05-2017 | BR 112018008575 A2 | 30-10-2018 |
| | | CN 108347948 A | 31-07-2018 |
| | | EA 201891044 A1 | 30-11-2018 |
| | | EP 3367800 A1 | 05-09-2018 |
| | | UY 36964 A | 31-05-2017 |
| | | WO 2017072166 A1 | 04-05-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017029179 A
- WO 2018145921 A
- WO 200364572 A
- US 6060051 A
- US 7094592 B
- WO 2016154297 A
- US 6245551 B
- EP 718408 A
- TW 4764
- TW 5454
- TW 5096
- TW 5277
- EP 701275 A
- IT 2008000196 W
- WO 2006043635 A
- WO 2003106457 A
- WO 2006003494 A
- WO 2010052161 A
- EP 2647626 A
- WO 2004099160 A
- JP 2010018586 A
- WO 2012029672 A
- WO 2013144213 A
- WO 2010051926 A
- CN 103232431
- WO 2013050317 A1
- WO 2013162715 A2
- WO 2013162716 A2
- US 20140213448 A1
- CN 101337937 A
- CN 103109816 A
- WO 2012034403 A1
- WO 2011085575 A1
- CN 101337940 A
- CN 101715774 A
- CN 103524422 A
- CN 102391261 A
- US 20140275503 A1
- WO 2007040280 A1
- WO 2007040282 A1
- WO 2015058021 A1
- WO 2015058028 A1
- CN 103265527 A
- WO 2013115391 A1
- WO 2010066780 A1
- WO 2011151146 A1
- WO 2014187846 A1
- DE 3639877 A1
- WO 2012029672 A1
- WO 2016005276 A1
- WO 2011105506 A1
- WO 2016133011 A1


### Non-patent literature cited in the description


- *J. Med. Chem.,* 1995, vol. 38 (11), 1892-1903
- *J. Heterocyc. Chem.,* 1981, vol. 18 (7), 1305-1308
- *J. Am. Chem. Soc.,* 2001, vol. 123 (25), 5962-5973
- **ONGENA, M. et al.** Bacillus Lipopeptides: Versatile Weapons for Plant Disease Biocontrol. *Trends in Microbiology,* March 2008, vol. 16 (3), 115-125
- *CHEMICAL ABSTRACTS,* 885026-50-6
- *CHEMICAL ABSTRACTS,* 637360-23-7
- *CHEMICAL ABSTRACTS,* 872999-66-1
- *CHEMICAL ABSTRACTS,* 1225292-17-0
- *CHEMICAL ABSTRACTS,* 1440516-42-6
- *CHEMICAL ABSTRACTS,* 792914-58-0
- *CHEMICAL ABSTRACTS,* 1204776-60-2
- *CHEMICAL ABSTRACTS,* 1363400-41-2
- *CHEMICAL ABSTRACTS,* 1461743-15-6
- *CHEMICAL ABSTRACTS,* 1226889-14-0
- *CHEMICAL ABSTRACTS,* 1449220-44-3
- *CHEMICAL ABSTRACTS,* 1332628-83-7
- *CHEMICAL ABSTRACTS,* 1477923-37-7
- *CHEMICAL ABSTRACTS,* 1105672-77-2
- *CHEMICAL ABSTRACTS,* 1232543-85-9
- *CHEMICAL ABSTRACTS,* 1268277-22-0
- *CHEMICAL ABSTRACTS,* 1233882-22-8
- *CHEMICAL ABSTRACTS,* 1108184-52-6
- *CHEMICAL ABSTRACTS,* 1542271-46-4
- *CHEMICAL ABSTRACTS,* 1370358-69-2
- *CHEMICAL ABSTRACTS,* 1181213-14-8
- *CHEMICAL ABSTRACTS,* 1253850-56-4
- *CHEMICAL ABSTRACTS,* 933798-27-7
- *CHEMICAL ABSTRACTS,* 934001-66-8
- *CHEMICAL ABSTRACTS,* 1477919-27-9
- *CHEMICAL ABSTRACTS,* 1452877-50-7
- *CHEMICAL ABSTRACTS,* 1449021-97-9
- *CHEMICAL ABSTRACTS,* 1229023-34-0
- *CHEMICAL ABSTRACTS,* 1638765-58-8

- *CHEMICAL ABSTRACTS,* 1229023-00-0
- *CHEMICAL ABSTRACTS,* 1689566-03-7
- *CHEMICAL ABSTRACTS,* 1702305-40-5
- *CHEMICAL ABSTRACTS,* 1332838-17-1
- *CHEMICAL ABSTRACTS,* 129531-12-0
- *CHEMICAL ABSTRACTS,* 71526-07-3
- *CHEMICAL ABSTRACTS,* 52836-31-4
- **COLBY, S.R.** Calculating Synergistic and Antagonistic Responses of Herbicide Combinations. *Weeds,* 1967, vol. 15, 20-22
- Isoboles, a graphic representation of synergism in pesticides. *Neth. J. Plant Path.,* 1964, vol. 70, 73-80